# EUROPEAN PATENT APPLICATION

(11) **EP 4 656 261 A1**
(43) Date of publication of application: **03.12.2025**
(21) Application number: 23954721.9
(22) Date of filing: 03.10.2023
(51) Int. Cl.: A63F 13/213, A63F 13/92, A63F 13/98, G06F 3/0354

(54) **PERIPHERAL EQUIPMENT AND SYSTEM**

(71) Applicant: Nintendo Co., Ltd., Kyoto-shi, Kyoto 601-8501 (JP)
(72) Inventor: KORIYAMA, Kazuhiko, Kyoto-shi, Kyoto 601-8501 (JP); EBIHARA, Kazuki, Kyoto-shi, Kyoto 601-8501 (JP); MIYATAKE, Junichiro, Kyoto-shi, Kyoto 601-8501 (JP)
(74) Representative: Bardehle Pagenberg Partnerschaft mbB Patentanwälte Rechtsanwälte
(86) International application number: PCT/JP2023/036083
(87) International publication number: WO 2025/074509

(57) **Abstract**

A peripheral device to which an input device is removably attachable includes an attachment portion and a contact portion. The input device includes an input portion provided at a front surface, a projection that projects from a side surface and is removably attachable to a game device attachment portion provided at a game device, and a mouse operation sensor configured to output a signal relating to movement of the input device relative to a tracking surface based on light reflected from the tracking surface through a first opening provided in a top surface of the projection. The projection is configured to be attached to the attachment portion to expose at least a part of the first opening. At least a part of the contact portion is configured to come in contact with the tracking surface at an outer side of the top surface in a plane direction of the tracking surface when the contact portion is placed on the tracking surface such that the exposed first opening in the input device attached to the peripheral device is opposed to the tracking surface.

## Description

### TECHNICAL FIELD

The present disclosure relates to a peripheral device and a system.

### BACKGROUND ART

Japanese Patent Laying-Open No. 2018-57650 (PTL 1) discloses a peripheral device configured to be attached to an input device.

### CITATION LIST

### PATENT LITERATURE

PTL 1: Japanese Patent Laying-Open No. 2018-57650

### SUMMARY OF INVENTION

### TECHNICAL PROBLEM

An object of the present disclosure is to provide a novel peripheral device configured to be attached to an input device.

### SOLUTION TO PROBLEM

A peripheral device according to the present disclosure is a peripheral device to which an input device is removably attachable, the peripheral device including an attachment portion and a contact portion. The input device includes an input portion provided at a front surface, a projection that projects from a side surface and is removably attachable to a game device attachment portion provided at a game device, and a mouse operation sensor configured to output a signal relating to movement of the input device relative to a tracking surface based on light reflected from the tracking surface through a first opening provided in a top surface of the projection. The projection is configured to be attached to the attachment portion to expose at least a part of the first opening. At least a part of the contact portion is configured to come in contact with the tracking surface at an outer side of the top surface in a plane direction of the tracking surface when the contact portion is placed on the tracking surface such that the exposed first opening in the input device attached to the peripheral device is opposed to the tracking surface.

According to the peripheral device according to the above, the attachment portion may be provided with a hole with which the projection is to be matched.

According to the peripheral device according to the above, the attachment portion may be provided with a recess with which the projection is to be matched. A recess bottom surface of the recess may be provided with a hole opposed to the first opening.

According to the peripheral device according to the above, the projection may include a magnetic button configured to be attracted by magnetic force. The attachment portion may include a magnet located at a bottom of the recess, to which the magnetic button is configured to be attracted.

According to the peripheral device according to the above, the input device may include a pusher that projects from the top surface of the projection in accordance with an operation by a user. The recess bottom surface may include a pusher contact portion with which the pusher is configured to come in contact.

According to the peripheral device according to the above, the recess may have such a size as not exposing the entirety of the top surface of the projection therethrough even when the pusher projects.

According to the peripheral device according to the above, the top surface may include a top surface first area highest in height from the side surface and a top surface second area lower than the top surface first area. The recess bottom surface may include a bottom surface first area opposed to the top surface first area and a bottom surface second area opposed to the top surface second area and shallower than the bottom surface first area.

According to the peripheral device according to the above, the attachment portion may be provided with a lower surface opposed to the tracking surface and an upper surface opposite to the lower surface. The lower surface may be longer in length than the upper surface.

The peripheral device according to the above may include a support portion including the contact portion at one surface and a wall that projects from a surface of the support portion opposite to the one surface to cover at least a part of an outer peripheral surface of the projection.

According to the peripheral device according to the above, an outer peripheral surface of the projection may be provided with a first engagement hole located at one longitudinal end surface of the projection and a second engagement hole located at the other longitudinal end surface of the projection. The first engagement hole may be different in shape from the second engagement hole. The attachment portion may include a tab configured to be engaged with at least one of the first engagement hole and the second engagement hole.

According to the peripheral device according to the above, the attachment portion may include an immovable first tab configured to be engaged with at least the first engagement hole and a movable second tab configured to be engaged with at least the second engagement hole.

According to the peripheral device according to the above, the first tab may be engaged with the first engagement hole but does not have to be engaged with the second engagement hole. The second tab may be engaged with the second engagement hole but does not have to be engaged with the first engagement hole. The peripheral device may include a strap attachment portion at a side opposite to the second tab with respect to the first tab.

The peripheral device according to the above may include a peripheral device main body portion. The peripheral device main body portion may be provided with an internal space in which the second tab is movable and a second opening that communicates with the internal space. The second opening may be closed by a mouse skate member that forms at least a part of the contact portion.

According to the peripheral device according to the above, the second tab may be movable. The second tab may include a tab portion configured to be engaged with the second engagement hole and a second tab end portion located opposite to the tab portion. The peripheral device may be provided with a third opening through which the second tab end portion is exposed.

According to the peripheral device according to the above, the top surface of the projection may be provided with at least one button. The attachment portion may be configured such that the projection is attached thereto to expose the at least one button.

According to the peripheral device according to the above, the at least one button may include a first button and a second button aligned in a longitudinal direction of the projection. The peripheral device may be provided with a notch at a position in a front-rear direction of each of the first button and the second button while the input device is attached to the peripheral device.

According to the peripheral device according to the above, the contact portion may include a portion configured to come in contact with the tracking surface at the outer side of the side surface in the plane direction.

According to the peripheral device according to the above, the contact portion of the peripheral device may have an area larger than an area of a portion of contact of the top surface of the projection with the tracking surface while the input device is not attached to the peripheral device.

According to the peripheral device according to the above, the mouse operation sensor may output a signal that reflects movement relative to the tracking surface when a distance between the mouse operation sensor and the tracking surface is within a range from a first distance to a second distance longer than the first distance. The mouse operation sensor may be located at the input device such that a first separation distance between the mouse operation sensor and the tracking surface while the input device is placed such that the first opening is opposed to the tracking surface is intermediate between a median value between the first distance and the second distance and the first distance. The mouse operation sensor may be configured such that a second separation distance between the mouse operation sensor and the tracking surface while the input device is attached to the peripheral device is equal to or shorter than the second distance.

According to the peripheral device according to the above, the top surface of the projection may be provided with an input device mouse skate member. While the input device is attached to the peripheral device, an end of the contact portion may be located at the outer side of an end of the input device mouse skate member in a longitudinal direction of the top surface of the projection.

According to the peripheral device according to the above, in a direction of a short side of the top surface of the projection, the end of the contact portion may be located at the outer side of the end of the input device mouse skate member.

According to the peripheral device according to the above, while the input device is attached to the peripheral device, the contact portion comes in contact with the tracking surface but the input device mouse skate member does not have to come in contact with the tracking surface.

A system according to the present disclosure includes the peripheral device according to the above and the input device configured to be attached to the peripheral device with the attachment portion.

### BRIEF DESCRIPTION OF DRAWINGS

Fig. 1 is a schematic perspective view showing a configuration of a peripheral device according to a first embodiment.
Fig. 2 is a schematic perspective view showing the configuration when the peripheral device according to the first embodiment is viewed from a direction different from the direction in Fig. 1.
Fig. 3 is a schematic front view showing a configuration of an exemplary game device.
Fig. 4 is a schematic front view showing a state in which each of a first input device and a second input device is removed from a main body apparatus.
Fig. 5 is an exemplary state in which an information processing apparatus is operated as being held.
Fig. 6 is an exemplary state in which a controller is operated as being horizontally held.
Fig. 7 is an exemplary state in which the controller is operated as being vertically held.
Fig. 8 is a schematic perspective assembly diagram showing a configuration of a right side surface of the main body apparatus.
Fig. 9 is a schematic perspective exploded view showing the configuration of the right side surface of the main body apparatus.
Fig. 10 is a schematic six-view drawing showing a configuration of the first input device.
Fig. 11 is a schematic perspective view showing the configuration of the first input device.
Fig. 12 is a schematic perspective exploded view including a projection.
Fig. 13 is a partial schematic cross-sectional view along the line XIII-XIII in Fig. 11.
Fig. 14 is a schematic cross-sectional view showing a state in which an upper-surface button (right) is attracted to a first game-device-side magnetic element.
Fig. 15 is a schematic diagram when a top surface direction is viewed from the inside of the projection and a schematic plan view showing a configuration of a first elastically deformable body.
Fig. 16 is a schematic cross-sectional view showing a state in which an input device is attached to the main body apparatus.
Fig. 17 is a schematic rear view showing a configuration of a first manner of the input device.
Fig. 18 is a schematic cross-sectional view along the line XVIII-XVIII in Fig. 17.
Fig. 19 is a schematic cross-sectional view showing a state in which an operation portion is operated.
Fig. 20 is a schematic cross-sectional view showing only the projection along the line XX-XX in Fig. 11.
Fig. 21 is a schematic front view showing a configuration of the input device.
Fig. 22 is an enlarged schematic diagram of an area XXII in Fig. 21.
Fig. 23 is a six-view schematic diagram showing a configuration of the peripheral device according to the first embodiment.
Fig. 24 is an exploded schematic perspective view showing the configuration of the peripheral device according to the first embodiment.
Fig. 25 is a schematic cross-sectional view along the line XXV-XXV in Fig. 23.
Fig. 26 is an enlarged schematic diagram of an area XXVI in Fig. 25.
Fig. 27 is an enlarged schematic diagram of an area XXVII in Fig. 25.
Fig. 28 is a schematic perspective view showing a state in which a second mouse skate member has been removed.
Fig. 29 is a schematic cross-sectional view showing a second state.
Fig. 30 is a schematic perspective view showing the second state.
Fig. 31 is a schematic perspective view showing a state before attachment of the peripheral device to the input device.
Fig. 32 is a schematic perspective view showing a state after attachment of the peripheral device to the input device.
Fig. 33 is a partial schematic cross-sectional view showing a state of attachment of the peripheral device to the input device.
Fig. 34 is an enlarged schematic cross-sectional view of an area XXXIV in Fig. 33.
Fig. 35 is an enlarged schematic cross-sectional view of an area XXXV in Fig. 33.
Fig. 36 is a schematic front view showing a configuration of a system according to the present embodiment.
Fig. 37 is a schematic right side view showing the configuration of the system according to the present embodiment.
Fig. 38 is a schematic bottom view showing the configuration of the system according to the present embodiment.
Fig. 39 is a schematic diagram showing relation between detection accuracy of a mouse operation sensor and a distance between the mouse operation sensor and a tracking surface.
Fig. 40 is a schematic front view showing a state in which the input device is used as a mouse.
Fig. 41 is a schematic cross-sectional view showing a configuration of an attachment portion of a peripheral device according to a first modification.
Fig. 42 is a schematic cross-sectional view showing a configuration of an attachment portion of a peripheral device according to a second modification.
Fig. 43 is a schematic diagram showing a state in which the peripheral device including the attachment portion according to the second modification is removed from the input device.
Fig. 44 is a schematic cross-sectional view showing a configuration of an attachment portion of a peripheral device according to a third modification.
Fig. 45 is a schematic cross-sectional view showing a configuration of an attachment portion of a peripheral device according to a fourth modification.
Fig. 46 is a schematic perspective view showing a configuration of a peripheral device according to a second embodiment.
Fig. 47 is a six-view schematic diagram showing the configuration of the peripheral device according to the second embodiment.
Fig. 48 is a schematic perspective view showing a configuration of a peripheral device according to a third embodiment.
Fig. 49 is a six-view schematic diagram showing the configuration of the peripheral device according to the third embodiment.
Fig. 50 is a schematic perspective view showing a configuration of a peripheral device according to a fourth embodiment.
Fig. 51 is a six-view schematic diagram showing the configuration of the peripheral device according to the fourth embodiment.
Fig. 52 is a schematic perspective view showing a configuration of a peripheral device according to a fifth embodiment.
Fig. 53 is a schematic bottom view showing the configuration of the peripheral device according to the fifth embodiment.
Fig. 54 is a schematic perspective view showing a state in which the peripheral device according to the fifth embodiment is attached to the input device.
Fig. 55 is a schematic front view showing a state in which the peripheral device according to the fifth embodiment is attached to the input device.
Fig. 56 is a schematic bottom view showing a state in which the peripheral device according to the fifth embodiment is attached to the input device.
Fig. 57 is a schematic cross-sectional view along the line LVII-LVII in Fig. 54.
Fig. 58 is a schematic cross-sectional view along the line LVIII-LVIII in Fig. 54.
Fig. 59 is a schematic perspective view showing a configuration around a second tab of the peripheral device according to the fifth embodiment.
Fig. 60 is a schematic perspective view showing a state in which a peripheral device according to a modification is attached to the input device.
Fig. 61 is a schematic cross-sectional view along the line LXI-LXI in Fig. 60.
Fig. 62 is a schematic cross-sectional view showing only a plate member and a peripheral device main body portion along the line LXII-LXII in Fig. 60.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### (First Embodiment)

### <Overview>

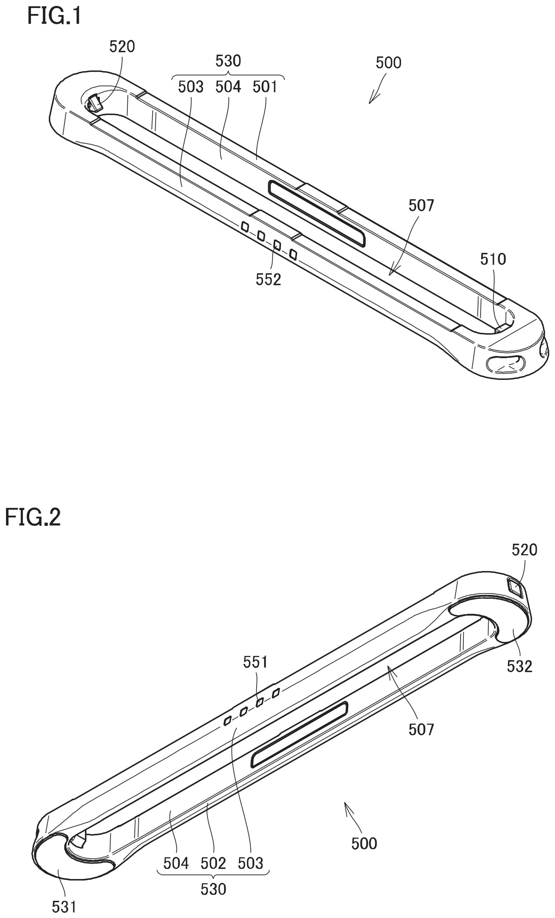

Initially, an overview of an exemplary peripheral device according to the present disclosure will be described. Fig. 1 is a schematic perspective view showing a configuration of a peripheral device according to a first embodiment. Fig. 2 is a schematic perspective view showing the configuration when the peripheral device according to the first embodiment is viewed from a direction different from the direction in Fig. 1.

As shown in Figs. 1 and 2, a peripheral device 500 according to the first embodiment includes, for example, a peripheral device main body portion 530, a first optical guide path 551, a second optical guide path 552, a first tab 510, a second tab 520, a first mouse skate member 531, and a second mouse skate member 532. Peripheral device main body portion 530 is provided with a hole 507.

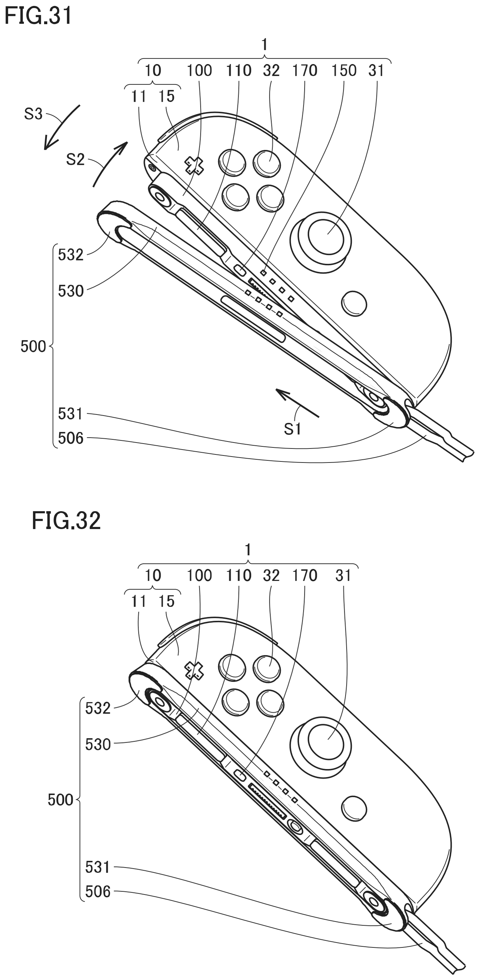

An input device 1 which will be described later is removably attachable to the peripheral device according to the first embodiment. As shown in Figs. 31 and 32, peripheral device 500 is attachable to and removable from input device 1.

### <Game Device>

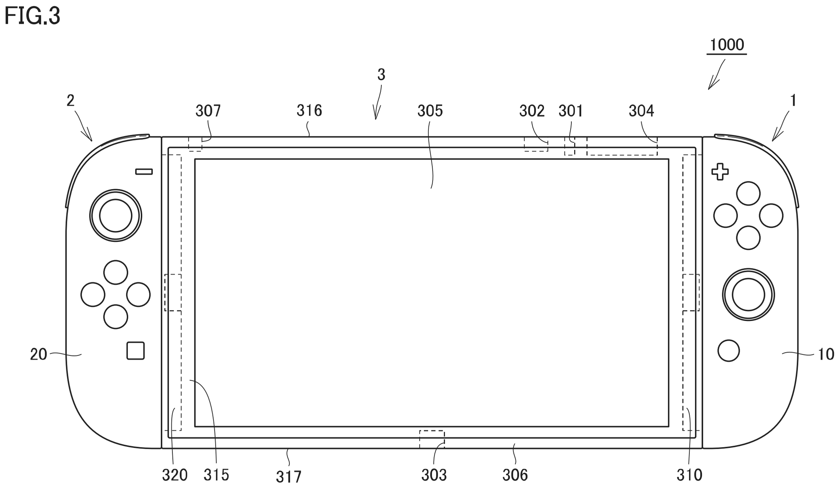

A configuration of an exemplary game device including the input device to which the peripheral device is attachable will now be described. Fig. 3 is a schematic front view of showing a configuration of an exemplary game device.

As shown in Fig. 3, a game device 1000 includes a first input device 1, a second input device 2, and a main body apparatus 3. First input device 1 or second input device 2 will simply also collectively be referred to as an input device below. Each of first input device 1 and second input device 2 is, for example, a game controller. Main body apparatus 3 is capable of performing game processing. The game processing is performed based on an input to the input device. First input device 1 and second input device 2 are attachable to and removable from main body apparatus 3. In an attached state shown in Fig. 1, first input device 1 is attached to a right side surface of main body apparatus 3 and second input device 2 is attached to a left side surface of main body apparatus 3.

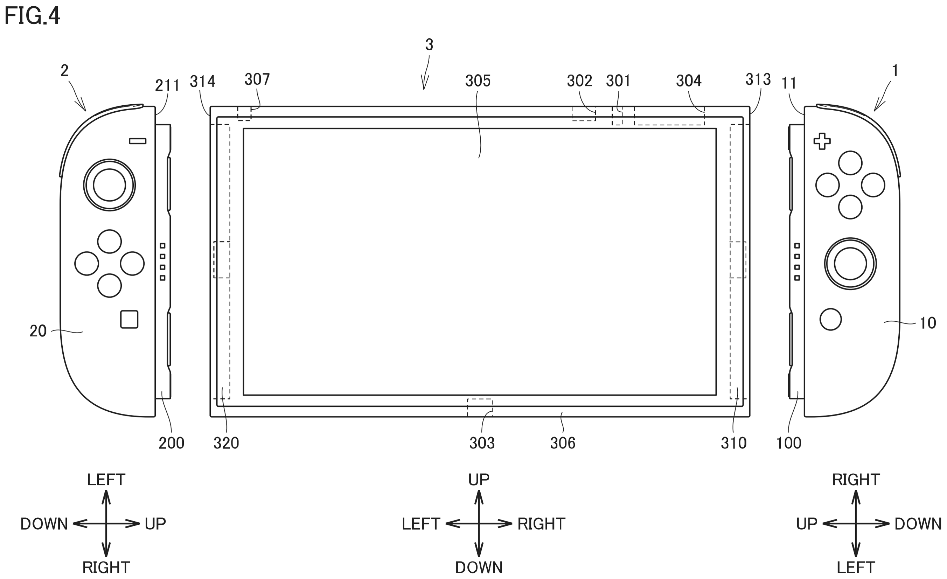

Fig. 4 is a schematic front view showing a state in which each of first input device 1 and second input device 2 has been removed from main body apparatus 3.

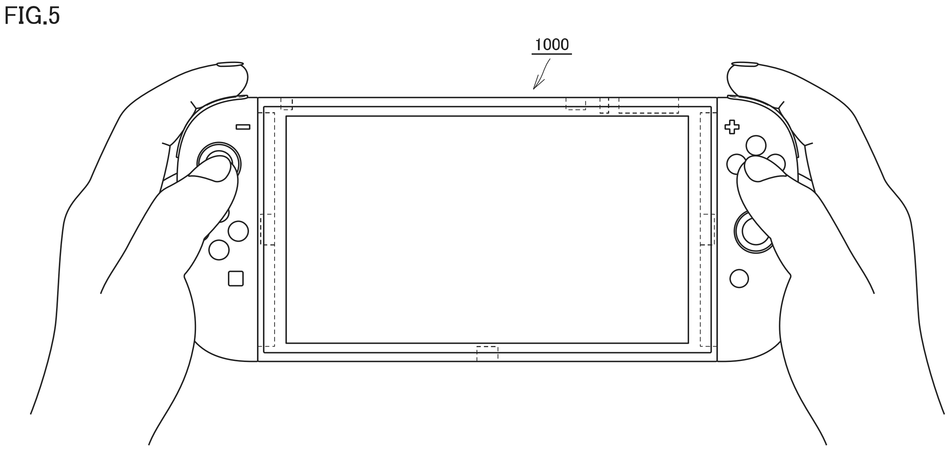

As shown in Figs. 5, 6, and 7, the input device can be used in each of a state in which the input device is attached to main body apparatus 3 and a state in which the input device is not attached to main body apparatus 3.

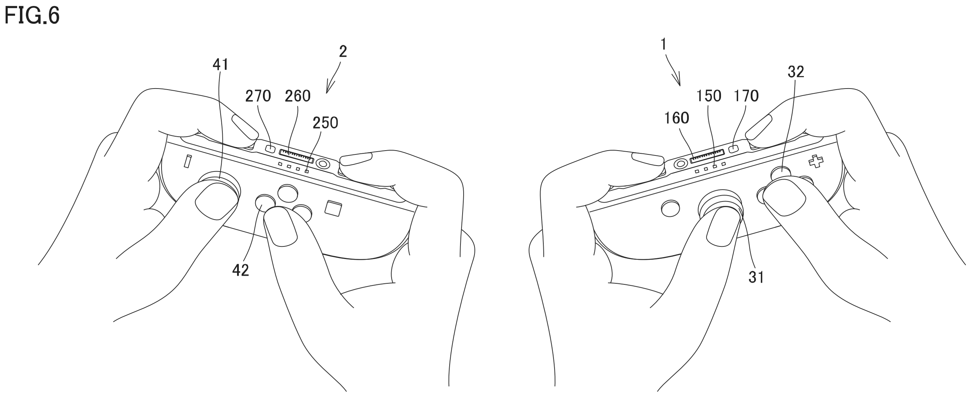

As shown in Fig. 5, while the input device is attached to main body apparatus 3, the input device is used in such a manner that a longitudinal direction thereof extends, for example, in an upward-downward direction. As shown in Fig. 6, on the other hand, while the input device is not attached to main body apparatus 3, the input device is used in such a manner that the longitudinal direction thereof extends in a left-right direction (from another point of view, a direction in parallel to the ground).

In the example shown in Fig. 6, different users operate first input device 1 and second input device 2, respectively.

When directions (upward-downward and left-right directions) of the input device are mentioned in the description hereafter, description will be given, with a state of use in which the input device is not attached to main body apparatus 3 and the longitudinal direction extends in the left-right direction being defined as the reference. When directions of main body apparatus 3 and directions of game device 1000 in which the input device is attached to main body apparatus 3 are mentioned in the description hereafter, description will be given, with a state of use in which a direction of connection between side surfaces of main body apparatus 3 to which the input devices are attached extends in the left-right direction being defined as the reference.

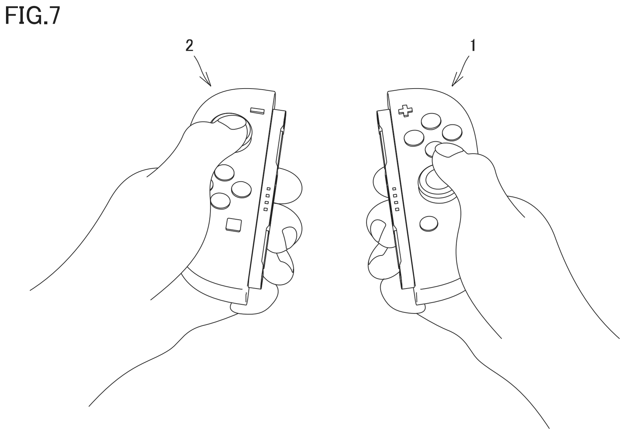

As shown in Fig. 7, while the input device is not attached to main body apparatus 3, the input device is used also in such a manner that the longitudinal direction thereof extends, for example, in the upward-downward direction (from another point of view, a direction perpendicular to the ground). In the example shown in Fig. 7, a single user operates both of first input device 1 and second input device 2. Different users may operate respective controllers.

In the following, the state of use shown in Fig. 5 is also called an integrally held state, the state of use shown in Fig. 6 is also called a horizontally held state, and the state of use shown in Fig. 7 is also called a vertically held state.

As shown in Fig. 4, first input device 1 includes a projection 100 at an upper side surface 11, projection 100 projecting from the upper side surface. Upper side surface 11 of first input device 1 is a side surface that extends along the longitudinal direction of first input device 1. Projection 100 extends in the longitudinal direction of upper side surface 11. Projection 100 is attached to a controller housing 10. Similarly, second input device 2 includes a projection 200 at an upper side surface 211, projection 200 projecting from the upper side surface and extending in the longitudinal direction of the upper side surface. Upper side surface 211 of second input device 2 is a side surface that extends along the longitudinal direction of second input device 2. Projection 200 extends in the longitudinal direction of upper side surface 211. Projection 200 is attached to a controller housing 20.

As shown in Figs. 3 and 4, main body apparatus 3 is provided with a game-device-side recess 310 in a main body right side surface 313. Game-device-side recess 310 extends in the longitudinal direction of main body right side surface 313. Game-device-side recess 310 extends along the upward-downward direction of main body right side surface 313. A main body left side surface 314 of main body apparatus 3 is provided with a game-device-side recess 320. Game-device-side recess 320 extends in the longitudinal direction of main body left side surface 314. Game-device-side recess 320 extends along the upward-downward direction of main body left side surface 314 of main body apparatus 3. Game-device-side recess 310, 320 is a recess in an elongated shape that extends along the longitudinal direction of main body right side surface 313 or main body left side surface 314.

Game-device-side recess 310, 320 is a game device attachment portion provided in main body apparatus 3 of the game device. As shown in Fig. 3, first input device 1 is attached to main body apparatus 3 such that projection 100 is matched with game-device-side recess 310. First input device 1 is attached to main body apparatus 3 such that upper side surface 11 of first input device 1 is opposed to main body right side surface 313 of main body apparatus 3 and the longitudinal direction of upper side surface 11 of first input device 1 extends along the longitudinal direction of main body right side surface 313 of main body apparatus 3. Similarly, second input device 2 is attached to main body apparatus 3 such that projection 200 is matched with game-device-side recess 320. Second input device 2 is attached to main body apparatus 3 such that upper side surface 211 of second input device 2 is opposed to main body left side surface 314 of main body apparatus 3 and the longitudinal direction of upper side surface 211 of second input device 2 extends along the longitudinal direction of main body left side surface 314 of main body apparatus 3.

Each of first input device 1 and second input device 2 includes a joystick and a set of four buttons. In attachment to main body apparatus 3, first input device 1 is attached such that the four buttons are located above and the joystick is located below. Second input device 2 is attached to main body apparatus 3, on the other hand, such that the joystick is located above and the four buttons are located below.

The game device may be able to perform a function other than a game. The game device may include a casing where a device capable of executing a game can be accommodated. First input device 1 and second input device 2 may be attached to a component other than main body apparatus 3 of the game device. For example, first input device 1 and second input device 2 may be attachable to each other.

### <Main Body Apparatus>

As shown in Fig. 3, a display 305 is provided at a main body front surface 315 of main body apparatus 3. Display 305 may be any display apparatus. A touch panel may be provided at a display surface of display 305.

Main body apparatus 3 includes a lower terminal 303. Lower terminal 303 is located at a main body lower side surface 317 of main body apparatus 3. Lower terminal 303 may be located at a center in the left-right direction of main body lower side surface 317. Lower terminal 303 is, for example, a terminal for communication with an external apparatus. Lower terminal 303 implements, for example, a universal serial bus (UBS) connector. Main body apparatus 3 may externally be supplied with electric power through lower terminal 303. Main body apparatus 3 may output an image to the outside through lower terminal 303. When main body apparatus 3 is placed at a cradle from a side of the main body lower side surface, lower terminal 303 may be connected to a terminal at the cradle.

Main body apparatus 3 includes an upper terminal 302 at a main body upper side surface 316. Main body apparatus 3 may include a power button 307, a storage medium slot 304, or an audio input and output terminal 301 at main body upper side surface 316. Main body apparatus 3 may perform game processing by executing a game application stored in a storage medium inserted in storage medium slot 304.

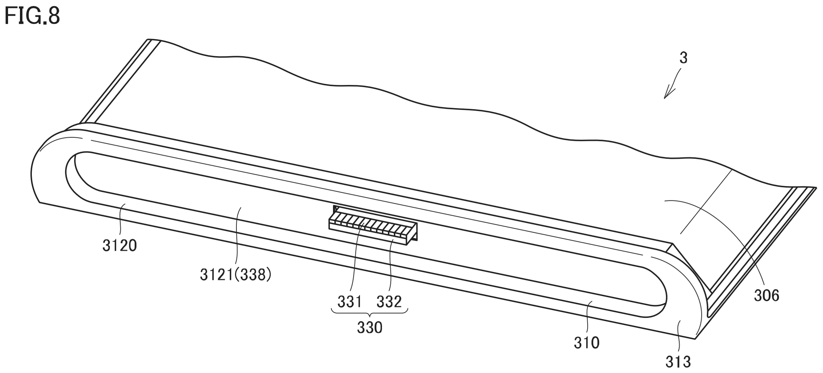

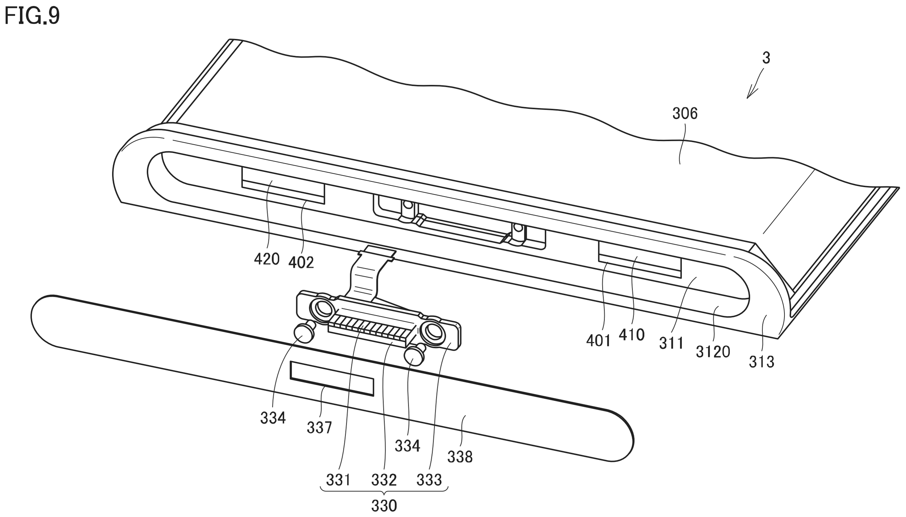

Fig. 8 is a schematic perspective assembly diagram showing a configuration of the right side surface of main body apparatus 3. Fig. 9 is a schematic perspective exploded view showing the configuration of the right side surface of main body apparatus 3. Main body apparatus 3 is similar in configuration also at a side of a left side surface.

As shown in Fig. 8, game-device-side recess 310 is located in main body right side surface 313 of main body apparatus 3. Game-device-side recess 310 is a recessed portion in main body right side surface 313. Game-device-side recess 310 includes a game-device-side bottom surface 3121 and a game-device-side inner peripheral surface 3120 that surrounds game-device-side bottom surface 3121. In the present example, a portion of a main body housing 306 that forms the right side surface of main body apparatus 3 is recessed to form game-device-side inner peripheral surface 3120 and a base surface (a base surface 311 which will be described later) which serves as the base of the bottom surface. As a cover member 338 is placed over the base surface, a surface of cover member 338 forms game-device-side bottom surface 3121 of game-device-side recess 310. Cover member 338 does not have to be provided, and in that case, a bottom surface formed by main body housing 306 defines game-device-side bottom surface 3121 of game-device-side recess 310.

As shown in Fig. 8, game-device-side bottom surface 3121 of game-device-side recess 310 extends in the longitudinal direction of main body right side surface 313. A side at a front surface side of game-device-side bottom surface 3121 and a side at a rear surface side thereof are substantially linear and extend substantially in parallel. In the present embodiment, an upper area and a lower area of game-device-side bottom surface 3121 decrease in width toward respective ends. More specifically, the upper area and the lower area of game-device-side bottom surface 3121 decrease in width in a curved manner. The upper area and the lower area of game-device-side bottom surface 3121 may linearly decrease in width. Alternatively, the upper area and the lower area of game-device-side bottom surface 3121 may be constant in width. Alternatively, only one of the upper area and the lower area of game-device-side bottom surface 3121 may decrease in width toward the end.

As shown in Fig. 9, main body apparatus 3 includes a first plug connector 330, cover member 338, a set of shoulder screws 334, and two game-device-side magnetic elements 410 and 420 provided along the longitudinal direction of game-device-side recess 310. First game-device-side magnetic element 410 is arranged above and second game-device-side magnetic element 420 is arranged below. First game-device-side magnetic element 410 is arranged in an area above a center in the longitudinal direction of main body right side surface 313 and second game-device-side magnetic element 420 is arranged in an area below the center. Game-device-side magnetic elements 410 and 420 each include a magnet and yokes between which the magnet lies. Game-device-side magnetic elements 410 and 420 do not have to include the yoke. Game-device-side magnetic elements 410 and 420 may both be arranged in an area above or below.

As shown in Fig. 9, a portion of main body housing 306 that forms the right side surface is recessed to form base surface 311 that serves as the base of the bottom surface of game-device-side recess 310 and game-device-side inner peripheral surface 3120. As described above, the surface of cover member 338 placed on base surface 311 defines game-device-side bottom surface 3121. Base surface 311 and cover member 338 are substantially the same in shape. Though game-device-side inner peripheral surface 3120 surrounds the entire periphery of base surface 311 in the present example, it does not have to surround the entire periphery. Game-device-side inner peripheral surface 3120 is contiguous to base surface 311 and main body right side surface 313. Game-device-side inner peripheral surface 3120 has an upper end (a right side end of main body apparatus 3) connected to main body right side surface 313. From another point of view, game-device-side recess 310 is recessed relative to main body right side surface 313.

Base surface 311 is provided with a first hole 401 and a second hole 402 for accommodation of game-device-side magnetic elements 410 and 420. First hole 401 and second hole 402 are aligned in the longitudinal direction of main body right side surface 313. In other words, first hole 401 and second hole 402 are aligned in the longitudinal direction of base surface 311. Though details will be described later, first input device 1 also includes a magnetic element. As magnetic elements at a side of first input device 1 are attracted to game-device-side magnetic elements 410 and 420, the input device is attached to main body apparatus 3. As the entirety or a part of game-device-side magnetic elements 410 and 420 enter respective holes 401 and 402 from the inside of main body housing 306, the magnetic elements at the side of first input device 1 attached to main body apparatus 3 come closer to game-device-side magnetic elements 410 and 420 and magnetic force for attraction can be strengthened.

First game-device-side magnetic element 410, second game-device-side magnetic element 420, first hole 401, and second hole 402 are covered with cover member 338. Specifically, first game-device-side magnetic element 410 and second game-device-side magnetic element 420 are covered with cover member 338 that defines game-device-side bottom surface 3121 of game-device-side recess 310. In the present example, first game-device-side magnetic element 410 and second game-device-side magnetic element 420 are buried in game-device-side bottom surface 3121 of game-device-side recess 310 owing to cover member 338 as a manner of provision of first game-device-side magnetic element 410 and second game-device-side magnetic element 420 at the bottom of game-device-side recess 310. In another manner of provision of first game-device-side magnetic element 410 and second game-device-side magnetic element 420 at the bottom of game-device-side recess 310, first game-device-side magnetic element 410 and second game-device-side magnetic element 420 may be arranged on game-device-side bottom surface 3121 of game-device-side recess 310. First game-device-side magnetic element 410 and second game-device-side magnetic element 420 may be arranged as being exposed at a surface of a hole provided at game-device-side bottom surface 3121 of game-device-side recess 310 or a position deep in the hole.

Second game-device-side magnetic element 420 is similar in configuration to first game-device-side magnetic element 410. A part of second game-device-side magnetic element 420 is accommodated in second hole 402 similarly to first game-device-side magnetic element 410.

As shown in Fig. 9, first plug connector 330 includes a support portion 333, a first tongue-shaped body 332 that projects from support portion 333, and a main body first terminal 331 provided along a surface of first tongue-shaped body 332. Support portion 333 and first tongue-shaped body 332 may be integrated with or separate from each other.

First plug connector 330 is located between first game-device-side magnetic element 410 and second game-device-side magnetic element 420 in the longitudinal direction of main body right side surface 313 when viewed in a direction toward the bottom surface of game-device-side recess 310.

### <Controller>

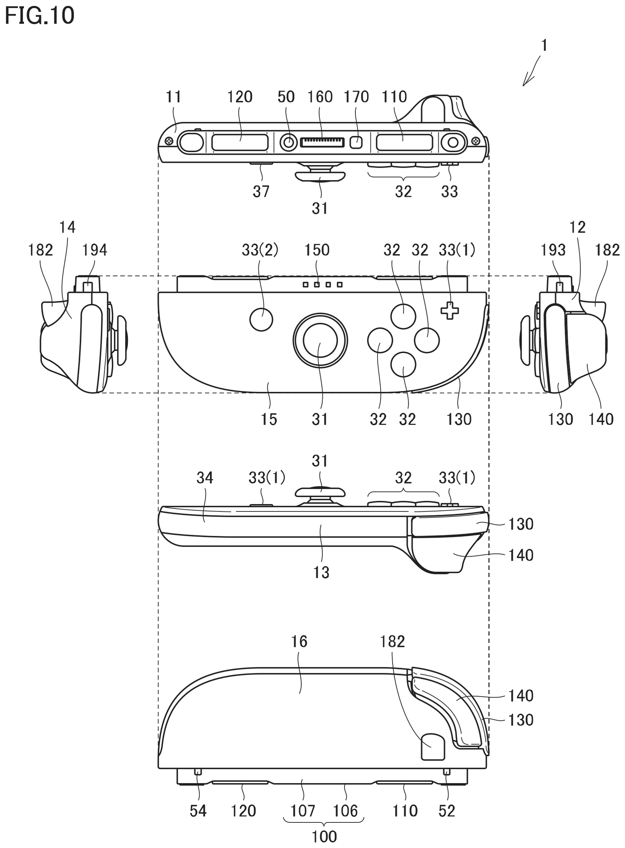

Fig. 10 is a schematic six-view drawing showing a configuration of first input device 1.

As shown in Fig. 10, first input device 1 in the present embodiment includes at a front surface thereof, a joystick 31 which represents an exemplary direction input portion, a set of four buttons 32 aligned in a cross shape, a + button 33 (1), and a home button 33 (2). First input device 1 includes an upper-surface button (right) 110 (which is also referred to as a first button 110 below) and an upper-surface button (left) 120 (which is also referred to as a second button 120 below), a synchronization button 50, a shoulder button (right) 130, and a Z shoulder button (right) 140. Though details will be described later, upper-surface button (right) 110, upper-surface button (left) 120, and synchronization button 50 are provided at projection 100. These are exemplary input portions and all of them do not have to be provided. First input device 1 may include another input portion such as a touch pad or a pressure sensor instead of or in addition to these input portions.

While first input device 1 is attached to main body apparatus 3, operation information from the input portion is transmitted to main body first terminal 331 of main body apparatus 3 through a first terminal 160 which will be described later and processed in accordance with a program by a CPU of main body apparatus 3. In a manner of use where the input device is not attached to main body apparatus 3, operation information from the input portion is transmitted to the CPU of main body apparatus 3 through a wireless chip included in the input device and a wireless chip included in main body apparatus 3. The game device does not have to include first terminal 160 and main body first terminal 331, and in that case, information is transmitted through the wireless chips also while the input device is attached to main body apparatus 3.

As shown in Fig. 10, first input device 1 includes a front surface 15, a rear surface 16, upper side surface 11, a right side surface 12, a lower side surface 13, and a left side surface 14. Front surface 15 is a surface opposed to a user who uses first input device 1 in the integrally held state, the horizontally held state, and the vertically held state. Rear surface 16 is located opposite to front surface 15. Front surface 15 and rear surface 16 are each contiguous to upper side surface 11, right side surface 12, lower side surface 13, and left side surface 14.

A direction of normal to upper side surface 11 is also referred to as a first direction R1. First direction R1 is a direction in which projection 100 projects and also referred to as an upper side or a projection direction or an upward direction. Projection 100 is located at a side of first direction R1 of upper side surface 11. A direction opposite to first direction R1 is also referred to as a third direction R3. Third direction R3 is also referred to as a lower side or a downward direction. First direction R1 and third direction R3 are also collectively referred to as an upward-downward direction.

A direction toward right side surface 12 which is perpendicular to the upward-downward direction is also referred to as a second direction R2. Second direction R2 is also referred to as a right side or a right direction. A direction opposite to second direction R2 is also referred to as a fourth direction R4. Fourth direction R4 is also referred to as a left side or a left direction. Second direction R2 and fourth direction R4 are also collectively referred to as a left-right direction.

A direction normal to front surface 15 is also referred to as a fifth direction R5. Fifth direction R5 is also referred to as a front surface side or a front direction. A direction opposite to the fifth direction is also referred to as a sixth direction R6. Sixth direction R6 is also referred to as a rear surface side or a rear direction. Fifth direction R5 and sixth direction R6 are also collectively referred to as a front-rear direction.

As described above, upper side surface 11 is located at a side of the upward direction with respect to the front surface. Upper side surface 11 is a side surface that extends in the longitudinal direction of front surface 15. In the present embodiment, the longitudinal direction of front surface 15 corresponds to the left-right direction of front surface 15. Upper side surface 11 extends in the left-right direction. Lower side surface 13 is located opposite to upper side surface 11. Lower side surface 13 is located at a side of third direction R3 of upper side surface 11. Right side surface 12 is a side surface that is contiguous to a right end of upper side surface 11 and extends in a direction away from upper side surface 11. An end of the right side surface distant from upper side surface 11 is contiguous to a right end of lower side surface 13. Left side surface 14 is a side surface that is contiguous to a left end of upper side surface 11 and extends in a direction away from upper side surface 11. An end of the left side surface distant from upper side surface 11 is contiguous to a left end of lower side surface 13. The right side surface is located at a side of second direction R2, of the left side surface.

As shown in Fig. 10, front surface 15 of the first input device is provided with + button 33 (1), the set of four buttons 32, joystick 31, and home button 33 (2) from the right side in the left-right direction. One set of four buttons 32 and joystick 31 are adjacent to each other. In the upward-downward direction, joystick 31 is located between an upper button and a lower button in the set of four buttons 32. In the left-right direction, joystick 31 is located substantially on an extension of a straight line that connects the button on the right side and the button on the left side in the set of four buttons 32 to each other.

Joystick 31 is tiltable in directions around 360 degrees and may be tiltable in any direction including first direction R1 to fourth direction R4. Joystick 31 may be tiltable only in at least one direction. Joystick 31 may be pushed in. Joystick 31 may be slidable in each direction, instead of being tilted. Main body apparatus 3 may perform processing in accordance with a signal indicating an operation direction, in an executed program, as a result of an operation on joystick 31 by the user. The input device may include another input portion instead of or in addition to joystick 31 as the direction input portion. For example, the input device may include a cross-shaped key or a set of buttons.

Main body apparatus 3 may perform prescribed corresponding processing based on pressing down of + button 33 (1) and the set of four buttons 32 in an executed program. Main body apparatus 3 may call a home menu in response to an input on home button 33 (2).

Shoulder button (right) 130 is a button, for example, used in the integrally held state, and arranged at an upper right portion of first input device 1 in the integrally held state. Shoulder button (right) 130 may be used also in the vertically held state. Shoulder button (right) 130 includes a curved operation surface. Shoulder button (right) 130 extends in a direction away from upper side surface 11. Shoulder button (right) 130 is generally located at a lower right portion of first input device 1 in the horizontally held state. At least a part of shoulder button (right) 130 may be located at right side surface 12. The operation surface of shoulder button (right) 130 is generally curved along the lower right portion of first input device 1. Main body apparatus 3 performs prescribed processing in accordance with pressing down of the shoulder button (right) in an executed program.

Z shoulder button (right) 140 is a button, for example, used in the integrally held state and provided at a rear surface side of shoulder button (right) 130. Z shoulder button (right) 140 may be used also in the vertically held state. Z shoulder button (right) 140 includes a curved operation surface. Shoulder button (right) 130 extends in a direction away from upper side surface 11. Z shoulder button (right) 140 is located generally at the lower right portion of first input device 1 in the horizontally held state. At least a part of Z shoulder button (right) 140 may be located at right side surface 12. At least a part of Z shoulder button (right) 140 may be located at rear surface 16. The operation surface of Z shoulder button (right) 140 is curved generally along the lower right portion of first input device 1. Z shoulder button (right) 140 may entirely be provided at the rear surface. Main body apparatus 3 performs prescribed processing based on pressing down of Z shoulder button (right) 140 in an executed program.

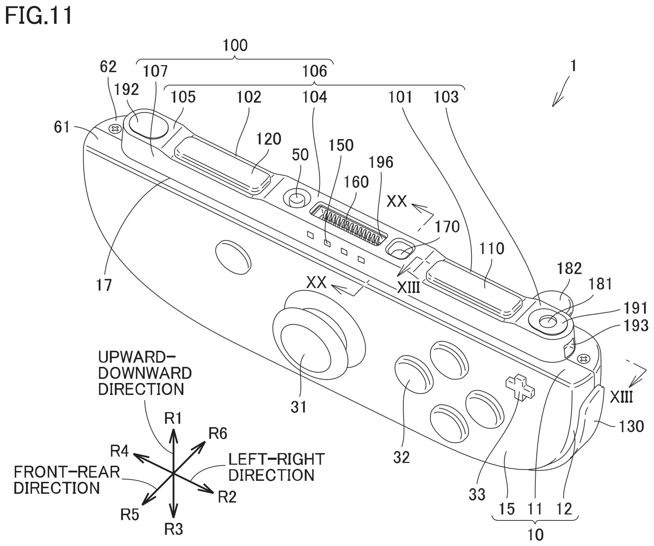

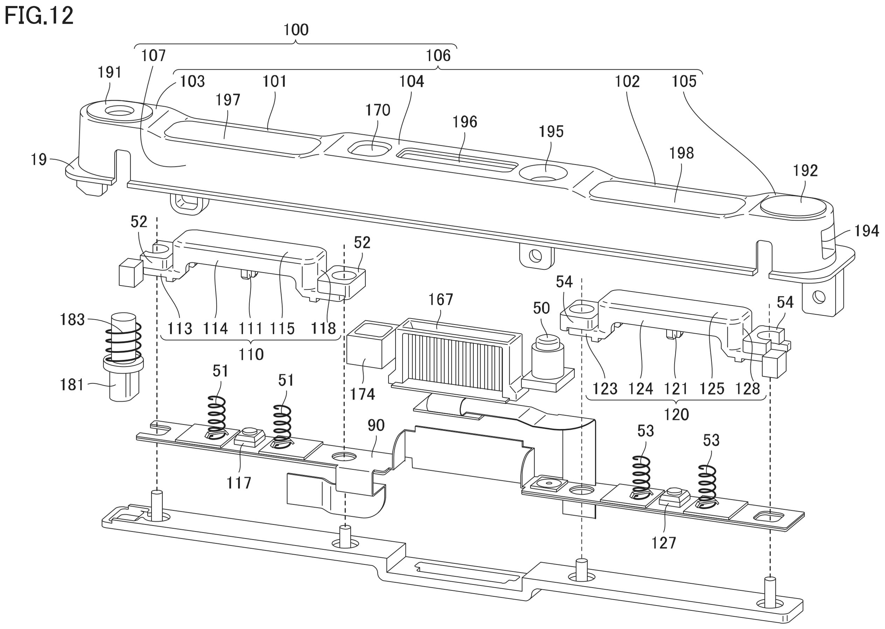

Fig. 11 is a schematic perspective view showing the configuration of first input device 1. Fig. 12 is a schematic perspective exploded view including projection 100.

As shown in Fig. 11, first input device 1 includes, in addition to already-described features, a light emission portion 150 configured to give a notification of an identification number of the input device, first terminal 160 connected to main body first terminal 331 of main body apparatus 3, a first cushion member 191, a second cushion member 192, and an operation portion 182 that implements a removal mechanism for removal of projection 100 from main body apparatus 3. First cushion member 191 and second cushion member 192 are each an input device mouse skate member.

As shown in Fig. 11, projection 100 projects upward from upper side surface 11. From another point of view, projection 100 projects in first direction R1 from upper side surface 11. Projection 100 extends along the longitudinal direction of upper side surface 11 (that is, a length in the longitudinal direction is longer than lengths in other directions). Projection 100 does not have to extend in a manner as exactly coinciding with the longitudinal direction of upper side surface 11 but should only extend along the longitudinal direction. In other words, the longitudinal direction of projection 100 extends along the longitudinal direction of upper side surface 11. The longitudinal direction of projection 100 does not have to exactly coincide with the longitudinal direction of upper side surface 11. Projection 100 is a projection in an elongated shape that extends along the longitudinal direction of upper side surface 11. Projection 200 of second input device 2 is also similar in configuration to projection 100. The configuration of projection 100 of first input device 1 will mainly be described below.

Projection 100 includes a top surface (which is also referred to as a top surface 106) and a peripheral surface (which is also referred to as an outer peripheral surface 107) that extends downward from the top surface. Top surface 106 is distant from upper side surface 11. Outer peripheral surface 107 is located between top surface 106 and upper side surface 11 and extends from top surface 106 to upper side surface 11. Outer peripheral surface 107 is contiguous to top surface 106 as surrounding an outer edge of top surface 106. Top surface 106 extends along the longitudinal direction of upper side surface 11. Projection 100 extends along the longitudinal direction of upper side surface 11 when viewed in a top surface 106 direction. A length in the left-right direction of top surface 106 is longer than a length in the front-rear direction of top surface 106. A surface of top surface 106 does not have to be planar as a result of graining, or may be planar.

In the present example, projection 100 is in a shape of a frustum of a pyramid decreasing in cross-section toward top surface 106. An end area in the longitudinal direction may be rounded as will be described later. From another point of view, when projection 100 is viewed from a side of top surface 106 (that is, an upper side), top surface 106 and outer peripheral surface 107 that surrounds top surface 106 are seen. The shape of projection 100 is not limited to the shape of the frustum of the pyramid. By way of example, projection 100 may be in a shape of a frustum of a cone or a parallelepiped.

A length in the left-right direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of upper side surface 11. The length in the left-right direction of projection 100 may be, for example, at most twenty-five times or at most fifteen times as long as the length in the front-rear direction of projection 100.

Increase in length in the left-right direction of projection 100 can lead to increase in length in the left-right direction of top surfaces (operation surfaces) of upper-surface button (right) 110 and upper-surface button (left) 120 and better operability. Arrangement of first cushion member 191, second cushion member 192, and the like at the top surface of projection 100 can also be facilitated.

As shown in Fig. 11, projection 100 lies between a front-surface-side housing 61 and a rear-surface-side housing 62 that form controller housing 10. Upper side surface 11 is provided with a housing opening 17 defined by an end surface of front-surface-side housing 61 and an end surface of rear-surface-side housing 62. Projection 100 projects through housing opening 17 from the inside of controller housing 10.

As shown in Fig. 12, projection 100 includes a projection flange 19. Projection flange 19 extends outward (more specifically, in the left-right direction and the front-rear direction) from a lower end of a wall portion that defines outer peripheral surface 107. An area above projection flange 19 of projection 100 is exposed through housing opening 17. A lower area including projection flange 19 of projection 100 is located inside controller housing 10. Projection flange 19 functions as a stopper that prevents projection 100 from coming off. In another manner, projection 100 may be comprised of a plurality of components. In yet another manner, projection 100 may be a part of controller housing 10. For example, projection 100 may be formed from at least one of front-surface-side housing 61 and rear-surface-side housing 62.

Projection 100 is removably attachable to the game device attachment portion provided in the game device. Specifically, projection 100 is configured to be matched with game-device-side recess 310 in the front surface direction of the recess (a right side surface direction of main body apparatus 3). Projection 100 is configured as being compatible with game-device-side recess 310. From another point of view, the shape of top surface 106 and outer peripheral surface 107 of the projection is compatible with the shape of game-device-side bottom surface 3121 and game-device-side inner peripheral surface 3120 of game-device-side recess 310. While first input device 1 is attached to main body apparatus 3, top surface 106 is opposed to game-device-side bottom surface 3121 as being in contact therewith or in proximity thereto and outer peripheral surface 107 is opposed to game-device-side inner peripheral surface 3120 as being in contact therewith or in proximity thereto. Therefore, for example, when the user attaches first input device 1 to main body apparatus 3, first input device 1 is guided to an appropriate attachment position. For example, position displacement of first input device 1 attached to main body apparatus 3 in the upward-downward direction or the front-rear direction in main body apparatus 3 is suppressed. By way of example, even when force is applied to the input device in the front-rear direction or the upward-downward direction with an operation input by the user in the integrally held state, great position displacement of the input device from main body apparatus 3 is suppressed.

As shown in Figs. 10 to 12, outer peripheral surface 107 of projection 100 includes a first engagement hole 193 and a second engagement hole 194. First engagement hole 193 is located at one longitudinal end surface of projection 100. Second engagement hole 194 is located at the other longitudinal end surface of projection 100. First engagement hole 193 is different in shape from second engagement hole 194. In the front-rear direction, first engagement hole 193 may be different in length from second engagement hole 194. In the upward-downward direction, first engagement hole 193 may be different in length from second engagement hole 194.

As shown in Figs. 11 and 12, upper-surface button (right) 110 and upper-surface button (left) 120 are located at projection 100. Upper-surface button (right) 110 and upper-surface button (left) 120 are buttons configured to be pressed down by the user and they are components configured to be moved downward by the pressing-down operation. A ground connection portion 51 is connected under upper-surface button (right) 110. A tact switch 117 is located under upper-surface button (right) 110. As upper-surface button (right) 110 is moved downward by the pressing-down operation by the user, tact switch 117 is pressed down by upper-surface button (right) 110. Upper-surface button (right) 110 and tact switch 117 form a button switch. Upper-surface button (left) 120 and a tact switch 127 form a button switch.

Upper-surface button (right) 110 is exposed through a fifth opening 197 provided in top surface 106. Exposed portions (110 and 120 in Fig. 10) of upper-surface buttons 110 and 120 each form a user-operable portion configured to be pressed down by the user. A ground connection portion 53 is connected under upper-surface button (left) 120. Tact switch 127 is located under upper-surface button (left) 120. Tact switch 127 is configured to be pressed down by upper-surface button (left) 120. On signals from tact switch 117 and tact switch 127 are transmitted to main body apparatus 3 and processing in accordance with pressing-down of upper-surface button (right) 110 and upper-surface button (left) 120 is performed in an executed program.

Synchronization button 50 is located at projection 100. Synchronization button 50 is configured to be pressed down by the user. Synchronization button 50 is located between upper-surface button (right) 110 and upper-surface button (left) 120 in the longitudinal direction of projection 100. More specifically, synchronization button 50 is located between first terminal 160 and upper-surface button (left) 120 in the longitudinal direction of projection 100. Synchronization button 50 may be used for an instruction for setting processing relating to wireless communication between first input device 1 and main body apparatus 3.

First input device 1 includes a terminal accommodation portion 167. First terminal 160 is located along an inner peripheral surface of terminal accommodation portion 167. First terminal 160 extends along the upward-downward direction. Top surface 106 is provided with a terminal opening 196. Terminal accommodation portion 167 communicates with terminal opening 196. In other words, terminal accommodation portion 167 is open in top surface 106. Therefore, first terminal 160 can be accessed from the outside of top surface 106.

Terminal opening 196 is located in top surface 106, between upper-surface button (right) 110 and upper-surface button (left) 120. Therefore, terminal accommodation portion 167 is open in top surface 106 between upper-surface button (right) 110 and upper-surface button (left) 120. First terminal 160 is located between upper-surface button (right) 110 and upper-surface button (left) 120 in the longitudinal direction of projection 100. First terminal 160 should only at least partially be located between upper-surface button (right) 110 and upper-surface button (left) 120 in the left-right direction, and does not have to be located between upper-surface button (right) 110 and upper-surface button (left) 120 in the front-rear direction and the upward-downward direction. From another point of view, the terminal is located between upper-surface button (right) 110 and upper-surface button (left) 120 when viewed in the direction toward the top surface of projection 100. First terminal 160 is located at projection 100. At least an upper end of first terminal 160 is arranged as high as or below top surface 106, or arranged below top surface 106, in the projection direction of projection 100. The upper end of first terminal 160 may be located between top surface 106 and upper side surface 11. A lower end of first terminal 160 may be arranged under upper side surface 11, that is, inside controller housing 10.

Light emission portion 150 is located at outer peripheral surface 107 of projection 100. More specifically, light emission portion 150 is located at the front surface side of outer peripheral surface 107. From another point of view, an area of outer peripheral surface 107 where light emission portion 150 is located faces the front surface side. When the user views front surface 15 of first input device 1, the user can visually recognize light from light emission portion 150. Light emission portion 150 typically allows emission of light emitted by an LED to the outside.

Light emission portion 150 can notify the user of prescribed information. Light emission portion 150 may show to the user, information for identification of each input device when main body apparatus 3 communicates with a plurality of input devices. Light emission portion 150 may show another type of information to the user. The number of light emission portions 150 is not particularly limited, and for example, four light emission portions 150 are provided. In the present embodiment, four light emission portions 150 are arranged as being aligned in the left-right direction. For example, among four light emission portions 150, light emission portion 150 at a portion corresponding to an identification number provided to an input device may be turned on, or light emission portion(s) 150 in number corresponding to the identification number may be turned on.

Light emission portion 150 is located between upper-surface button (right) 110 and upper-surface button (left) 120 in the longitudinal direction of projection 100. Light emission portion 150 is located at a position superimposed on first terminal 160 in the longitudinal direction of projection 100. From another point of view, when viewed from the front surface side, light emission portion 150 is located under terminal opening 196.

On top surface 106 of projection 100, first cushion member 191 and second cushion member 192 are placed. A height of a top surface of each of first cushion member 191 and second cushion member 192 from upper side surface 11 is higher than a height of top surface 106 of projection 100 from upper side surface 11. From another point of view, first cushion member 191 and second cushion member 192 raise the height of the top surface of projection 100. First cushion member 191 and second cushion member 192 do not have to be provided.

Input device 1 may be placed in such a manner that the top surface of projection 100 is opposed to a grounding surface, for example, a desktop. At this time, first cushion member 191 and second cushion member 192 themselves come in contact with the grounding surface to suppress direct contact with the grounding surface, of a portion of top surface 106 of projection 100 where the cushion is not located. The top surfaces of first cushion member 191 and second cushion member 192 come in contact with game-device-side bottom surface 3121 of game-device-side recess 310 while first input device 1 is attached to main body apparatus 3.

Regarding the height from upper side surface 11, the height of the top surfaces of first cushion member 191 and second cushion member 192 is equal to or higher than a highest height of top surface 106 of projection 100. From another point of view, the top surfaces of first cushion member 191 and second cushion member 192 are located at an uppermost position in first input device 1. First cushion member 191 is not particularly limited in shape, and it may be, for example, in a circular shape, an elliptical shape, or a rectangular shape. First cushion member 191 may be provided with a through hole. First cushion member 191 and second cushion member 192 may be the same or different in shape.

In the longitudinal direction of projection 100, first cushion member 191 is located closer to right side surface 12 than upper-surface button (right) 110. In the longitudinal direction of projection 100, upper-surface button (right) 110 is located between first terminal 160 and first cushion member 191.

In the longitudinal direction of projection 100, second cushion member 192 is located closer to left side surface 14 than upper-surface button (left) 120. In the longitudinal direction of projection 100, upper-surface button (left) 120 is located between first terminal 160 and second cushion member 192. More specifically, in the longitudinal direction of projection 100, upper-surface button (left) 120 is located between synchronization button 50 and second cushion member 192.

Projection 100 may be divided. Projection 100 may be comprised, for example, of a plurality of projecting members. An attachment structure of input device 1 is not limited to projection 100. Input device 1 may include an attachment portion other than projection 100. In the attachment portion other than projection 100, a first opening 170 for a mouse operation may open in a direction in which upper side surface 11 faces.

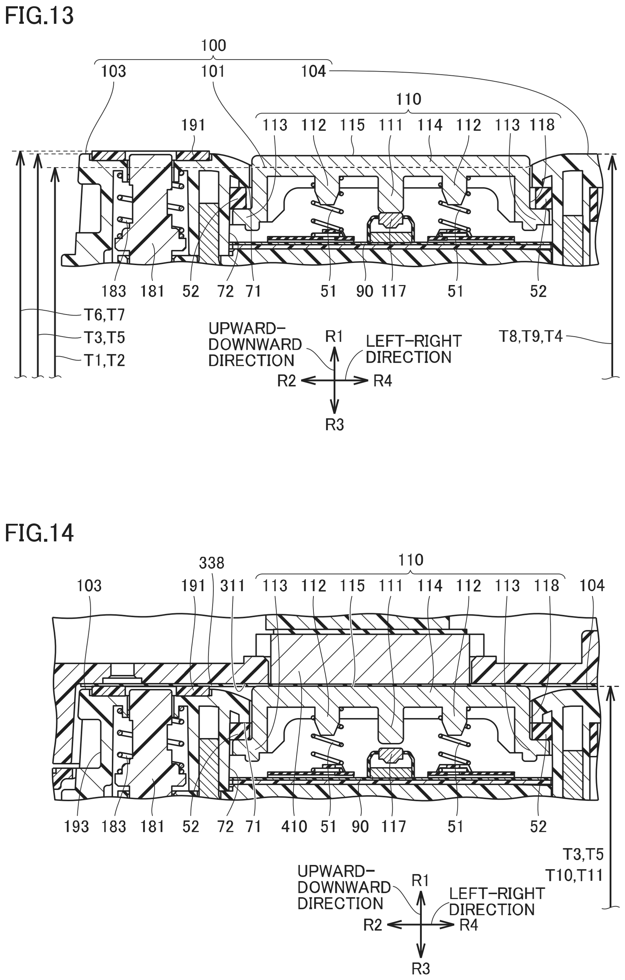

Fig. 13 is a partial schematic cross-sectional view along the line XIII-XIII in Fig. 11. A structure of upper-surface button (right) 110 and surroundings will be described in detail below. In the present embodiment, a structure of upper-surface button (left) 120 and surroundings and the structure of upper-surface button (right) 110 and the surroundings are substantially in symmetry in the left-right direction.

As shown in Fig. 13, a portion of upper-surface button (right) 110 that is exposed at the top surface of projection 100 forms an operation surface 115 which is a surface operated by the user. Upper-surface button (right) 110 includes a main body portion 114 including operation surface 115, a sidewall 118, a flange 113, a first protruding portion 111, and a second protruding portion 112. Operation surface 115 extends along the longitudinal direction of projection 100 at top surface 106 of projection 100. In other words, the longitudinal direction of operation surface 115 extends in the left-right direction. From another point of view, the longitudinal direction of operation surface 115 coincides with the longitudinal direction of projection 100.

In the present embodiment, upper-surface button (right) 110 is comprised of a single component and the entirety thereof is comprised of a material which is not a magnet but is configured to be attracted to the magnet. A material for upper-surface button (right) 110 is not particularly limited, and it may be comprised of a soft magnetic material. For example, iron may be adopted as the material for upper-surface button (right) 110, and by way of example, steel plate cold commercial (SPCC) may be adopted by way of example. The material for upper-surface button (right) 110 may contain iron. By way of example, iron to which silicon and/or nickel is added may be adopted as the material for upper-surface button (right) 110. By way of example, upper-surface button (right) 110 may be comprised of a single component made of a resin-molded soft magnetic material.

In another manner, upper-surface button (right) 110 may be comprised of a magnet or a combination of a magnet and a soft magnetic material.

In yet another manner, only a part of upper-surface button (right) 110 may be comprised of a soft magnetic material or a magnet. In this case, at least a portion of projection 100 exposed at top surface 106 may be comprised of a soft magnetic material or a magnet. Alternatively, at least a portion that forms operation surface 115 may be comprised of a soft magnetic material or a magnet.

Operation surface 115 is the operation surface of upper-surface button (right) 110 exposed through fifth opening 197 and configured to be pressed down by the user. Operation surface 115 faces first direction R1. Operation surface 115 extends in the left-right direction. A length in the left-right direction of operation surface 115 may be at least ten percent or at least twenty percent as long as the length in the left-right direction of top surface 106 of projection 100. The length in the left-right direction of operation surface 115 may be at least ten percent or at least twenty percent as long as the length in the left-right direction of upper side surface 11 of projection 100.

As shown in Fig. 13, tact switch 117 is located below first protruding portion 111. Tact switch 117 is arranged on a flexible printed circuit 90 (which is also called an FPC 90 below). An upper portion of tact switch 117 is a leaf spring.

While upper-surface button (right) 110 is not pressed down by the user, first protruding portion 111 is supported by tact switch 117 from below. When the user presses down upper-surface button (right) 110, upper-surface button (right) 110 is moved downward from an initial position. First protruding portion 111 of upper-surface button (right) 110 moved downward presses down the upper portion of tact switch 117. The upper portion of tact switch 117 is pressed down to deform as sinking downward. A switch is thus turned on inside the tact switch. When the user removes his/her hand from upper-surface button (right) 110, the upper portion of tact switch 117 returns to an original shape. As the upper portion of tact switch 117 returns to the original shape, first protruding portion 111 is pushed back upward. Therefore, upper-surface button (right) 110 is moved to the initial position. In other words, when upper-surface button (right) 110 is pressed down, tact switch 117 biases upper-surface button (right) 110 in a direction opposite to a direction of pressing-down. Tact switch 117 may bias upper-surface button (right) 110 in the direction opposite to the direction of pressing-down also while upper-surface button (right) 110 is not pressed down.

In another manner, upper-surface button (right) 110 may be biased upward by a biasing body such as a spring. In other words, upper-surface button (right) 110 may be distant from tact switch 117 by being biased upward by the biasing body such as a spring while it is not pressed down by the user. In another manner, a rubber switch may be employed instead of tact switch 117.

Second protruding portion 112 protrudes in third direction R3 from the rear surface of main body portion 114. The number of second protruding portions 112 is not particularly limited. In the present embodiment, two second protruding portions 112 are provided with first protruding portion 111 lying therebetween in the left-right direction. A ground electrode is provided on FPC 90 below second protruding portion 112. Ground connection portion 51 is provided between second protruding portion 112 and the ground electrode in the upward-downward direction. Ground connection portion 51 is conductive. A shape and a material for ground connection portion 51 are not particularly limited, and a coil spring made of iron is employed in the present embodiment. An upper end of ground connection portion 51 is in contact with the rear surface of main body portion 114 and conducts to the main body portion. A lower end of second protruding portion 112 is surrounded by ground connection portion 51 formed from the coil spring. A lower end of ground connection portion 51 is in contact with the ground electrode.

In the present embodiment, upper-surface button (right) 110 is comprised of a soft magnetic material and comprised of iron by way of example, and hence it is conductive. Therefore, if a charged object comes in contact with upper-surface button (right) 110, a potential of upper-surface button (right) 110 may vary, which may affect projection 100 or an internal electronic component in controller housing 10. In the present embodiment, however, the potential of upper-surface button (right) 110 attains to a ground potential owing to electrical connection of upper-surface button (right) 110 to the ground electrode through ground connection portion 51. Therefore, even when a charged object comes in contact with upper-surface button (right) 110, possibility of influence on the internal electronic component is suppressed.

Since ground connection portion 51 is made up of the coil spring in the compressed state in the present embodiment, upper-surface button (right) 110 is biased upward by the coil spring. Since biasing force of the coil spring is weak in the present embodiment, upper-surface button (right) 110 is in contact with the upper portion of tact switch 117 at the initial position. In another manner, upper-surface button (right) 110 may be distant from tact switch 117 at the initial position by biasing force of the coil spring which is ground connection portion 51. In another manner, first input device 1 does not have to include ground connection portion 51.

As shown in Figs. 12 and 13, upper-surface button (right) 110 includes main body portion 114 the surface of which defines the operation surface, sidewall 118 that extends from a lower surface of main body portion 114, and flange 113 that extends outward from sidewall 118. Sidewall 118 extends into projection 100 through fifth opening 197. Flange 113 extends outward from sidewall 118 inside projection 100. The flange may extend outward from the lower end of sidewall 118. Flange 113 includes a flange portion that projects to the right from a right end of sidewall 118 and a flange portion that extends to the left from a left end of sidewall 118. An upper surface of flange 113 is opposed to a part of a surface inside projection 100 (which is called a first inner surface 71 below) in the direction opposite to the direction of pressing-down of upper-surface button (right) 110. First inner surface 71 does not have to be an inner surface of projection 100 itself. The upper surface of flange 113 is located in the direction of pressing-down of upper-surface button (right) 110, with respect to first inner surface 71. Therefore, flange 113 performs a function to prevent upper-surface button (right) 110 from coming off, by being directly or indirectly caught by first inner surface 71.

The outer peripheral surface of sidewall 118 is opposed to a part of the surface inside projection 100 (which is called a second inner surface 72 below) in the left-right direction. Second inner surface 72 does not have to be the inner surface of projection 100 itself. The outer peripheral surface of sidewall 118 is located in a direction perpendicular to the direction of pressing-down of upper-surface button (right) 110, with respect to second inner surface 72.

First input device 1 includes a first elastically deformable body 52 between the upper surface of flange 113 and first inner surface 71. First elastically deformable body 52 is elastically deformed by application of force and elastically returns by removal of application of force. A material for first elastically deformable body 52 is not particularly limited, and for example, rubber may be employed.

First elastically deformable body 52 may be fixed to first inner surface 71. First elastically deformable body 52 may be fixed to first inner surface 71, for example, with the use of an adhesive material or by being matched with a hole provided in first inner surface 71.

When upper-surface button (right) 110 is located at the initial position, first elastically deformable body 52 is in contact with first inner surface 71 and flange 113. At this time, upper-surface button (right) 110 may be maintained at the initial position by balancing between biasing force in the direction opposite to the direction of pressing-down by tact switch 117 or ground connection portion 51 and biasing force in the direction of pressing-down by first elastically deformable body 52. When upper-surface button (right) 110 is located at the initial position, first elastically deformable body 52 may be in contact with only one of first inner surface 71 and flange 113 or neither of them.

First elastically deformable body 52 is located at a side close to second inner surface 72 in the left-right direction, between the outer peripheral surface of sidewall 118 and second inner surface 72. First elastically deformable body 52 is distant from sidewall 118. First elastically deformable body 52 may be in contact with second inner surface 72. First elastically deformable body 52 may be distant from second inner surface 72. In this case, an interval between second inner surface 72 and first elastically deformable body 52 in the left-right direction is smaller than an interval between sidewall 118 and first elastically deformable body 52. In another manner, first elastically deformable body 52 may be provided at a side close to sidewall 118.

When first input device 1 is attached to main body apparatus 3, upper-surface button (right) 110 is attracted to first game-device-side magnetic element 410. Fig. 14 is a schematic cross-sectional view showing a state in which upper-surface button (right) 110 is attracted to first game-device-side magnetic element 410.

As shown in Fig. 14, while first input device 1 is attached to main body apparatus 3, upper-surface button (right) 110 and first game-device-side magnetic element 410 are opposed to each other. Upper-surface button (right) 110 is comprised of a soft magnetic material in the present embodiment. Therefore, when first game-device-side magnetic element 410 comes closer to upper-surface button (right) 110, upper-surface button (right) 110 is pulled by magnetic force toward first game-device-side magnetic element 410. Force in the direction opposite to the direction of pressing-down is then applied to upper-surface button (right) 110. At this time, first elastically deformable body 52 located between flange 113 and first inner surface 71 is pushed in a direction toward first inner surface 71 by flange 113 to experience elastic deformation in which the first elastic deformable body contracts in the direction opposite to the direction of pressing-down. Consequently, upper-surface button (right) 110 is moved in the direction opposite to the direction of pressing-down. In other words, upper-surface button (right) 110 is moved in the direction opposite to the direction of pressing-down from the initial position which is a position where the upper-surface button (right) has not been pressed down by the user. The direction of pressing-down is, for example, third direction R3. The direction opposite to the direction of pressing-down is, for example, first direction R1.

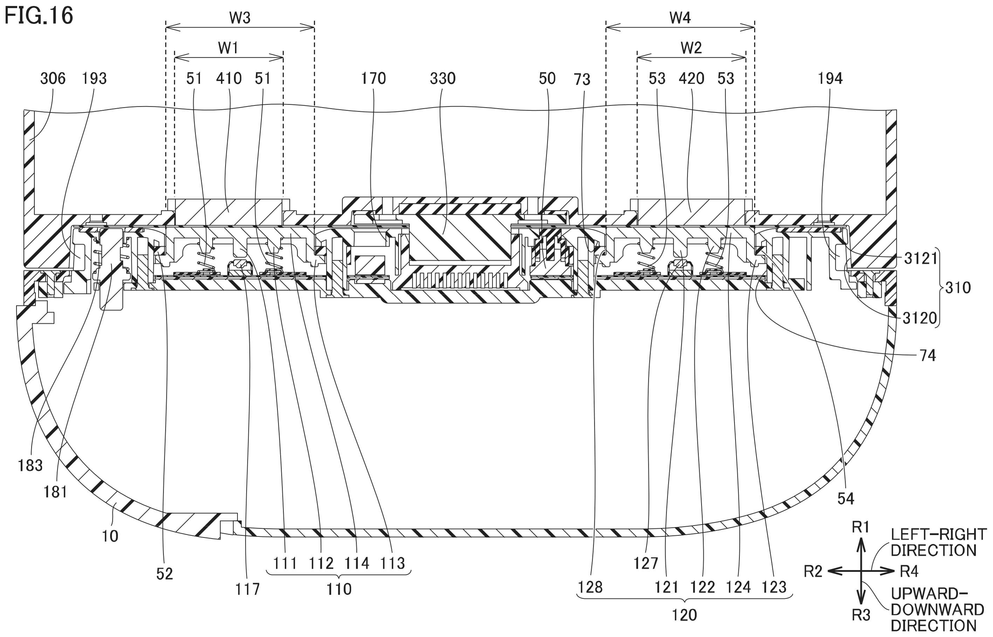

Upper-surface button (left) 120 is also similar in configuration to upper-surface button (right) 110. Tact switch 127 is located below upper-surface button (left) 120, and tact switch 127 is biased in the direction opposite to the direction of pressing-down at least while upper-surface button (left) 120 is pressed down. Upper-surface button (left) 120 includes a main body portion 124, a sidewall 128, and a flange 123 (see Fig. 16). A second elastically deformable body 54 is arranged between an upper surface of flange 123 and a first inner surface 73. Second elastically deformable body 54 may be fixed to first inner surface 73. Second elastically deformable body 54 may be located at a side close to a second inner surface 74 in the left-right direction, between an outer peripheral surface of sidewall 128 and second inner surface 74.

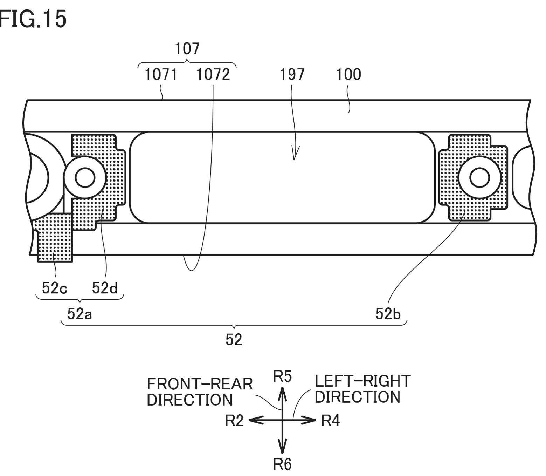

Fig. 15 is a schematic diagram when the top surface 106 direction is viewed from the inside of projection 100 and a schematic plan view showing a configuration of first elastically deformable body 52. Fig. 15 shows first elastically deformable body 52 and projection 100. First elastically deformable body 52 includes a first elastic portion 52a and a second elastic portion 52b. Second elastic portion 52b is distant from first elastic portion 52a. In the left-right direction, first elastic portion 52a is located at the side of second direction R2 relative to fifth opening 197. In the left-right direction, second elastic portion 52b is located at the side of fourth direction R4 relative to fifth opening 197.

A part of first elastically deformable body 52 projects from outer peripheral surface 107 of projection 100. Specifically, first elastic portion 52a is provided to project outward from the inside of projection 100 through an opening located in outer peripheral surface 107 of projection 100. Second elastic portion 52b is provided inside projection 100 and does not have to project outward. The opening through which first elastically deformable body 52 projects may be provided in outer peripheral surface 107 of projection 100, by a notch located in projection 100 and upper side surface 11.

First elastic portion 52a includes a first elastic area 52c and a second elastic area 52d. In the upward-downward direction, first elastic area 52c is located below second elastic area 52d. In the left-right direction, first elastic area 52c may be located at the side of second direction R2 relative to second elastic area 52d. A part of first elastic area 52c projects from outer peripheral surface 107 of projection 100. Second elastic area 52d is located inside projection 100.

As shown in Figs. 10 and 12, first elastically deformable body 52 is located at outer peripheral surface 107 at the side of rear surface 16. From another point of view, first elastically deformable body 52 projects in sixth direction R6 from outer peripheral surface 107 of projection 100. Therefore, in the vertically held state or the horizontally held state, it is difficult for the user who faces front surface 15 of first input device 1 to visually recognize first elastically deformable body 52. First elastically deformable body 52 may be located at outer peripheral surface 107, also at the side of front surface 15 or only at the side of front surface 15.

When projection 100 is matched with game-device-side recess 310, outer peripheral surface 107 and game-device-side inner peripheral surface 3120 are opposed to each other. At this time, first elastically deformable body 52 located at outer peripheral surface 107 may be in contact with opposing game-device-side inner peripheral surface 3120. Thus, projection 100 is more securely attached to game-device-side recess 310. More specifically, game-device-side inner peripheral surface 3120 opposed to the rear surface side of outer peripheral surface 107 comes in contact with first elastically deformable body 52, so that projection 100 is biased in the front direction by game-device-side inner peripheral surface 3120 with first elastically deformable body 52 being interposed. Consequently, the front surface side of outer peripheral surface 107 of projection 100 is pressed against opposing game-device-side inner peripheral surface 3120 and attachment becomes secure.

Since first elastically deformable body 52 is elastically deformable, in matching projection 100 with game-device-side recess 310, the first elastically deformable body is elastically deformed to contract in the front-rear direction and lowering in ease in attachment is suppressed. Furthermore, in the present embodiment, first elastically deformable body 52 is exposed at the root of outer peripheral surface 107. In other words, projecting first elastically deformable body 52 is adjacent to upper side surface 11. From another point of view, a position of the upper end of the first elastically deformable body is lower than the top surface of projection 100. Therefore, in insertion of projection 100 into game-device-side recess 310, a portion of outer peripheral surface 107 where first elastically deformable body 52 is not located initially enters game-device-side recess 310. In other words, at the beginning of insertion, first elastically deformable body 52 does not come in contact with game-device-side inner peripheral surface 3120. Therefore, lowering in ease in attachment is suppressed.

Second elastically deformable body 54 may also partially project through an opening located in the outer peripheral surface of projection 100, similarly to first elastically deformable body 52. Second elastically deformable body 54 may project from the surface of outer peripheral surface 107 the same as the surface from which first elastically deformable body 52 projects. First elastically deformable body 52 and second elastically deformable body 54 may both project from the rear surface side of outer peripheral surface 107.

As shown in Figs. 10 to 13, top surface 106 of projection 100 includes areas different in height from upper side surface 11. Top surface 106 of projection 100 includes a first area 101, a second area 102, a third area 103, a fourth area 104, and a fifth area 105.

First area 101 is an area in a housing where upper-surface button (right) 110 is located, the housing forming top surface 106 of projection 100. Upper-surface button (right) 110 is provided to pass through fifth opening 197 located in first area 101. Similarly, second area 102 is an area where upper-surface button (left) 120 is located. Upper-surface button (left) 120 is provided to pass through a sixth opening 198 located in second area 102.

As shown in Fig. 11, third area 103 is an area of the housing including top surface 106 in one end area of projection 100, the housing forming top surface 106 of projection 100. From another point of view, third area 103 is contiguous to the end surface at the side of second direction R2 of outer peripheral surface 107 of projection 100. Third area 103 is an area located at the side of first direction R1 relative to each of first area 101 and second area 102. In the longitudinal direction of projection 100, a length of third area 103 may be shorter than a length of each of first area 101 and second area 102.

Third area 103 is provided with first cushion member 191. More specifically, as shown in Fig. 13, first cushion member 191 is arranged in a recess provided in third area 103. A part of first cushion member 191 is exposed to the outside of the recess. Third area 103 may be flat, without being provided with a recess. First cushion member 191 may be placed on a flat surface in the third area.

As shown in Fig. 11, fifth area 105 is an area of the housing including top surface 106 in the other end area of projection 100, the housing forming top surface 106 of projection 100. From another point of view, fifth area 105 is contiguous to an end surface at the side of fourth direction R4 of outer peripheral surface 107 of projection 100. Fifth area 105 is an area located at the side of first direction R1 relative to each of first area 101 and second area 102. In the longitudinal direction of projection 100, a length of fifth area 105 may be shorter than the length of each of first area 101 and second area 102.

Fifth area 105 is provided with second cushion member 192. Second cushion member 192 is arranged in a recess provided in fifth area 105. A part of second cushion member 192 is exposed to the outside of the recess. Fifth area 105 may be flat, without being provided with a recess. Second cushion member 192 may be placed on a flat surface in the fifth area. First cushion member 191, 192 can be concluded as raising up the height of projection 100 from upper side surface 11.

Fourth area 104 is an area of the housing located between first area 101 and second area 102 in the longitudinal direction of top surface 106, the housing forming top surface 106 of projection 100. The fourth area is provided with terminal opening 196 and a synchronization button opening 195.

Third area 103 is located at a side of the projection direction relative to fourth area 104. Fifth area 105 is located at a side of the projection direction relative to fourth area 104.

In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

As shown in Fig. 13, a height of first area 101 from upper side surface 11 is expressed as a first height T1. From another point of view, a distance from upper side surface 11 to first area 101 in the upward-downward direction is expressed as first height T1. Similarly, a height of second area 102 from upper side surface 11 is expressed as a second height T2. From another point of view, a distance from upper side surface 11 to second area 102 in the upward-downward direction is expressed as second height T2. Though first height T1 is the same as second height T2 in the present embodiment, they may be different from each other. First area 101 and second area 102 may be provided from one end to the other end of top surface 106 in a direction perpendicular to the longitudinal direction of projection 100.

A height of third area 103 from upper side surface 11 is expressed as a third height T3. From another point of view, a distance from upper side surface 11 to third area 103 in the upward-downward direction is expressed as third height T3. Similarly, a height of fifth area 105 from upper side surface 11 is expressed as a fifth height T5. From another point of view, a distance from upper side surface 11 to fifth area 105 in the upward-downward direction is expressed as fifth height T5.

Though third height T3 is the same as fifth height T5 in the present embodiment, they may be different from each other. Though third height T3 and fifth height T5 are higher than first height T1 and second height T2 in the present embodiment, the former may be the same as or lower than the latter. Third area 103 and fifth area 105 may be provided from one end to the other end of top surface 106 in the direction perpendicular to the longitudinal direction of projection 100.

A height of fourth area 104 from upper side surface 11 is expressed as a fourth height T4. From another point of view, a distance from upper side surface 11 to fourth area 104 in the upward-downward direction is expressed as fourth height T4. Though fourth height T4 is higher than first height T1 and second height T2 in the present embodiment, the former may be the same as or lower than the latter. Though fourth height T4 is lower than third height T3 and fifth height T5 in the present embodiment, the former may be the same as or higher than the latter. Fourth area 104 may be provided from one end to the other end of top surface 106 in the direction perpendicular to the longitudinal direction of projection 100.

A height of the top surface of first cushion member 191 from upper side surface 11 is expressed as a sixth height T6. From another point of view, a distance from upper side surface 11 to the top surface of first cushion member 191 in the upward-downward direction is expressed as sixth height T6. Similarly, a height of the top surface of second cushion member 192 from upper side surface 11 is expressed as a seventh height T7. From another point of view, a distance from upper side surface 11 to the top surface of second cushion member 192 in the upward-downward direction is expressed as seventh height T7.

A height of operation surface 115 from upper side surface 11 at the time when upper-surface button (right) 110 is located at the initial position is expressed as an eighth height T8. From another point of view, a distance from upper side surface 11 to operation surface 115 in the upward-downward direction is expressed as eighth height T8. Similarly, a height of operation surface 125 from upper side surface 11 at the time when upper-surface button (left) 120 is located at the initial position is expressed as a ninth height T9. From another point of view, a distance from upper side surface 11 to operation surface 125 in the upward-downward direction is expressed as ninth height T9.

As shown in Figs. 13 and 14, upper-surface button (right) 110 is movable upward. As shown in Fig. 14, the height of operation surface 115 from upper side surface 11 at the time when upper-surface button (right) 110 is attracted to first game-device-side magnetic element 410 and is in contact with game-device-side bottom surface 3121 is expressed as a tenth height T10. Similarly, a height of operation surface 125 from upper side surface 11 at the time when upper-surface button (left) 120 is attracted to second game-device-side magnetic element 420 and is in contact with game-device-side bottom surface 3121 is expressed as an eleventh height T11.

### <Connection Structure>

Fig. 16 is a schematic cross-sectional view showing a state in which the input device is attached to main body apparatus 3. The schematic cross-sectional view shown in Fig. 16 is in parallel to each of the left-right direction and the upward-downward direction.

As shown in Fig. 16, projection 100 of first input device 1 is matched with game-device-side recess 310 in main body apparatus 3. Upper-surface button (right) 110 is configured to be attracted to first game-device-side magnetic element 410 by magnetic force. In the left-right direction, a length (a third length W3) of the top surface of upper-surface button (right) 110 is longer than a length (a first length W1) of first game-device-side magnetic element 410. Attraction to first game-device-side magnetic element 410 is achieved by magnetic force. Upper-surface button (left) 120 is configured to be attracted to second game-device-side magnetic element 420 by magnetic force. In the left-right direction, a length (a fourth length W4) of the top surface of upper-surface button (left) 120 is longer than a length (a second length W2) of second game-device-side magnetic element 420. Upper-surface button (left) 120 further includes a first protruding portion 121 and a second protruding portion 122.

### <Removal Mechanism>

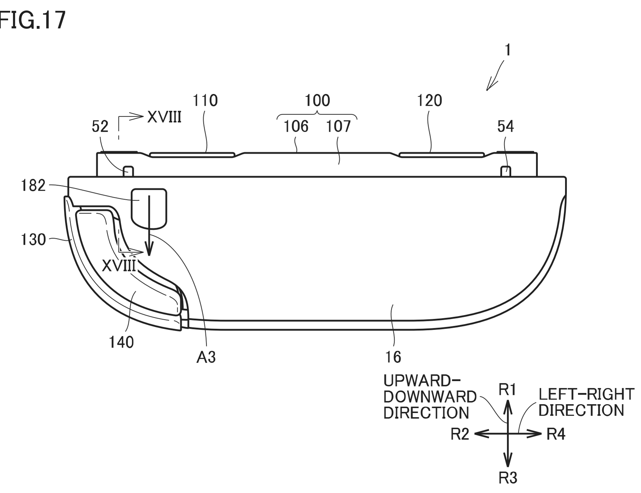

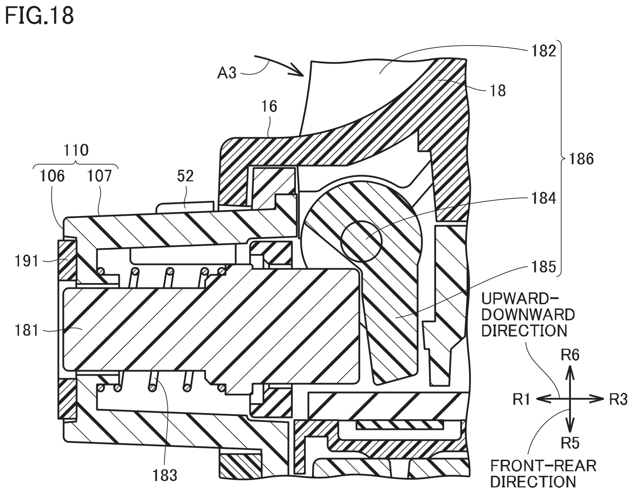

Fig. 17 is a schematic rear view showing the configuration of the input device. Fig. 18 is a schematic cross-sectional view along the line XVIII-XVIII in Fig. 17. As shown in Fig. 18, first input device 1 includes a pusher 181, a pusher operation member 186, and a biasing portion 183, which implement a removal mechanism. Pusher operation member 186 includes operation portion 182, a pusher actuation portion 185, and a rotation shaft 184.

As the user operates operation portion 182, pusher 181 projects from top surface 106 of projection 100. While first input device 1 is attached to main body apparatus 3, projected pusher 181 pushes game-device-side bottom surface 3121 of game-device-side recess 310. As pusher 181 pushes game-device-side bottom surface 3121, top surface 106 of projection 100 moves in a direction away from game-device-side bottom surface 3121. First input device 1 rotates, with an end opposite to an end where pusher 181 is located being defined as the fulcrum. As set forth above, first input device 1 can readily be removed from main body apparatus 3.

Pusher 181 may project from a side at the right of operation portion 182 in the longitudinal direction of projection 100. In the longitudinal direction of projection 100, the center of pusher 181 may be located at the right of the center of operation portion 182. Pusher 181 may project from the side at the right of first elastically deformable body 52 in the longitudinal direction of projection 100. In the longitudinal direction of projection 100, the center of pusher 181 may be located at the right of the center of first elastically deformable body 52.

An amount of projection of pusher 181 may be such magnitude that operation surface 115 of upper-surface button (right) 110 is distant from the surface of cover member 338 that forms bottom surface 3121 of recess 310 as a result of projection of pusher 181. From another point of view, the amount of projection of pusher 181 may be such magnitude that operation surface 115 of upper-surface button (right) 110 is distant from the surface of cover member 338 that forms bottom surface 3121 of recess 310 even when upper-surface button (right) 110 is attracted to first game-device-side magnetic element 410 to move upward to a maximum extent. First input device 1 can thus readily be removed from main body apparatus 3. The amount of projection of pusher 181 may be such magnitude that at least a part of operation surface 125 of upper-surface button (left) 120 is not distant from the surface of cover member 338. Sudden removal of first input device 1 from main body apparatus 3 can thus be suppressed.

The amount of projection of pusher 181 may be such magnitude that a right end (an end on a side of second direction R2 in Fig. 11) of top surface 106 of projection 100 is exposed in the opening of recess 310 as a result of projection of pusher 181. The amount of projection of pusher 181 may be such magnitude that the right end of top surface 106 is not exposed in the opening of recess 310 even when pusher 181 projects. Alternatively, the amount of projection of pusher 181 may be such magnitude that the entire first elastically deformable body 52 exposed at outer peripheral surface 107 of projection 100 is exposed in the opening of recess 310 as a result of projection of pusher 181. Second elastically deformable body 54 exposed at outer peripheral surface 107, on the other hand, may be exposed only in part in the opening of recess 310. Alternatively, the amount of projection of pusher 181 may be such magnitude that light emission portion 150 located at outer peripheral surface 107 is not exposed in the opening of recess 310 even when pusher 181 projects. Alternatively, the amount of projection of pusher 181 may be such magnitude that the right end (the end on the side of second direction R2 in Fig. 11) of upper side surface 11 and an upper end of main body right side surface 313 are distant from each other by a distance, for example, from 0.5 mm to 1 cm as a result of projection of pusher 181. The distance by which they are distant may be, for example, from 1 mm to 5 mm. The distance by which they are distant may be, for example, 2 mm.

As shown in Figs. 17 and 18, operation portion 182 is located, for example, at rear surface 16. Operation portion 182 is arranged as being exposed through an opening provided in rear surface 16. Operation portion 182 is operated by the user. Operation portion 182 is operated in a direction shown with an arrow A3. The direction shown with arrow A3 is a direction of rotation from main body right side surface 313 to the right and from the rear surface side of main body apparatus 3 toward the front surface. From another point of view, the direction shown with arrow A3 is a direction of rotation in fifth direction R5 while it is directed to third direction R3 in first input device 1. Operation portion 182 may be configured to be operated in a direction in parallel to third direction R3. Fig. 18 shows a state (natural state) before operation portion 182 is operated.

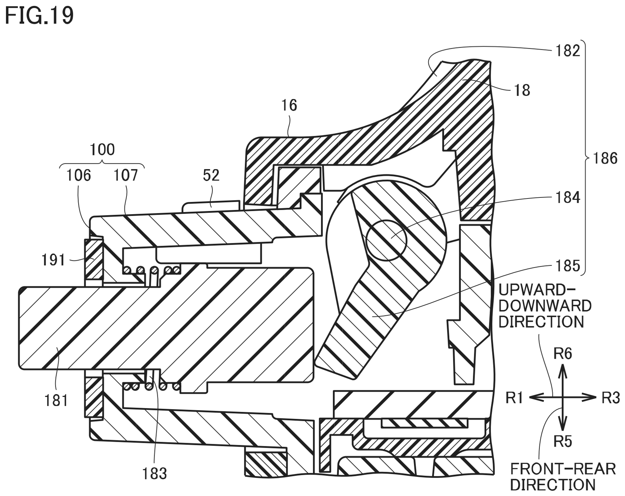

Fig. 19 is a schematic cross-sectional view showing a state in which operation portion 182 is operated. Rotation shaft 184 rotates together with pusher actuation portion 185 as a result of operation on operation portion 182. Pusher actuation portion 185 has pusher 181 project.

Before operation portion 182 is operated, pusher 181 is arranged inside projection 100. Biasing portion 183 biases pusher 181 in third direction R3. Biasing portion 183 is implemented, for example, by a coil spring. As the user operates operation portion 182 in third direction R3, rotation shaft 184 rotates together with each of operation portion 182 and pusher actuation portion 185 and pusher actuation portion 185 pushes pusher 181 in first direction R1. A part of pusher 181 projects from projection 100. As the user removes his/her hand from operation portion 182, biasing portion 183 extends and pusher 181 moves in third direction R3. Pusher 181 thus returns to a position in the natural state.

As shown in Figs. 18 and 19, operation portion 182 is operated at least in third direction R3. In the present example, operation portion 182 is rotationally operated in a direction including third direction R3 and fifth direction R5. In other words, the direction of operation on operation portion 182 is third direction R3 (a direction away from upper side surface 11) when viewed in the rear direction of first input device 1 and fifth direction R5 (the direction toward the rear surface) when viewed in the side direction. When operation portion 182 is operated in third direction R3, pusher 181 is moved in first direction R1. From another point of view, pusher 181 is moved toward the side opposite to the direction of operation on operation portion 182.

### <Mouse>

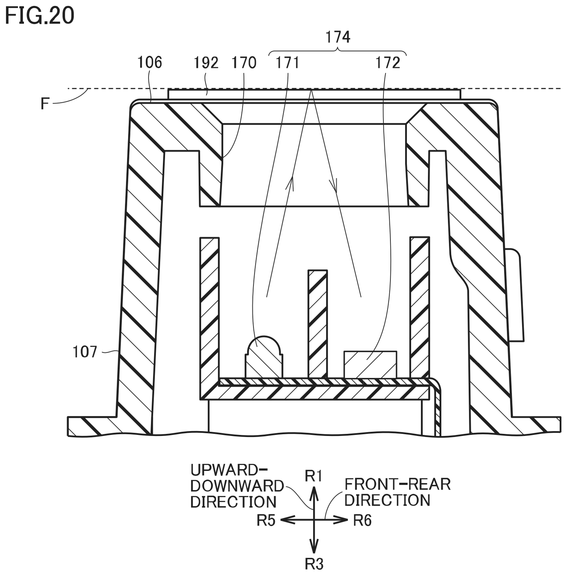

Fig. 20 is a schematic cross-sectional view showing only the projection along the line XX-XX in Fig. 11. As shown in Fig. 20, first input device 1 includes a mouse operation sensor 174. Mouse operation sensor 174 is arranged inside projection 100. Mouse operation sensor 174 is, for example, an optical sensor. Mouse operation sensor 174 includes, for example, a light source 171 and a light reception sensor 172. Input device 1 may include in first opening 170, a lens that condenses light emitted from light source 171 and/or light guided to light reception sensor 172.

As shown in Fig. 20, light source 171 emits light. Light may be, for example, red light, blue light, or laser beams. A wavelength of light is not particularly limited. Light from light source 171 irradiates a tracking surface F through first opening 170. Light reception sensor 172 detects reflection by tracking surface F, of light radiated from light source 171, reflected light being varied with movement of input device 1 relative to tracking surface F and introduced through first opening 170. Second input device 2 which will be described later is also similarly configured.

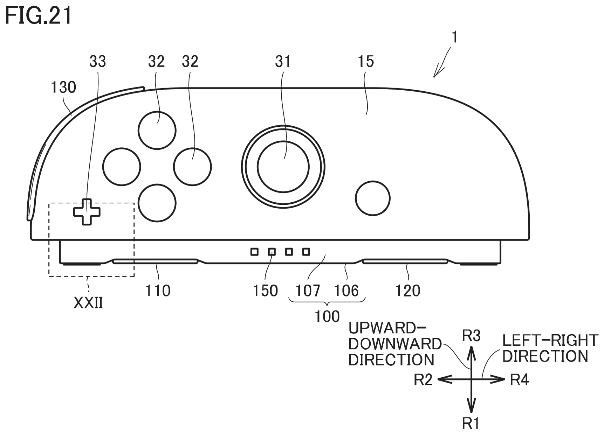

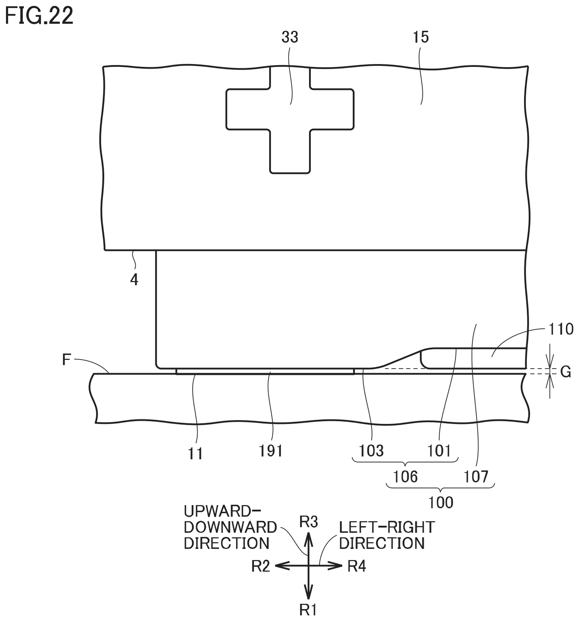

Fig. 21 is a schematic front view showing a configuration of input device 1. Fig. 21 shows a posture when input device 1 is used as the mouse. Fig. 22 is an enlarged schematic diagram of an area XXII in Fig. 21. As shown in Fig. 22, when input device 1 is placed on tracking surface F such that top surface 106 of projection 100 is opposed to tracking surface F, first cushion member 191 comes in contact with tracking surface F. Though not shown, second cushion member 192 also comes in contact with tracking surface F. Each of first cushion member 191 and second cushion member 192 performs a function as a mouse skate. A material for first cushion member 191 may be the same as or different from a material for the second cushion member. First button 110 is distant from tracking surface F. The top surface of first button 110 is located at the side of third direction R3 relative to the top surface of first cushion member 191. Though tracking surface F is not particularly limited, it is, for example, a surface of a desk. Input device 1 can move over tracking surface F.

First cushion member 191 is located in third area 103. First button 110 is located in first area 101. A thickness of a portion of first cushion member 191 projecting from third area 103 in the upward-downward direction is, for example, 0.2 mm. Third area 103 is distant from tracking surface F. A distance between tracking surface F and third area 103 in the upward-downward direction is, for example, 0.2 mm. A distance G between tracking surface F and the operation surface of first button 110, on the other hand, is, for example, 0.3 mm. In other words, the distance from tracking surface F to the operation surface of first button 110 may be longer than a distance between tracking surface F and third area 103. Though not shown in Fig. 22, fourth area 104 where terminal opening 196 is provided is also distant from tracking surface F.

Being provided with mouse operation sensor 174, input device 1 can also be used as the mouse. First opening 170 is located in top surface 106. Therefore, when input device 1 is placed on tracking surface F such that top surface 106 of projection 100 is opposed to tracking surface F, first opening 170 is located at a position proximate to tracking surface F. Therefore, first opening 170 can effectively take in light reflected by tracking surface F. The mouse operation sensor outputs a signal relating to movement of the input device relative to the tracking surface based on light reflected from the tracking surface through first opening 170.

An information processing unit of main body apparatus 3 may calculate a movement parameter (for example, a direction of movement or a moving distance) relating to movement of input device 1 with respect to tracking surface F based on a result outputted from mouse operation sensor 174. Main body apparatus 3 may perform prescribed game processing based on the determined movement parameter, in an executed program. The movement parameter may be calculated in input device 1 (in mouse operation sensor 174 or an information processing unit included in input device 1) and the calculated parameter may be transmitted to main body apparatus 3. When input device 1 is moved with respect to tracking surface F while it is distant from tracking surface F, accurate measurement of movement of input device 1 with respect to tracking surface F may be disallowed. For example, input device 1 may be configured not to appropriately detect light reflected by tracking surface F for measurement of movement with respect to tracking surface F when top surface 106 of projection 100 is distant from tracking surface F by at least 1 cm, at least 5 mm, or at least 1 mm. By way of example, mouse operation sensor 174 may be designed such that the distance of input device 1 from tracking surface F at which a direction or a distance of movement of input device 1 with respect to tracking surface F can accurately be detected is at most 1 cm, at most 5 mm, or at most 1 mm.

### <Peripheral Device>

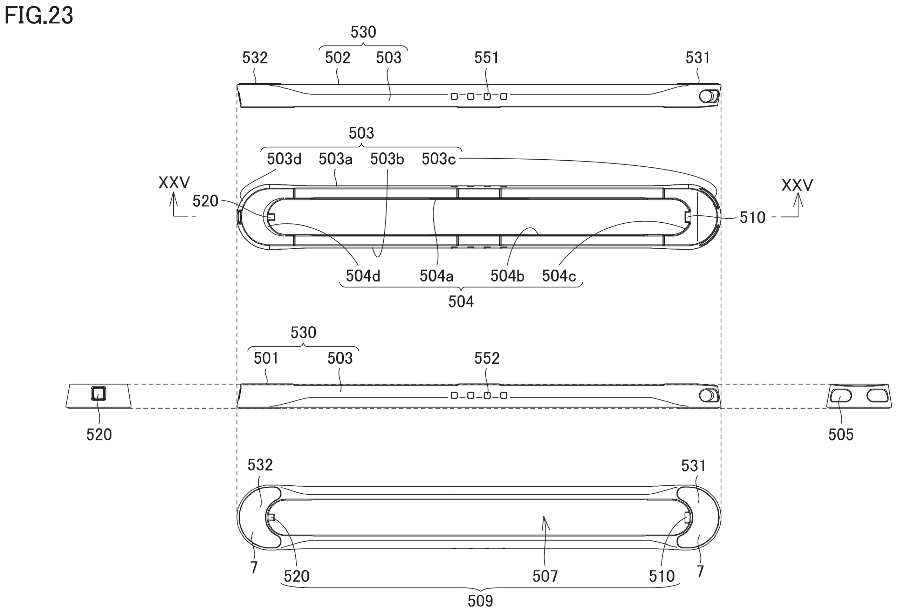

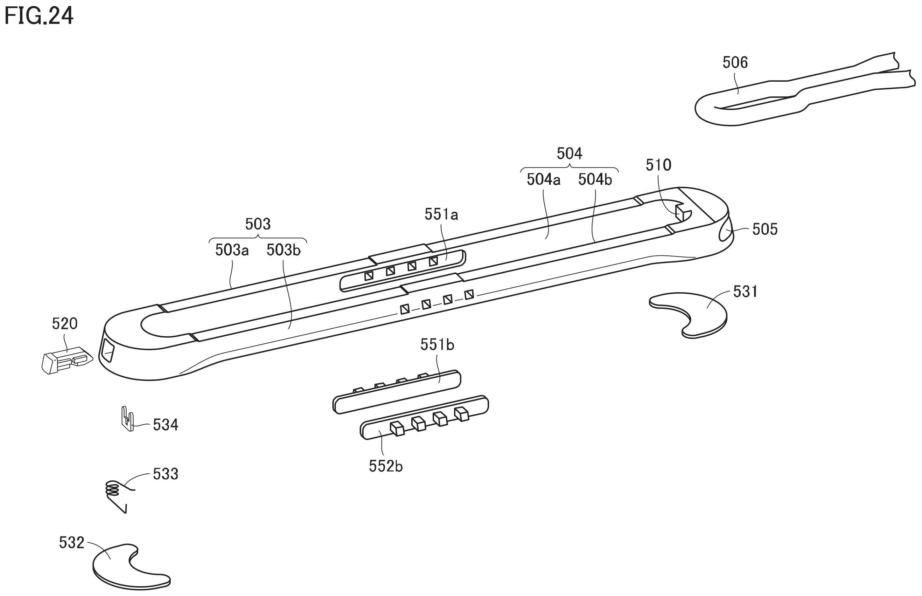

Details of the configuration of the peripheral device according to the first embodiment will now be described. Fig. 23 is a six-view schematic diagram showing the configuration of the peripheral device according to the first embodiment. Fig. 24 is an exploded schematic perspective view showing the configuration of the peripheral device according to the first embodiment.

As shown in Figs. 23 and 24, peripheral device 500 according to the first embodiment is peripheral device 500 to which input device 1 is removably attachable, and includes an attachment portion 509, peripheral device main body portion 530, first mouse skate member 531, second mouse skate member 532, first optical guide path 551, second optical guide path 552, a torsion spring 533, a stopper plate 534, and a strap 506. Attachment portion 509 is provided with hole 507 with which the projection is to be matched, first tab 510, and second tab 520.

Peripheral device main body portion 530 is provided with a main body portion upper surface 501, a main body portion bottom surface 502, a main body portion outer peripheral surface 503, and a main body portion inner peripheral surface 504. Main body portion bottom surface 502 is provided with a contact portion 7. Contact portion 7 is a portion configured to come in contact with tracking surface F when main body portion bottom surface 502 is placed as being opposed to tracking surface F. In the present embodiment, bottom surfaces of first mouse skate member 531 and second mouse skate member 532 form contact portion 7. Main body portion upper surface 501 is located opposite to main body portion bottom surface 502. Main body portion outer peripheral surface 503 is contiguous to each of main body portion upper surface 501 and main body portion bottom surface 502. Main body portion inner peripheral surface 504 is located at an inner side of main body portion outer peripheral surface 503. Main body portion inner peripheral surface 504 is contiguous to each of main body portion upper surface 501 and main body portion bottom surface 502. 507 is defined by main body portion inner peripheral surface 504.

Main body portion inner peripheral surface 504 is provided with a first inner peripheral surface area 504a, a second inner peripheral surface area 504b, a third inner peripheral surface area 504c, and a fourth inner peripheral surface area 504d. Each of first inner peripheral surface area 504a and second inner peripheral surface area 504b extends along the longitudinal direction of peripheral device main body portion 530. First inner peripheral surface area 504a and second inner peripheral surface area 504b are opposed to each other. Third inner peripheral surface area 504c and fourth inner peripheral surface area 504d are located at one longitudinal side and the other longitudinal side of peripheral device main body portion 530, respectively. Third inner peripheral surface area 504c and fourth inner peripheral surface area 504d are opposed to each other. Third inner peripheral surface area 504c is contiguous to each of first inner peripheral surface area 504a and second inner peripheral surface area 504b. Similarly, fourth inner peripheral surface area 504d is contiguous to each of first inner peripheral surface area 504a and second inner peripheral surface area 504b.

Main body portion outer peripheral surface 503 is provided with a first outer peripheral surface area 503a, a second outer peripheral surface area 503b, a third outer peripheral surface area 503c, and a fourth outer peripheral surface area 503d. Each of first outer peripheral surface area 503a and second outer peripheral surface area 503b extends along the longitudinal direction of peripheral device main body portion 530. First outer peripheral surface area 503a is located opposite to first inner peripheral surface area 504a. Second outer peripheral surface area 503b is located opposite to second inner peripheral surface area 504b. Third outer peripheral surface area 503c and fourth outer peripheral surface area 503d are located at one longitudinal side and the other longitudinal side of peripheral device main body portion 530, respectively. Third outer peripheral surface area 503c is located opposite to third inner peripheral surface area 504c. Fourth outer peripheral surface area 503d is located opposite to fourth inner peripheral surface area 504d. Third outer peripheral surface area 503c is contiguous to each of first outer peripheral surface area 503a and second outer peripheral surface area 503b. Similarly, fourth outer peripheral surface area 503d is contiguous to each of first outer peripheral surface area 503a and second outer peripheral surface area 503b.

In peripheral device main body portion 530, a first optical guide member arrangement portion 551a and a second optical guide member arrangement portion (not shown) are formed. Each of first optical guide member arrangement portion 551a and the second optical guide member arrangement portion is defined by a recess located in peripheral device main body portion 530 and a hole located in a bottom surface of the recess. Each of first optical guide member arrangement portion 551a and the second optical guide member arrangement portion may simply be defined by a hole. A first optical guide member 551b is arranged at first optical guide member arrangement portion 551a. First optical guide member 551b and first optical guide member arrangement portion 551a form first optical guide path 551. A second optical guide member 552b is arranged at the second optical guide member arrangement portion. Second optical guide member 552b and the second optical guide member arrangement portion form second optical guide path 552. First optical guide member arrangement portion 551a is formed at first inner peripheral surface area 504a. A part of first optical guide member arrangement portion 551a is open in first outer peripheral surface area 503a. Each of first optical guide member 551b and second optical guide member 552b includes a projecting portion. Projecting portions are inserted in respective holes in first optical guide member arrangement portion 551a and the second optical guide member arrangement portion. The second optical guide member arrangement portion is formed in second inner peripheral surface area 504b. A part of the second optical guide member arrangement portion is open in second outer peripheral surface area 503b. Each of first optical guide member arrangement portion 551a and the second optical guide member arrangement portion and peripheral device main body portion 530 may be formed by two-color molding.

While first input device 1 is attached to peripheral device 500, the user can visually recognize light from light emission portion 150 of first input device 1 through second optical guide path 552. While second input device 2 is attached to peripheral device 500, the user can visually recognize light from a light emission portion 250 of second input device 2 through first optical guide path 551. Since peripheral device 500 includes first optical guide path 551 and second optical guide path 552, the user can visually recognize light from the light emission portion when the peripheral device is attached to any of first input device 1 (right controller) and second input device 2 (left controller). Since light from the light emission portion is guided in the front direction by first optical guide path 551 and second optical guide path 552, light from the light emission portion can be checked in the vertically held state, the horizontally held state, or in a state held as a mouse.

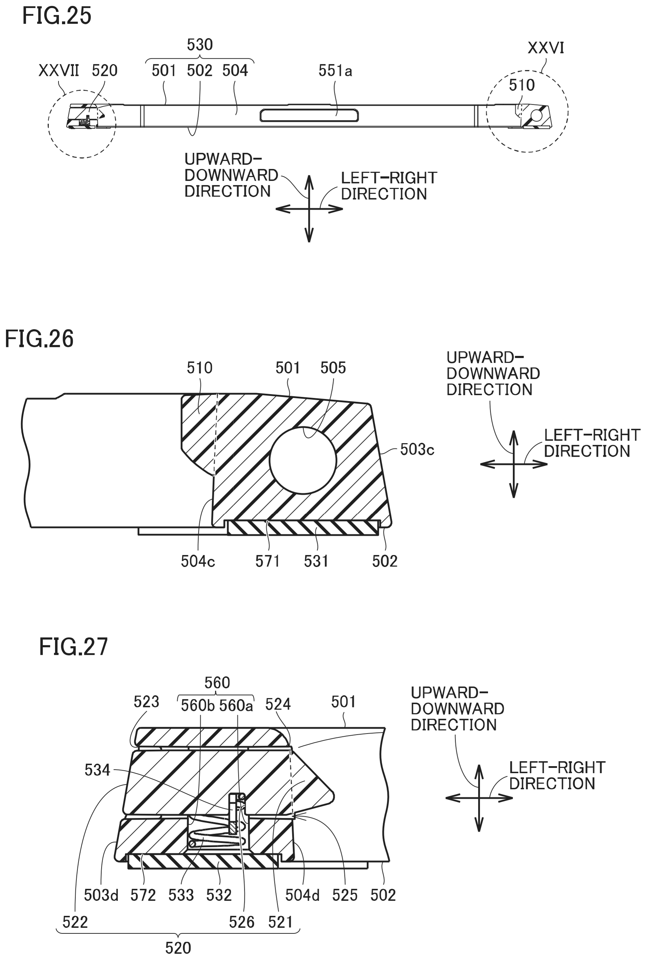

Fig. 25 is a schematic cross-sectional view along the line XXV-XXV in Fig. 23. The cross-section shown in Fig. 25 is in parallel to each of the upward-downward direction and the left-right direction. A direction from main body portion upper surface 501 toward main body portion bottom surface 502 corresponds to the upward-downward direction. The longitudinal direction of peripheral device main body portion 530 corresponds to the left-right direction. The longitudinal direction of hole 507 corresponds to the left-right direction. The direction of the short side of peripheral device main body portion 530 corresponds to the front-rear direction. Fig. 26 is an enlarged schematic diagram of an area XXVI in Fig. 25. As shown in Fig. 26, attachment portion 509 includes first tab 510. First tab 510 is located at peripheral device main body portion 530. First tab 510 is engaged with second engagement hole 194. First tab 510 may be engaged with each of first engagement hole 193 and second engagement hole 194. First tab 510 is formed by raised main body portion inner peripheral surface 504. First tab 510 is immovable with respect to peripheral device main body portion 530. First tab 510 is located in third inner peripheral surface area 504c of peripheral device main body portion 530. First tab 510 projects from third inner peripheral surface area 504c into hole 507. First tab 510 may be in a projecting shape. First tab 510 may be separate from peripheral device main body portion 530 and may immovably be fixed to peripheral device main body portion 530.

Peripheral device main body portion 530 includes a strap attachment portion 505. Strap attachment portion 505 is a hole in which strap 506 is to be inserted. Strap attachment portion 505 is located at a longitudinally outer side (laterally outer side) of hole 507 and at a side where first tab 510 is located. Strap attachment portion 505 is located opposite to second tab 520 with respect to first tab 510. Strap attachment portion 505 is open in third outer peripheral surface area 503c (see Fig. 23).

As shown in Fig. 26, in the cross-section in parallel to each of the upward-downward direction and the left-right direction, third outer peripheral surface area 503c is inclined toward hole 507 with distance from main body portion bottom surface 502 with respect to a straight line perpendicular to main body portion bottom surface 502. In the left-right direction, main body portion bottom surface 502 is larger in width than main body portion upper surface 501. Main body portion bottom surface 502 is provided with a first mouse skate member arrangement portion 571. First mouse skate member arrangement portion 571 is a recess provided in main body portion bottom surface 502. First mouse skate member 531 is arranged at first mouse skate member arrangement portion 571.

Fig. 27 is an enlarged schematic diagram of an area XXVII in Fig. 25. As shown in Fig. 27, peripheral device main body portion 530 includes a second tab arrangement portion 525. Second tab arrangement portion 525 is a hole where second tab 520 is located. Second tab arrangement portion 525 extends along the left-right direction. Second tab arrangement portion 525 is provided with a third opening 523 and a fourth opening 524. Third opening 523 is an opening portion of a hole provided in fourth outer peripheral surface area 503d. Fourth opening 524 is an opening portion of a hole provided in fourth inner peripheral surface area 504d.

Second tab 520 is engaged with first engagement hole 193. Second tab 520 is movable or deformable. Second tab 520 is provided with a tab portion 521 configured to be engaged with at least the other of first engagement hole 193 and second engagement hole 194 and a second tab end portion 522 located opposite to tab portion 521. In third opening 523 and fourth opening 524, second tab 522 is exposed. More specifically, in third opening 523, second tab end portion 522 is exposed. In fourth opening 524, tab portion 521 which is a portion opposite to second tab end portion 522 is exposed. Second tab 520 is provided with a notch 526. In the left-right direction, notch 526 is located between tab portion 521 and second tab end portion 522. Stopper plate 534 is located in notch 526.

As shown in Fig. 27, in the cross-section in parallel to each of the upward-downward direction and the left-right direction, fourth outer peripheral surface area 503d is inclined toward hole 507 with distance from main body portion bottom surface 502 with respect to the straight line perpendicular to main body portion bottom surface 502. Second tab end portion 522 extends along fourth outer peripheral surface area 503d. From another point of view, second tab end portion 522 is inclined toward hole 507 with distance from main body portion bottom surface 502 with respect to the straight line perpendicular to main body portion bottom surface 502.

As shown in Fig. 27, peripheral device main body portion 530 is provided with a third hole 560. In third hole 560, torsion spring 533 and stopper plate 534 are located. Main body portion bottom surface 502 is provided with a second mouse skate member arrangement portion 572. Second mouse skate member arrangement portion 572 is a recess provided in main body portion bottom surface 502. Second mouse skate member 532 is located in second mouse skate member arrangement portion 572.

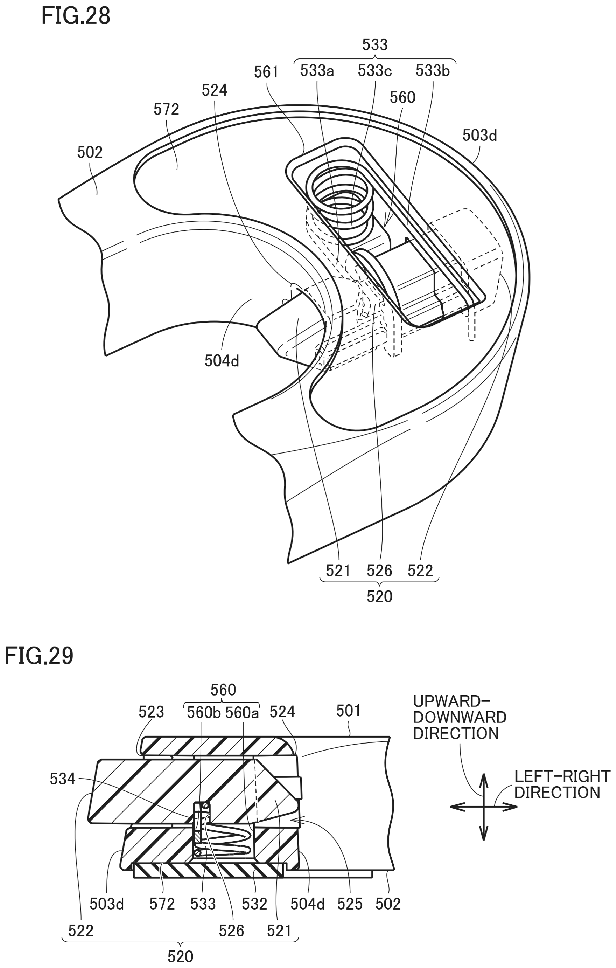

Fig. 28 is a schematic perspective view showing a state in which second mouse skate member 532 has been removed. As shown in Fig. 27, peripheral device main body portion 530 is provided with a second opening 561. Second opening 561 is an opening of third hole 560. Second opening 561 is open in second mouse skate member arrangement portion 572 located in main body portion bottom surface 502. Second opening 561 is closed by second mouse skate member 532. Third hole 560 is contiguous to second tab arrangement portion 525. Second tab arrangement portion 525 is an internal space where second tab 520 is movable. Second opening 561 communicates with second tab arrangement portion 525. Torsion spring 533 includes a first spring end portion 533a, a second spring end portion 533b, and a coil spring portion 533c. Second spring end portion 533b is located opposite to first spring end portion 533a. First spring end portion 533a is contiguous to one end of coil spring portion 533c. Second spring end portion 533b is contiguous to the other end of coil spring portion 533c.

Coil spring portion 533c is arranged at a position distant from second tab 520 in the front-rear direction. First spring end portion 533a comes in contact with second tab 520 in notch 526. Stopper plate 534 is substantially in a U shape. Stopper plate 534 is attached to second tab 520 in notch 526. Stopper plate 534 encloses second tab 520. In the left-right direction, stopper plate 534 is located between first spring end portion 533a and second spring end portion 533b. Second spring end portion 533b comes in contact with an inner peripheral surface of third hole 560.

The state shown in Figs. 27 and 28 is a state in which force is not externally applied to second tab 520 (which is also called a first state). As shown in Fig. 27, third hole 560 is provided with a first sidewall surface portion 560a and a second sidewall surface portion 560b. Each of first sidewall surface portion 560a and second sidewall surface portion 560b is substantially perpendicular to the left-right direction. In the left-right direction, first sidewall surface portion 560a is located between second sidewall surface portion 560b and fourth inner peripheral surface area 504d. In the left-right direction, second sidewall surface portion 560b is located between first sidewall surface portion 560a and fourth outer peripheral surface area 503d. Second spring end portion 533b comes in contact with second sidewall surface portion 560b.

In the first state, stopper plate 534 is distant from each of first sidewall surface portion 560a and second sidewall surface portion 560b. In the left-right direction, stopper plate 534 is located closer to first sidewall surface portion 560a than a position intermediate between first sidewall surface portion 560a and second sidewall surface portion 560b.

In the first state, at least a part of tab portion 521 is located at the outer side of second tab arrangement portion 525. Tab portion 521 projects into hole 507. Tab portion 521 passes through fourth opening 524. Second tab end portion 522 is located in third opening 523. Second tab end portion 522 may be located inside second tab arrangement portion 525.

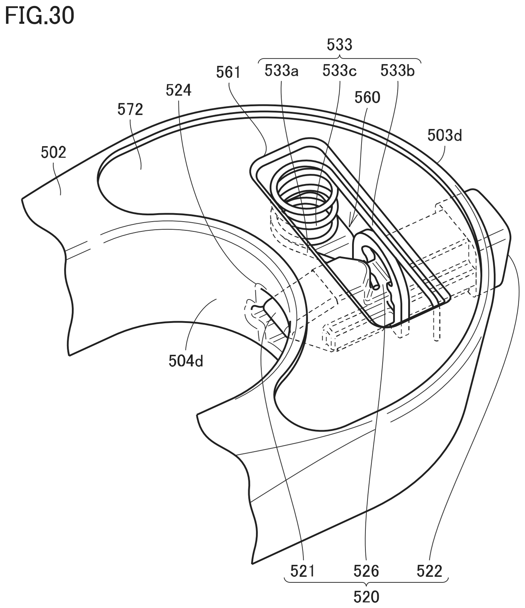

An operation of second tab 520 will now be described. A state shown in Figs. 29 and 30 is a state in which force is externally applied to second tab 520 (which is also called a second state). For example, in the middle of matching of projection 100 of input device 1 with hole 507, second tab 520 is temporarily pushed outward in the left-right direction by projection 100. Fig. 29 is a schematic cross-sectional view showing the second state. Fig. 30 is a schematic perspective view showing the second state. Areas shown in Figs. 29 and 30 correspond to areas shown in Figs. 27 and 28, respectively.

As shown in Figs. 29 and 30, when force is externally applied to tab portion 521 of second tab 520, second tab 520 moves in a direction from fourth inner peripheral surface area 504d toward fourth outer peripheral surface area 503d. Tab portion 521 moves in a direction from the outside to the inside of second tab arrangement portion 525. Second tab end portion 522 moves in a direction from the inside toward the outside of second tab arrangement portion 525. Stopper plate 534 moves in a direction from first sidewall surface portion 560a toward second sidewall surface portion 560b. As stopper plate 534 comes in contact with second sidewall surface portion 560b, movement of second tab 520 stops.

As shown in Fig. 29, while stopper plate 534 comes in contact with second sidewall surface portion 560b, second tab end portion 522 is located outside second tab arrangement portion 525. While stopper plate 534 comes in contact with second sidewall surface portion 560b, tab portion 521 is located inside second tab arrangement portion 525. The entire tab portion 521 may be located inside second tab arrangement portion 525, or a most part of tab portion 521 may be located inside second tab arrangement portion 525 and only the tip end of tab portion 521 may be located outside second tab arrangement portion 525.

As shown in Figs. 29 and 30, in the second state, first spring end portion 533a moves in the direction from fourth inner peripheral surface area 504d toward fourth outer peripheral surface area 503d. In the second state, first spring end portion 533a has elastically been deformed. Therefore, when force is no longer externally applied to second tab 520, first spring end portion 533a returns to the position in the first state. Second tab 520 moves in the direction from fourth outer peripheral surface area 503d toward fourth inner peripheral surface area 504d (see Figs. 27 and 28).

Second spring end portion 533b comes in contact with second sidewall surface portion 560b also in the second state.

Though an example in which second tab end portion 522 is exposed in fourth outer peripheral surface area 503d is described above, second tab end portion 522 does not have to be exposed in fourth outer peripheral surface area 503d. Specifically, third opening 523 in second tab arrangement portion 525 may be buried. Though second tab arrangement portion 525 is provided with fourth opening 524, it does not have to be provided with third opening 523.

### <Attachment Method>

A method of attaching peripheral device 500 to input device 1 will now be described. Fig. 31 is a schematic perspective view showing a state before attachment of peripheral device 500 to input device 1. Fig. 32 is a schematic perspective view showing a state after attachment of peripheral device 500 to input device 1.

As shown in Fig. 31, first tab 510 of peripheral device 500 is inserted in second engagement hole 194 in input device 1 along a direction shown with a first arrow S1. In this state, the longitudinal direction of the hole in peripheral device 500 is inclined with respect to the longitudinal direction of projection 100 of input device 1. A part of projection 100 of input device 1 is inserted in the hole in peripheral device 500.

While a state in which first tab 510 of peripheral device 500 is located in second engagement hole 194 in input device 1 is maintained, peripheral device 500 is pivoted in a plane perpendicular to the front-rear direction of input device 1. An end of peripheral device main body portion 530 located opposite to peripheral device main body portion 530 where strap 506 is located is moved in a direction toward input device 1 along a direction shown with a second arrow S2. Projection 100 of input device 1 is thus matched with the hole in peripheral device 500. At the time of insertion, an inclined surface of tab portion 521 of second tab 520 comes in contact with projection 100, so that external force in a direction of pressing second tab 520 into second tab arrangement portion 525 is applied and the second state is set (see Fig. 29). In the second state, second tab end portion 522 projects toward the outer side of second tab arrangement portion 525. Thereafter, first engagement hole 193 and tab portion 521 of second tab 520 are opposed to each other so that second tab 521 returns to the first state (see Fig. 27) and second tab 520 is engaged with first engagement hole 193. In the first state, second tab end portion 522 returns to a position around third opening 523 in second tab arrangement portion 525. Second tab 520 of peripheral device 500 is inserted in first engagement hole 193 in input device 1. Peripheral device 500 is thus attached to input device 1. When the end of peripheral device main body portion 530 located opposite to peripheral device main body portion 530 where strap 506 is located is moved along the direction shown with third arrow S3 which is a direction opposite to second arrow S2, peripheral device 500 is removed from input device 1.

### <State of Attachment>

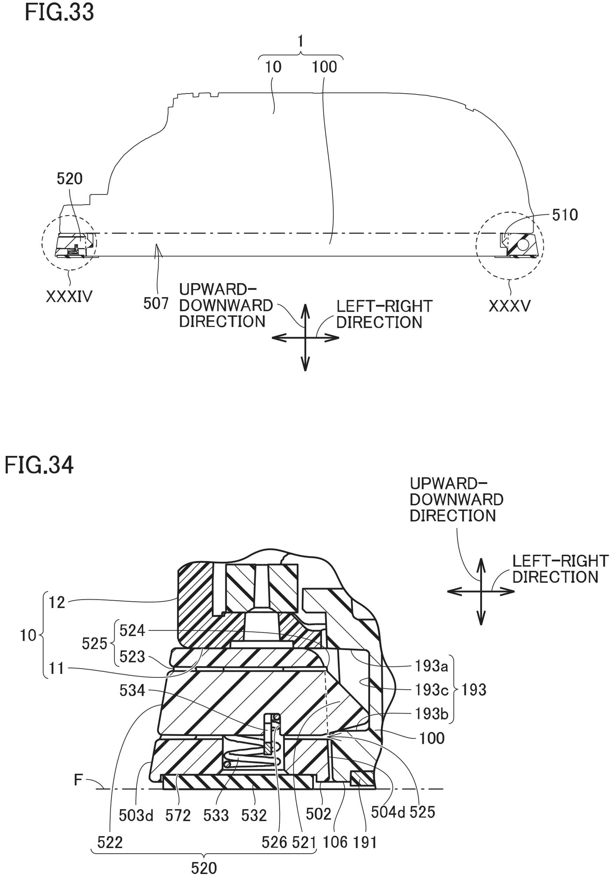

A state of attachment of peripheral device 500 to input device 1 will now be described. Fig. 33 is a partial schematic cross-sectional view showing a state of attachment of peripheral device 500 to input device 1. The cross-section shown in Fig. 33 is perpendicular to the front-rear direction of input device 1. Fig. 33 does not show an internal structure of input device 1. Fig. 34 is an enlarged schematic cross-sectional view of an area XXXIV in Fig. 33.

As shown in Fig. 33, in the longitudinal direction of projection 100 of input device 1, the entire projection 100 is matched with hole 507 in peripheral device 500. Projection 100 of input device 1 is attached to controller housing 10. Peripheral device 500 is attached to input device 1 such that the longitudinal direction of hole 507 in peripheral device 500 extends along the longitudinal direction of projection 100 of input device 1.

As shown in Fig. 34, while peripheral device 500 is attached to input device 1, tab portion 521 of second tab 520 is arranged inside first engagement hole 193 in input device 1. First engagement hole 193 is provided with a first engagement hole bottom surface 193c, a first engagement hole upper surface 193a, and a first engagement hole lower surface 193b. First engagement hole bottom surface 193c is contiguous to each of first engagement hole upper surface 193a and first engagement hole lower surface 193b. Tab portion 521 is in contact with first engagement hole bottom surface 193c. Tab portion 521 is in contact with first engagement hole lower surface 193b. Tab portion 521 is distant from first engagement hole upper surface 193a. Upper side surface 11 of controller housing 10 is in contact with main body portion upper surface 501 of peripheral device 500.

Tab portion 521 does not have to be in contact with first engagement hole bottom surface 193c. Tab portion 521 does not have to be in contact with first engagement hole lower surface 193b. Tab portion 521 may be in contact with first engagement hole upper surface 193a.

In the upward-downward direction, top surface 106 of projection 100 of input device 1 may be located at the same position where main body portion bottom surface 502 of peripheral device 500 is located. While peripheral device 500 is attached to input device 1, first cushion member 191 is distant from tracking surface F. In the upward-downward direction, the top surface of first cushion member 191 is located closer to main body portion upper surface 501 than the contact surface of second mouse skate member 532 in contact with tracking surface F.

As shown in Fig. 34, in the left-right direction, fourth inner peripheral surface area 504d is distant from projection 100. In the left-right direction, second mouse skate member 532 is located at the outer side of top surface 106 of projection 100. Second mouse skate member 532 includes a portion that comes in contact with tracking surface F at the outer side of upper side surface 11 in the plane direction of tracking surface F. Stability in mouse operations can thus further be improved. In the left-right direction, fourth inner peripheral surface area 504d may be in contact with projection 100.

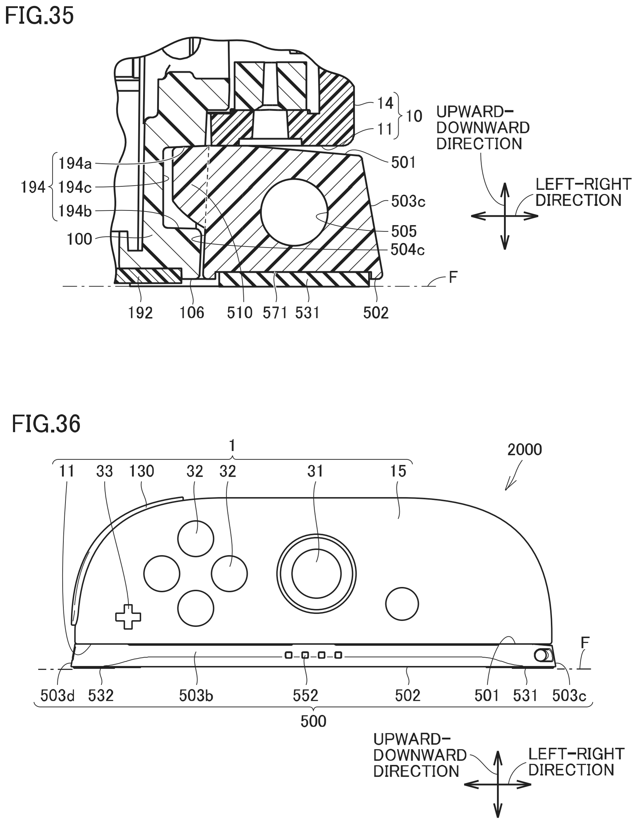

Fig. 35 is an enlarged schematic cross-sectional view of an area XXXV in Fig. 33. As shown in Fig. 35, while peripheral device 500 is attached to input device 1, first tab 510 is arranged inside second engagement hole 194 in input device 1. Second engagement hole 194 is provided with a second engagement hole bottom surface 194c, a second engagement hole upper surface 194a, and a second engagement hole lower surface 194b. Second engagement hole bottom surface 194c is contiguous to each of second engagement hole upper surface 194a and second engagement hole lower surface 194b. First tab 510 is distant from second engagement hole bottom surface 194c. First tab 510 is distant from second engagement hole lower surface 194b. First tab 510 is in contact with second engagement hole upper surface 194a. A part of upper side surface 11 of controller housing 10 is distant from main body portion upper surface 501 of peripheral device 500.

First tab 510 may be in contact with second engagement hole bottom surface 194c. First tab 510 may be in contact with second engagement hole lower surface 194b. First tab 510 does not have to be in contact with second engagement hole upper surface 194a.

As shown in Figs. 34 and 35, when input device 1 is attached to peripheral device 500, first mouse skate member 531 and second mouse skate member 532 come in contact with tracking surface F, however, first cushion member 191 and second cushion member 192 do not come in contact with tracking surface F.

As shown in Fig. 35, in the left-right direction, third inner peripheral surface area 504c is distant from projection 100. In the left-right direction, first mouse skate member 531 is located on the outer side of top surface 106 of projection 100. First mouse skate member 531 includes a portion that comes in contact with tracking surface F on the outer side of upper side surface 11 in the plane direction of tracking surface F. Stability in mouse operations can thus further be improved. In the left-right direction, third inner peripheral surface area 504c may be in contact with projection 100.

As set forth above, first mouse skate member 531 and second mouse skate member 532 come in contact with tracking surface F at least in part at the outer side of top surface 106 of projection 100 in the plane direction of tracking surface F.

As shown in Figs. 31 to 35, according to peripheral device 500 according to the present embodiment, attachment portion 509 includes immovable first tab 510 and movable second tab 520. Peripheral device 500 can thus readily and securely be attached to input device 1. Furthermore, as first tab 510 and second tab 520 are engaged with the respective corresponding engagement holes, peripheral device 500 is further securely fixed to input device 1.

Peripheral device 500 according to the present embodiment includes strap attachment portion 505 located on the longitudinally outer side of hole 507 and on the side where immovable first tab 510 is provided. Strap 506 is attached to strap attachment portion 505. Therefore, detachment of peripheral device 500 from input device 1 by pull of strap 506 can be suppressed. Strap 506 may be attachable to and removable from strap attachment portion 505.

According to peripheral device 500 according to the present embodiment, the bottom surface of peripheral device main body portion 530 is provided with second opening 561. Second tab 520 which is a movable member can thus be assembled to peripheral device 500 by using second opening 561. Furthermore, second opening 561 is closed by second mouse skate member 532. Therefore, while unintended access to the inside of second opening 561 is suppressed, stability in mouse operations can be improved.

According to peripheral device 500 according to the present embodiment, peripheral device main body portion 530 is provided with third opening 523 where second tab end portion 522 of second tab 520 is exposed. A state of second tab 520 can thus readily be observed. Furthermore, in the present embodiment, while second tab 520 is not completely locked, second tab end portion 522 of second tab 520 projects from peripheral device 500. Therefore, the state in which second tab 520 is not completely locked can readily be known.

According to peripheral device 500 according to the present embodiment, first tab 510 is engaged with second engagement hole 194. Second tab 520 is engaged with first engagement hole 193. First tab 510 may be engaged with second engagement hole 194 but does not have be engaged with first engagement hole 193. Second tab 520 may be engaged with first engagement hole 193 but does not have be engaged with second engagement hole 194. Peripheral device 500 can thus be attached to input device 1 only in an intended direction.

For example, a width of second tab 520 in the upward-downward direction of peripheral device 500 larger than a width of first engagement hole 193 in the upward-downward direction of input device 1 may disallow engagement of second tab 520 with first engagement hole 193. Difference in geometrical shape between second tab 520 and first engagement hole 193 may disallow engagement of second tab 520 with first engagement hole 193.

In an example where first tab 510 is located on a lower side while input device 1 is vertically held, strap 506 is located on the side of first tab 510, so that operations on input device 1 are facilitated in the vertically held state while the user puts on strap 506.

First tab 510 may be engaged with first engagement hole 193 and second tab 520 may be engaged with second engagement hole 194. Each of first tab 510 and second tab 520 may be engageable with first engagement hole 193 and second tab 520.

Fig. 36 is a schematic front view showing a configuration of a system according to the present embodiment. The schematic front view shown in Fig. 36 shows a surface viewed along the front-rear direction. A system 2000 according to the present embodiment includes peripheral device 500 and input device 1. Input device 1 is attached to peripheral device 500 with the use of the attachment portion.

As shown in Fig. 36, when viewed along the front-rear direction, in the left-right direction, at least a part of each of third outer peripheral surface area 503c and fourth outer peripheral surface area 503d is located at the outer side of upper side surface 11 of controller housing 10. Specifically, in the left-right direction, an end of each of third outer peripheral surface area 503c and fourth outer peripheral surface area 503d, at the side of main body portion bottom surface 502, is located at the outer side of upper side surface 11 of controller housing 10. A distance between third outer peripheral surface area 503c and fourth outer peripheral surface area 503d in the left-right direction increases from main body portion upper surface 501 toward main body portion bottom surface 502. In the left-right direction, main body portion bottom surface 502 (lower surface) is longer in length than main body portion upper surface 501 (upper surface). In the left-right direction, main body portion bottom surface 502 is longer in length than upper side surface 11 of controller housing 10.

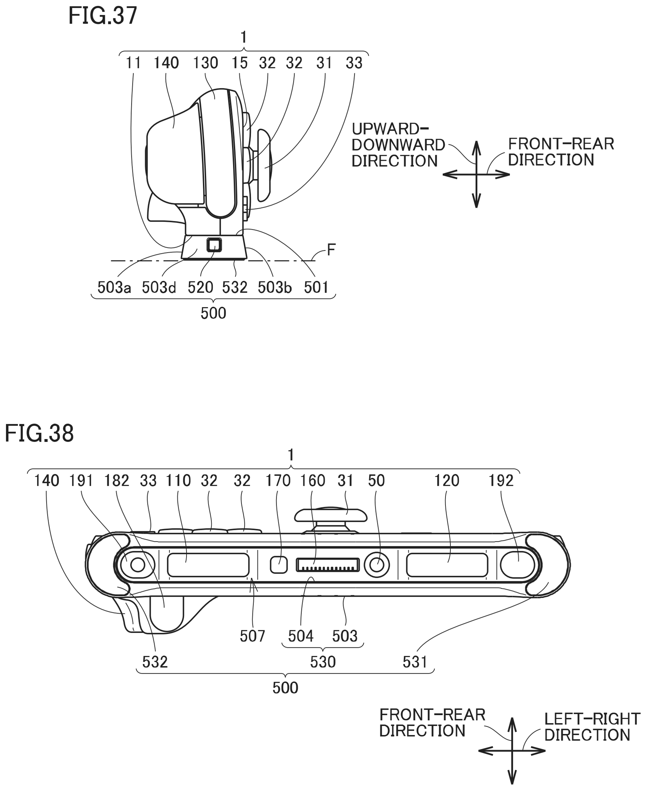

Fig. 37 is a schematic right side view showing the configuration of the system according to the present embodiment. The schematic right side view shown in Fig. 37 shows the surface viewed along the left-right direction. As shown in Fig. 37, when viewed along the left-right direction, in the front-rear direction, at least a part of each of first outer peripheral surface area 503a and second outer peripheral surface area 503b is located at the outer side of upper side surface 11 of controller housing 10. Specifically, in the front-rear direction, the end of each of third outer peripheral surface area 503c and fourth outer peripheral surface area 503d, at the side of main body portion bottom surface 502, is located at the outer side of upper side surface 11 of controller housing 10. A distance between first outer peripheral surface area 503a and second outer peripheral surface area 503b in the front-rear direction increases from main body portion upper surface 501 toward main body portion bottom surface 502. In the front-rear direction, main body portion bottom surface 502 (lower surface) is longer in length than main body portion upper surface 501 (upper surface). In the front-rear direction, main body portion bottom surface 502 is longer in length than upper side surface 11 of controller housing 10.

Fig. 38 is a schematic bottom view showing the configuration of the system according to the present embodiment. The schematic bottom view shown in Fig. 38 shows the surface viewed along the upward-downward direction. As shown in Fig. 38, projection 100 is attached to hole 507 in the attachment portion to expose at least a part of first opening 170. When viewed along the upward-downward direction, first opening 170 is located inside hole 507. First terminal 160 is exposed through hole 507. The user can access first terminal 160 through first opening 170. Projection 100 is attached to attachment portion 509 to expose at least one button. Specifically, while projection 100 is attached to hole 507, first button 110 and second button 120 are exposed. When viewed along the upward-downward direction, first button 110 and second button 120 are located inside hole 507. Thus, even while peripheral device 500 is attached to input device 1, first button 110 and second button 120 can be used, for example, in the horizontally held state or the vertically held state. In other words, while mouse operations are facilitated by attachment of peripheral device 500 to input device 1, access to first button 110 or second button 120 is not blocked in the horizontally held state or the vertically held state and hence input device 1 can also be used in such a held state. Therefore, while the state in which peripheral device 500 is attached to input device 1 is maintained, switching between use as the mouse and use in the horizontally held state or the vertically held state can be made.

First button 110 and second button 120 are buttons configured to be used in a game. In the present embodiment, in addition to these buttons, synchronization button 50 which is a button configured to be used for control of the system other than the game is also exposed through hole 507. For example, only a button configured to be used for a game or only a button configured to be used for control of the system other than the game may be exposed through hole 507.

As shown in Fig. 38, top surface 106 of projection 100 is provided with first cushion member 191 and second cushion member 192. In the longitudinal direction of top surface 106 of projection 100, each of first cushion member 191 and second cushion member 192 is located between first mouse skate member 531 and second mouse skate member 532. In the longitudinal direction of top surface 106 of projection 100, an outer end of first mouse skate member 531 is located at the outer side of an outer end of second cushion member 192. In the longitudinal direction of top surface 106 of projection 100, an outer end of second mouse skate member 532 is located at the outer side of an outer end of first cushion member 191.

Each of first mouse skate member 531 and second mouse skate member 532 is, for example, in a crescent shape. First mouse skate member 531 is arranged to enclose a part of second cushion member 192 in the direction of the short side of top surface 106 of projection 100. In the direction of the short side of top surface 106 of projection 100, the outer end of first mouse skate member 531 is located at the outer side of the outer end of second cushion member 192. Similarly, second mouse skate member 532 is arranged to enclose a part of first cushion member 191 in the direction of the short side of top surface 106 of projection 100. In the direction of the short side of top surface 106 of projection 100, the outer end of second mouse skate member 532 is located at the outer side of the outer end of first cushion member 191.

As shown in Fig. 38, when viewed along the upward-downward direction, a total area of an area of first mouse skate member 531 and an area of second mouse skate member 532 is larger than a total area of an area of first cushion member 191 and an area of second cushion member 192. From another point of view, an area of contact portion 7 of peripheral device 500 is larger than an area of a portion of contact of top surface 106 of projection 100 with tracking surface F while input device 1 is not attached to peripheral device 500. Stability in mouse operations can thus be improved and load applied to contact portion 7 can be distributed. The area of contact portion 7 of peripheral device 500 may be at least 1.5 time or at least two times as large as the area of the portion of contact of top surface 106 of projection 100 with tracking surface F while input device 1 is not attached to peripheral device 500.

The schematic diagrams shown in Figs. 36 and 37 show a state in which contact portion 7 is placed on tracking surface F such that first opening 170 is opposed to tracking surface F. At least a part of contact portion 7 comes in contact with tracking surface F at the outer side of top surface 106 of projection 100 in the plane direction of tracking surface F when the contact portion is placed on tracking surface F such that exposed first opening 170 in input device 1 attached to peripheral device 500 is opposed to tracking surface F.

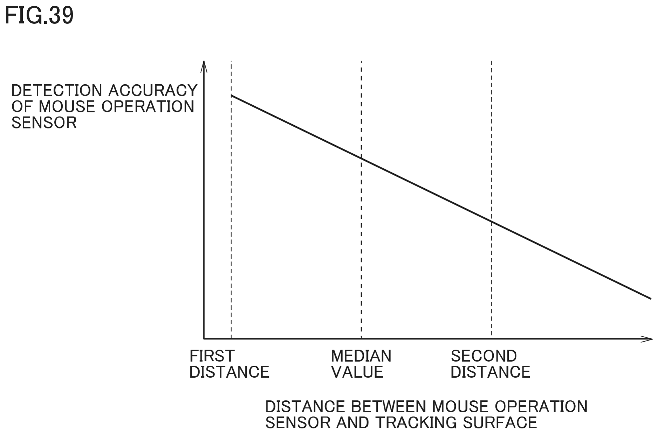

Fig. 39 is a schematic diagram showing relation between detection accuracy of mouse operation sensor 174 and a distance between mouse operation sensor 174 and tracking surface F. The ordinate in Fig. 39 represents detection accuracy of mouse operation sensor 174. The abscissa in Fig. 39 represents a distance between mouse operation sensor 174 and tracking surface F.

Mouse operation sensor 174 can output a highly accurate signal relating to movement relative to tracking surface F when the distance between mouse operation sensor 174 and tracking surface F is within a range from a first distance to a second distance. The second distance is longer than the first distance. The distance between mouse operation sensor 174 and tracking surface F refers to a distance between an end surface of light reception sensor 172 of mouse operation sensor 174 and tracking surface F.

Mouse operation sensor 174 is located at input device 1 such that a separation distance (first separation distance) between mouse operation sensor 174 and tracking surface F at the time when input device 1 is placed such that first opening 170 is opposed to tracking surface F is intermediate between a median value between the first distance and the second distance and the first distance. Thus, for example, even when input device 1 is attached to peripheral device 500 and top surface 106 of projection 100 is distant from tracking surface F, the separation distance between mouse operation sensor 174 and tracking surface F exceeding the second distance can be suppressed. Therefore, input device 1 can output an accurate signal relating to movement. By way of example, a separation distance (second separation distance) between mouse operation sensor 174 and tracking surface F when input device 1 is attached to peripheral device 500 is configured to be intermediate between the median value and the second distance.

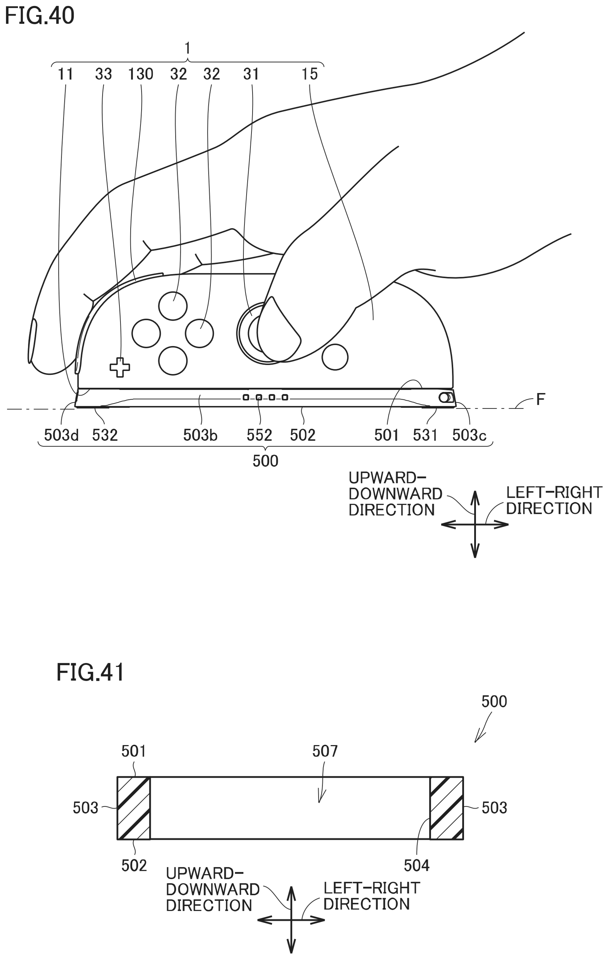

Fig. 40 is a schematic front view showing a state in which input device 1 is used as a mouse. As shown in Fig. 40, the user's palm is arranged to cover lower side surface 13 of input device 1. The user's right thumb is arranged at the side of front surface 15. For example, the user's right thumb is put along joystick 31. The user's right forefinger is arranged on second upper-surface button (right) 130.

The user can operate second upper-surface button (right) 130 with the right forefinger. The user can operate first upper-surface button (right) 140 with the right middle finger. The user may operate first upper-surface button (right) 140 with the right forefinger. The user can operate the input portion at the front surface with the right thumb. For example, the user can operate joystick 31, + button 33, and the set of four buttons 32 with the thumb. As set forth above, input device 1 is used as the mouse while input device 1 is attached to peripheral device 500. Second input device 2 may also similarly be used as the mouse with the left hand or the right hand.

Input device 1 is provided with first opening 170 in projection 100 that projects from the upper side surface. Therefore, input device 1 can be used as the mouse by moving input device 1 while projection 100 is placed on tracking surface F such that first opening 170 is opposed to tracking surface F. Projection 100, however, is in a shape projecting from the upper side surface. Therefore, when top surface 106 of projection 100 is placed on tracking surface F, a portion of contact between input device 1 and tracking surface F is closer to the center than when the entire upper side surface is placed on tracking surface F, and hence there is a room for improvement in stability in mouse operations.

According to peripheral device 500 in the present embodiment, the bottom surfaces of first mouse skate member 531 and second mouse skate member 532 which are contact portion 7 are in contact with tracking surface F at the outer sides of top surface 106 of projection 100 in the plane direction. Therefore, stability in mouse operations can be higher than when top surface 106 of projection 100 is in contact with tracking surface F. In particular, input device 1 may be unstable toward force in the direction of the short side of top surface 106. Since mouse skate member 531 and second mouse skate member 532 are located at the outer sides of first cushion member 191 and second cushion member 192 in the direction of the short side of top surface 106 of projection 100, stability toward force in the direction of the short side can be improved.

According to peripheral device 500 in the present embodiment, in the left-right direction and the upward-downward direction, main body portion bottom surface 502 is longer in length than upper side surface 11 of controller housing 10. Therefore, while peripheral device 500 is compact, mouse skate members 531 and 532 can be provided at further outer sides at main body portion bottom surface 502 and stability in mouse operations can be improved. Since main body portion outer peripheral surface 503 is inclined, standing of peripheral device 500 alone on the ground with the front-rear direction thereof being up, that is, such that an axis of hole 507 is in parallel to the ground, is suppressed, and it is placed on the ground such that the axis of hole 507 is up. Therefore, local application of excessive force at the time of application of large load caused by being stepped on while peripheral device 500 alone is located on the ground is suppressed. Main body portion outer peripheral surface 503 may be in a shape other than being inclined. For example, main body portion outer peripheral surface 503 may be in such a shape that the peripheral device is not freestanding with main body portion outer peripheral surface 503 being down. In particular, the peripheral device may be in such a shape as not being freestanding with an area of main body portion outer peripheral surface 503 extending in the longitudinal direction being down.

Peripheral device 500 in the present embodiment is attached to projection 100 for attachment of input device 1 to main body apparatus 3. Therefore, input device 1 does not have to be provided with a new attachment structure. Since first opening 170 is exposed while input device 1 is attached to peripheral device 500, a mouse function can be kept used.

Peripheral device 500 in the present embodiment can also be described as being comprised of a bottom surface, a mouse skate member provided at the bottom surface, a hole that passes through the bottom surface and an upper surface, and an engagement element that projects toward the inner side of the hole.

Fig. 41 is a schematic cross-sectional view showing a configuration of an attachment portion of peripheral device 500 according to a first modification. The cross-section shown in Fig. 41 is in parallel to each of the upward-downward direction and the left-right direction. As shown in Fig. 41, though the attachment portion of peripheral device 500 is provided with hole 507 with which projection 100 is configured to be matched, it does not have to include first tab 510 and second tab 520. In this case, peripheral device 500 may be attached to input device 1, for example, by contact of first elastically deformable body 52 (see Figs. 15 and 17) and second elastically deformable body 54 (see Fig. 17) with main body portion inner peripheral surface 504 that defines hole 507 with which projection 100 is configured to be matched. The attachment portion of peripheral device 500 may be a notch rather than hole 507. Main body portion outer peripheral surface 503 is substantially in parallel to main body portion inner peripheral surface 504. Main body portion outer peripheral surface 503 is not inclined with respect to main body portion inner peripheral surface 504.

According to peripheral device 500 according to the first modification, projection 100 can readily be attached to the attachment portion. Though Fig. 41 does not show first mouse skate member 531 and second mouse skate member 532, peripheral device 500 may be provided therewith, which is also similar in following modifications.

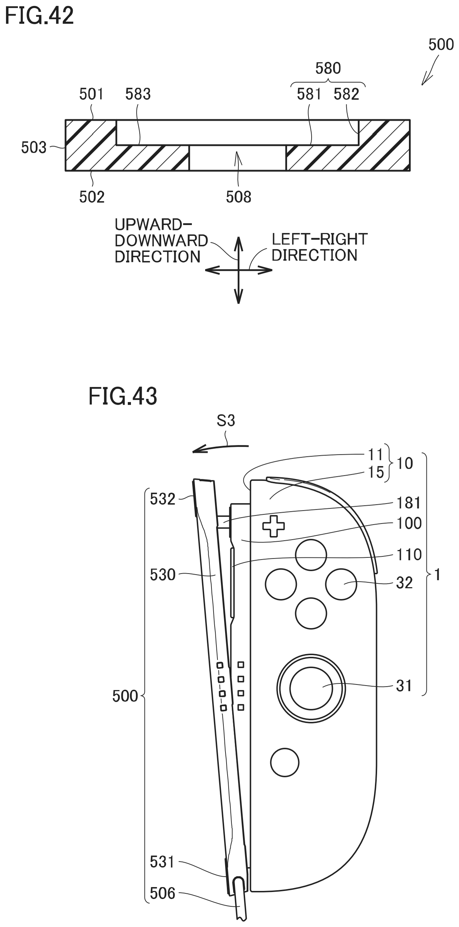

Fig. 42 is a schematic cross-sectional view showing a configuration of an attachment portion of peripheral device 500 according to a second modification. The cross-section shown in Fig. 42 is in parallel to each of the upward-downward direction and the left-right direction. As shown in Fig. 42, the attachment portion of peripheral device 500 includes the first tab (not shown), the second tab (not shown), and a recess 580 with which projection 100 is configured to be matched. Recess 580 is provided with a recess bottom surface 581 and a recess side surface 582. Recess bottom surface 581 is contiguous to recess side surface 582. Recess bottom surface 581 includes a pusher contact portion 583 with which pusher 181 which will be described later is configured to come in contact. Recess bottom surface 581 is provided with a hole 508 opposed to first opening 170. Hole 508 may have such a size as not exposing first terminal 160 or second button 120 but exposing only first opening 170. Hole 508 may be provided with a lens. In this case, first opening 170 is exposed through hole 508 and the lens. The lens may be configured to compensate for lowering in performance of detection by the mouse operation sensor due to first opening 170 being distant from tracking surface F. Hole 508 may have such a size as exposing first terminal 160. Hole 508 may have such a size as exposing at least one of first button 110 and second button 120.

According to peripheral device 500 according to the second modification, projection 100 can readily be attached to recess 580 as the attachment portion. Furthermore, recess bottom surface 581 can protect top surface 106.

Fig. 43 is a schematic diagram showing a state in which peripheral device 500 including the attachment portion according to the second modification is removed from input device 1.

Initially, the user operates operation portion 182 (see Figs. 18 and 19). Pusher 181 thus projects from top surface 106 of projection 100 of input device 1. Projected pusher 181 pushes pusher contact portion 583 (see Fig. 42).

As shown in Fig. 43, as pusher 181 pushes pusher contact portion 583, a portion of peripheral device 500 that is opposed to pusher 181 moves in a direction away from top surface 106 of projection 100. Peripheral device 500 is pivoted in a direction shown with third arrow S3 with a position around first tab 510 being defined as a fulcrum. Recess 580 in peripheral device 500 is thus detached from projection 100 of input device 1. After recess 580 in peripheral device 500 is detached from projection 100 to some extent, peripheral device 500 is moved such that first tab 510 is detached from second engagement hole 194, so that recess 580 at the side of first tab 510 can be detached from projection 100. Therefore, peripheral device 500 can readily be removed from input device 1.

As shown in Fig. 43, recess 580 may have such a size that the entire top surface 106 of projection 100 is not exposed in recess 580 in spite of projection of pusher 181. Specifically, recess 580 may have such a depth that a right end (an upper end in Fig. 43) of top surface 106 of projection 100 is exposed through the opening of recess 580 as a result of projection of pusher 181 but a left end (a lower end in Fig. 43) of top surface 106 of projection 100 is not exposed in the opening of recess 580. Thus, when the user has caused pusher 181 to project but immediately thereafter changes mind to attach the peripheral device again, peripheral device 500 can readily be attached to input device 1.

Though an example in which peripheral device 500 is removed from input device 1 with the use of operation portion 182 is described above, peripheral device 500 may be removed from input device 1 without the use of operation portion 182.

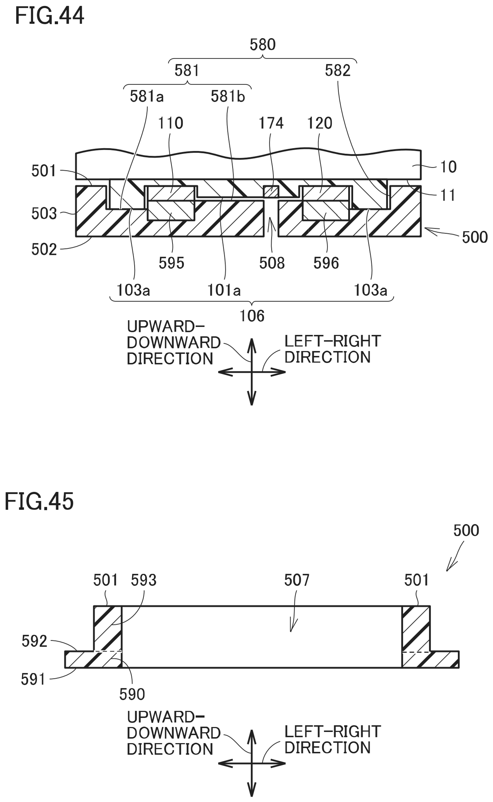

Fig. 44 is a schematic cross-sectional view showing a configuration of an attachment portion of peripheral device 500 according to a third modification. The cross-section shown in Fig. 44 is in parallel to each of the upward-downward direction and the left-right direction. As shown in Fig. 44, top surface 106 of projection 100 is provided with a top surface first area 103a and a top surface second area 101a. Top surface first area 103a is highest in height from upper side surface 11. Top surface second area 101a is located at a position lower than top surface first area 103a. Projection 100 includes first button 110, second button 120, and mouse operation sensor 174.

Recess bottom surface 581 is provided with a bottom surface first area 581a and a bottom surface second area 581b. Bottom surface first area 581a is opposed to top surface first area 103a. Bottom surface second area 581b is opposed to top surface second area 101a. Bottom surface second area 581b is smaller in depth than bottom surface first area 581a. Bottom surface second area 581b is provided with hole 508 opposed to first opening 170.

Each of first button 110 and second button 120 is a magnetic button configured to be attracted by magnetic force. The attachment portion of peripheral device 500 includes a fifth magnet 595 and a sixth magnet 596. Each of fifth magnet 595 and sixth magnet 596 is located at the bottom of recess 580. Each of fifth magnet 595 and sixth magnet 596 may be buried in recess bottom surface 581 or may be exposed at recess bottom surface 581. First button 110 is attracted to fifth magnet 595. Second button 120 is attracted to sixth magnet 596. Peripheral device 500 can thus readily be attached to and removed from input device 1.

While input device 1 is attached to the attachment portion of peripheral device 500, top surface first area 103a is in contact with bottom surface first area 581a. Top surface second area 101a is distant from bottom surface second area 581b. Each of first button 110 and second button 120 may be opposed to bottom surface second area 581b. Mouse operation sensor 174 is exposed through hole 508 provided in bottom surface second area 581b.

Fig. 45 is schematic cross-sectional view showing a configuration of an attachment portion of peripheral device 500 according to a fourth modification. The cross-section shown in Fig. 45 is in parallel to each of the upward-downward direction and the left-right direction. As shown in Fig. 45, the attachment portion of peripheral device 500 includes a support portion 590 and a wall 593. Support portion 590 is provided with a first support portion surface 591 and a second support portion surface 592. Support portion 590 is provided with a contact portion in first support portion surface 591. Second support portion surface 592 is located opposite to first support portion surface 591. Wall 593 projects from second support portion surface 592. Wall 593 covers at least a part of outer peripheral surface 107 of projection 100. Wall 593 may cover the entire outer peripheral surface 107 of projection 100.

According to peripheral device 500 according to the fourth modification, while the configuration of peripheral device 500 is compact, stability in mouse operations can be improved.

As set forth above, projection 100 may be attached to peripheral device 500 with the use of a locking tab, an elastic deformable member provided at the outer peripheral surface of projection 100, a magnet, or the like, in addition to the hole or the recess. When input device 1 and peripheral device 500 integrally move in mouse operations, a dimension of recess 580 may slightly be larger than a dimension of projection 100, there may be little friction therebetween, and input device 1 may be detached from peripheral device 500 without any resistance when input device 1 is lifted.

### <Other Modifications>

Each of first cushion member 191 and second cushion member 192 provided at top surface 106 of projection 100 may be in contact with tracking surface F together with contact portion 7. One of first cushion member 191 and second cushion member 192 and contact portion 7 may be in contact with tracking surface F, whereas the other of first cushion member 191 and second cushion member 192 does not have to be in contact with tracking surface F.

Peripheral device 500 may include a first movable portion (not shown) configured to press down first button 110 while it covers first button 110 or may include a second movable portion (not shown) configured to press down second button 120 while it covers second button 120.

Peripheral device 500 may include an operation portion (not shown) configured to switch between movability and immovability of second tab 520.

Peripheral device 500 may include an operation portion (not shown) configured to be operated to press second tab 520 into second tab arrangement portion 525. The operation portion releases locking between second tab 520 and an engagement hole.

Second tab 520 may be a tab configured to move by deforming. First tab 510 and second tab 520 may both be movable or immovable.

Peripheral device 500 may be comprised of a bottom surface, a mouse skate member provided at the bottom surface, a hole that passes through the bottom surface and an upper surface, and an engagement element that projects toward the inner side of the hole.

### (Second Embodiment)

A configuration of a peripheral device 600 according to a second embodiment will now be described. Peripheral device 600 according to the second embodiment is different from peripheral device 500 according to the first embodiment mainly in including a notch located in the front-rear direction of each of first button 110 and second button 120 and it is otherwise substantially the same as peripheral device 500 according to the first embodiment. A configuration different from that of peripheral device 500 according to the first embodiment will mainly be described below.

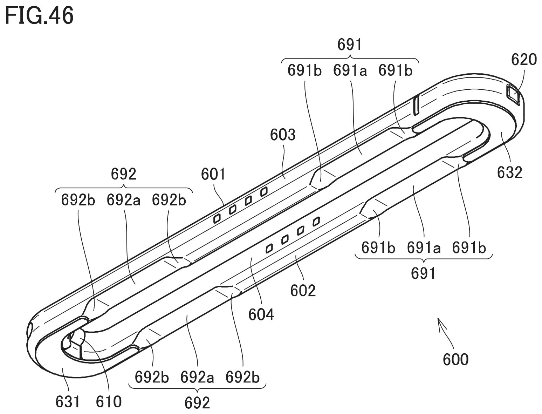

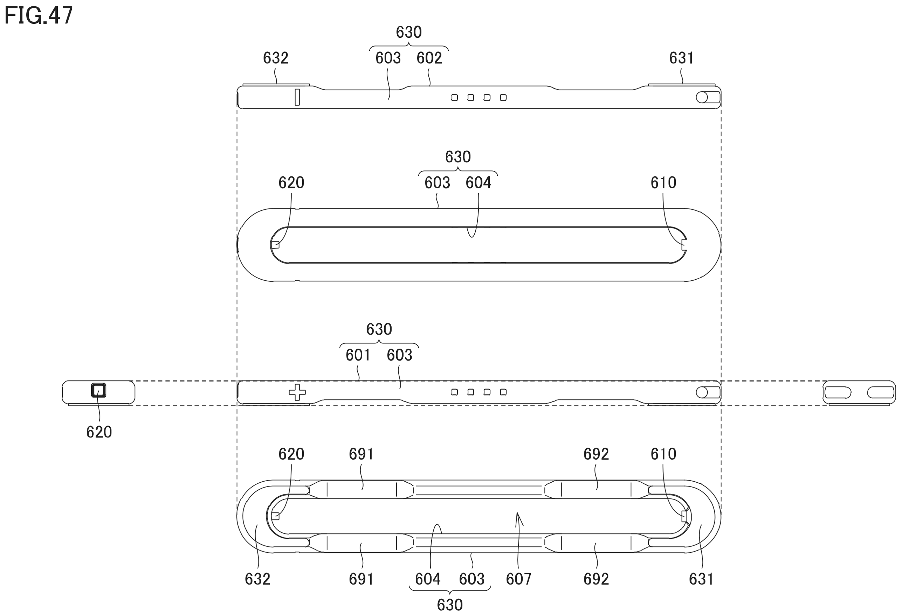

Fig. 46 is a schematic perspective view showing the configuration of peripheral device 600 according to the second embodiment. Fig. 47 is a six-view schematic diagram showing the configuration of peripheral device 600 according to the second embodiment.

As shown in Figs. 46 and 47, a peripheral device main body portion 630 is provided with two first notch portions 691 and two second notch portions 692. Notch portions 691 and 692 are each in such a shape that a part of a main body portion bottom surface 602 is cut away and recessed relative to main body portion bottom surface 602. In the longitudinal direction of a hole 607, main body portion bottom surface 602 is located between notch portions 691 and 692 and at outer sides of notch portions 691 and 692. In the longitudinal direction of hole 607, light guide paths 551 and 552 are located between notch portions 691 and 692. In the longitudinal direction of hole 607, a first mouse skate member 631 and a second mouse skate member 632 are located at the outer sides of notch portions 691 and 692, respectively. Two first notch portions 691 and two second notch portions 692 are arranged along the direction of the short side of hole 607 with which projection 100 is configured to be matched.

Each of two first notch portions 691 is provided with a first notch portion bottom surface 691a and a first notch portion side surface 691b. First notch portion side surface 691b is contiguous to each of first notch portion bottom surface 691a and main body portion bottom surface 502. First notch portion side surface 691b is inclined with respect to each of first notch portion bottom surface 691a and main body portion bottom surface 602. In a direction of passage through hole 607, first notch portion bottom surface 691a is located between main body portion bottom surface 602 and a main body portion upper surface 601. First notch portion bottom surface 691a is contiguous to each of a main body portion inner peripheral surface 604 and a main body portion outer peripheral surface 603. First notch portion bottom surface 691a may be uniform in depth from main body portion bottom surface 602 in the front-rear direction. First notch portion side surface 691b is contiguous to each of main body portion inner peripheral surface 604 and main body portion outer peripheral surface 603. The similar structure is also applicable to second notch portion 692.

While input device 1 is attached to peripheral device 600, two first notch portions 692 are located in the front-rear direction of first button 110 and two second notch portions 692 are located in the front-rear direction of second button 120. From another point of view, while input device 1 is attached to peripheral device 600, first button 110 is located between two first notch portions 691 and second button 120 is located between two second notch portions 692. While input device 1 is attached to peripheral device 600, the top surface of first button 110 is located closer to main body portion bottom surface 602 than first notch portion bottom surface 691a. The top surface of first button 110 may be located between first notch portion bottom surface 691a and main body portion bottom surface 602. While input device 1 is attached to peripheral device 600, first area 101 at top surface 106 of projection 100 and first notch portion bottom surface 691a may substantially be flush with each other. The similar structure is also applicable to second button 120 and second notch portion bottom surface 692a. Therefore, for example, in the horizontally held state by the user while input device 1 is attached to peripheral device 600, the user can readily press down each of first button 110 and second button 120.

### (Third Embodiment)

A configuration of a peripheral device 700 according to a third embodiment will now be described. Peripheral device 700 according to the third embodiment is different from peripheral device 500 according to the first embodiment mainly in that contact portion 7 is annular and it is otherwise substantially the same as peripheral device 500 according to the first embodiment. A configuration different from that of peripheral device 500 according to the first embodiment will mainly be described below.

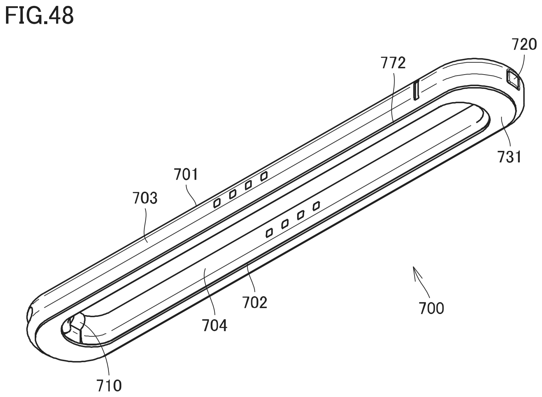

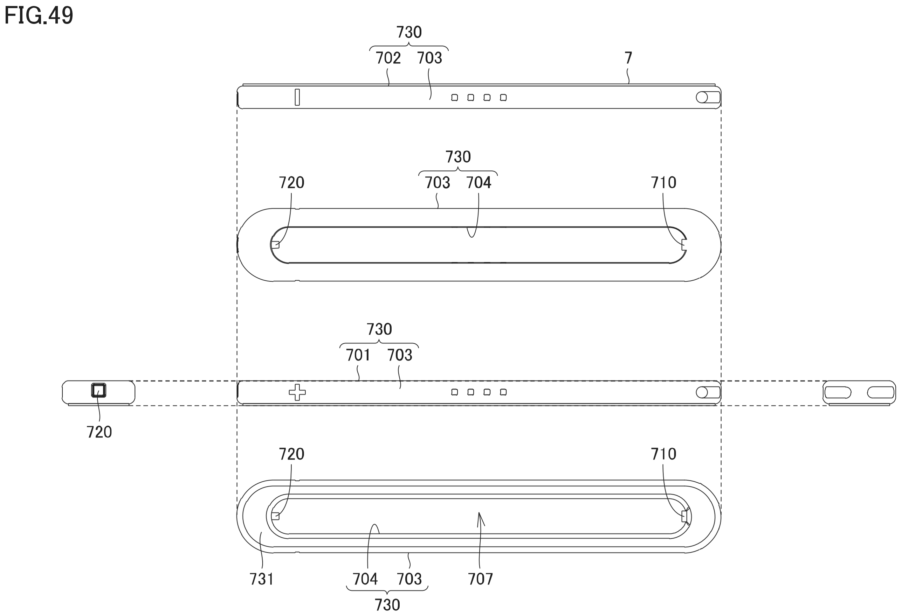

Fig. 48 is a schematic perspective view showing the configuration of peripheral device 700 according to the third embodiment. Fig. 49 is a six-view schematic diagram showing the configuration of peripheral device 700 according to the third embodiment.

As shown in Figs. 48 and 49, peripheral device 700 includes an annular mouse skate member 731. A peripheral device main body portion 730 is provided with a main body portion upper surface 701, a main body portion bottom surface 702, a main body portion outer peripheral surface 703, and a main body portion inner peripheral surface 704. Annular mouse skate member 731 is arranged in an annular groove 772 provided in main body portion bottom surface 702. When viewed in a direction of passage through a hole 707 with which projection 100 is configured to be matched, hole 707 is surrounded by annular mouse skate member 731. A bottom surface of annular mouse skate member 731 forms annular contact portion 7.

### (Fourth Embodiment)

A configuration of a peripheral device 800 according to a fourth embodiment will now be described. Peripheral device 800 according to the fourth embodiment is different from peripheral device 700 according to the third embodiment mainly in that a shape of peripheral device 800 is asymmetric with respect to a straight line along the longitudinal direction of hole 607 with which projection 100 is configured to be matched and it is otherwise substantially the same as peripheral device 700 according to the third embodiment. A configuration different from that of peripheral device 700 according to the third embodiment will mainly be described below.

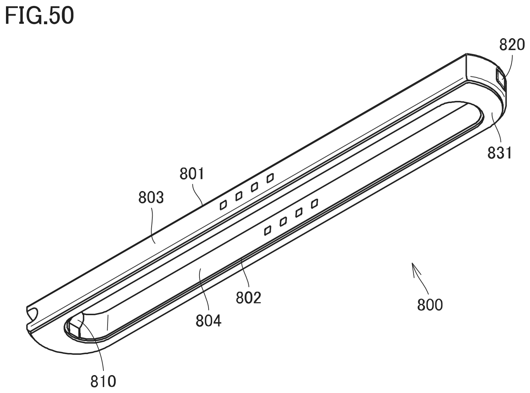

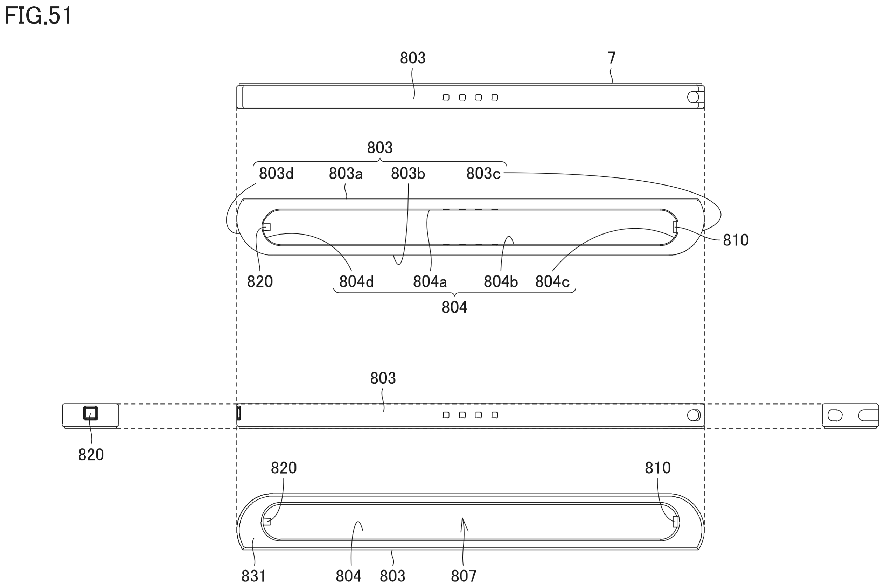

Fig. 50 is a schematic perspective view showing the configuration of peripheral device 800 according to the fourth embodiment. Fig. 51 is a six-view schematic diagram showing the configuration of peripheral device 800 according to the fourth embodiment.

As shown in Figs. 50 and 51, peripheral device 800 is provided with a first outer peripheral surface area 803a and a second outer peripheral surface area 803b that are outer peripheral surfaces of a main body portion and linearly extend in the longitudinal direction of a hole 807. First outer peripheral surface area 803a and second outer peripheral surface area 803b are contiguous to a third outer peripheral surface area 803c and a fourth outer peripheral surface area 803d at opposing ends.

When viewed in a direction of passage through hole 807 with which projection 100 is configured to be matched, first outer peripheral surface area 803a is longer in length than second outer peripheral surface area 803b. In the longitudinal direction of hole 607 with which projection 100 is configured to be matched, a boundary between first outer peripheral surface area 803a and third outer peripheral surface area 803c is located at the outer side of a boundary between second outer peripheral surface area 803b and third outer peripheral surface area 803c. Similarly, in the longitudinal direction of hole 607 with which projection 100 is configured to be matched, a boundary between first outer peripheral surface area 803a and fourth outer peripheral surface area 803d is located at the outer side of a boundary between second outer peripheral surface area 803b and fourth outer circumferential surface area 803d. When viewed in the direction of passage through hole 607 with which projection 100 is configured to be matched, the shape of peripheral device 800 is asymmetric with respect to the straight line along the longitudinal direction of hole 607 with which projection 100 is configured to be matched. Such a shape allows attachment of peripheral device 800 as being compatible with upper side surface 11 of first input device 1.

### (Fifth Embodiment)

A configuration of a peripheral device 900 according to a fifth embodiment will now be described. Peripheral device 900 according to the fifth embodiment is different from peripheral device 600 according to the second embodiment in some features. A configuration different from that of peripheral device 600 according to the second embodiment will mainly be described below.

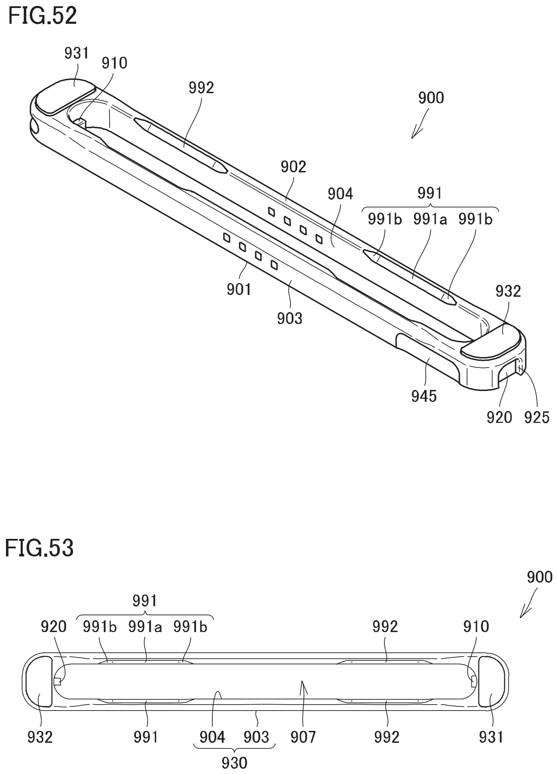

Fig. 52 is a schematic perspective view showing the configuration of peripheral device 900 according to the fifth embodiment. Fig. 53 is a schematic bottom view showing the configuration of peripheral device 900 according to the fifth embodiment. As shown in Figs. 52 and 53, a peripheral device main body portion 930 is provided with a main body portion inner peripheral surface 904, a main body portion outer peripheral surface 903, a main body portion upper surface 901, and a main body portion bottom surface 902. Each of two first notch portions 991 is provided as being exposed at main body portion inner peripheral surface 904 but not exposed at main body portion outer peripheral surface 903. Similarly, each of two second notch portions 992 is provided as being exposed at main body portion inner peripheral surface 904 but not exposed at main body portion outer peripheral surface 903.

Each of two first notch portions 991 is in such a shape as being provided by cutting a corner formed by main body portion inner peripheral surface 904 and main body portion bottom surface 902. Each of two first notch portions 991 is provided with a first notch portion side surface 991a and a second notch portion side surface 991b contiguous to opposing ends of first notch portion side surface 991a in the longitudinal direction of a hole 907 (the left-right direction of peripheral device main body portion 930). Second notch portion side surface 991b is contiguous to first notch portion side surface 991a and the corner formed by main body portion inner peripheral surface 904 and main body portion bottom surface 902. First notch portion side surface 991a is contiguous to each of main body portion inner peripheral surface 904, main body portion bottom surface 902, and second notch portion side surface 991b, but not contiguous to main body portion outer peripheral surface 903. First notch portion side surface 991a is contiguous to main body portion inner peripheral surface 904 and main body portion bottom surface 902 in the direction of the short side of hole 907. First notch portion side surface 991a is inclined as being facing the side of hole 907. First notch portion side surface 991a is inclined with respect to each of main body portion bottom surface 902, main body portion inner peripheral surface 904, and second notch portion side surface 992b. Second notch portion side surface 991b is contiguous to each of main body portion inner peripheral surface 904 and main body portion bottom surface 902 but not contiguous to main body portion outer peripheral surface 903. Second notch portion side surface 991b is also inclined as facing the side of hole 907. The similar structure is also applicable to two second notch portions 992.

With the structure of first notch portion 991 as above, peripheral device 900 can have high strength and the user can readily press down each of first button 110 and second button 120 while input device 1 is attached to peripheral device 900.

The shape of first notch portion 991 and second notch portion 992 above is by way of example and another shape may be applicable. For example, first notch portion 991 and second notch portion 992 may not be independent but may be one continuous notch. By way of example, first notch portion side surface 991a and second notch portion side surface 992a may be continuous.

As shown in Fig. 52, main body portion outer peripheral surface 903 is provided with a depression portion 945. Main body portion outer peripheral surface 903 extends in a direction perpendicular to main body portion bottom surface 902. In other words, the main body portion outer peripheral surface is not inclined with respect to a straight line perpendicular to main body portion bottom surface 902. Therefore, while peripheral device 900 can be compact, it is difficult for the user to put his/her finger over main body portion outer peripheral surface 903 to remove the peripheral device. In this connection, the user can put his/her finger over depression portion 945 in removal of peripheral device 500 from input device 1 and hence the user can readily remove the peripheral device. Depression portion 945 is exposed at main body portion upper surface 901 but not exposed at main body portion bottom surface 902. Depression portion 945 does not have to be exposed at main body portion upper surface 901. Depression portion 945 is provided closer to a second tab 920 than a first tab 910. Main body portion outer peripheral surface 903 may be inclined and may be provided with depression portion 945.

Furthermore, as shown in Fig. 53, when viewed in a direction of passage through hole 907, each of a first mouse skate member 931 and a second mouse skate member 932 is in a substantially semicircular shape. In the direction of the short side of hole 907, first mouse skate member 931 has an outer end located at the outer side of an outer end of each of two second notch portions 992. Similarly, in the direction of the short side of hole 907, second mouse skate member 932 has an outer end located at the outer side of an outer end of each of two first notch portions 991.

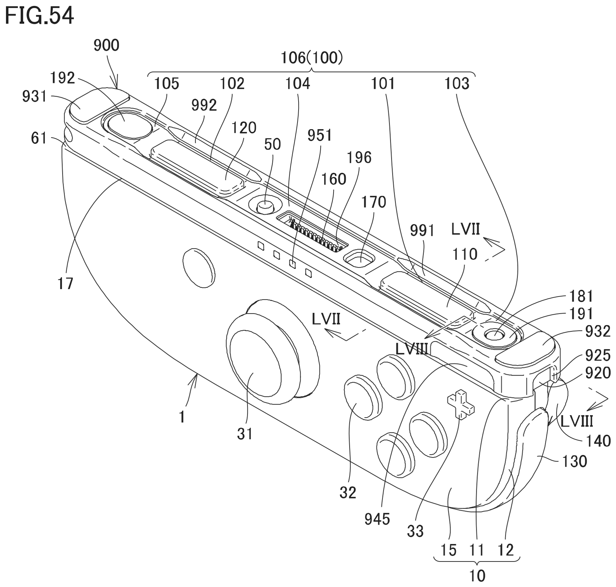

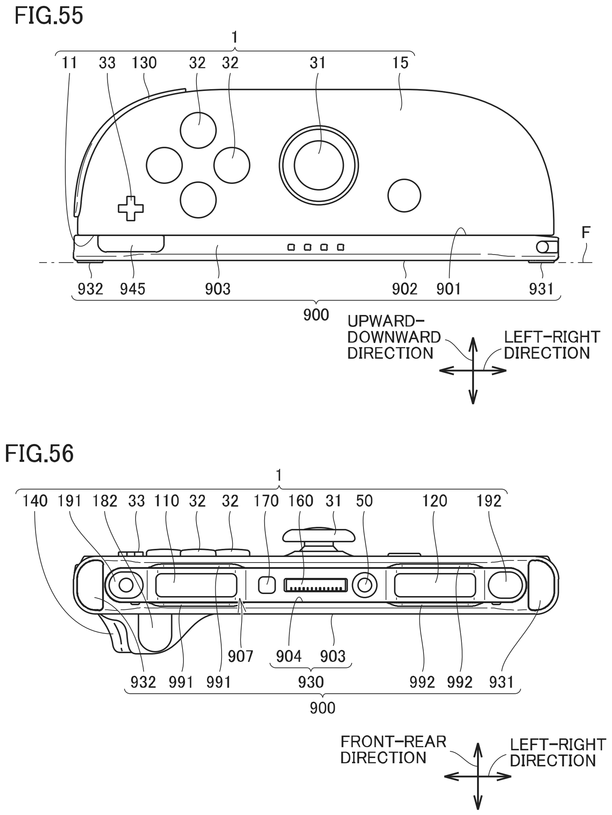

Fig. 54 is a schematic perspective view showing a state in which the peripheral device according to the fifth embodiment is attached to the input device. Fig. 55 is a schematic front view showing a state in which the peripheral device according to the fifth embodiment is attached to the input device. As shown in Fig. 54, first button 110 is located between two first notch portions 991 and second button 120 is located between two second notch portions 992. Depression portion 945 is arranged to face the front while peripheral device 900 is attached to input device 1.

As shown in Fig. 54, in the longitudinal direction of top surface 106 of projection 100, depression portion 945 is located at a position the same as the position of pusher 181. In the direction of the short side of top surface 106 of projection 100, depression portion 945 and pusher 181 are arranged as being aligned. As shown in Fig. 55, in the upward-downward direction, depression portion 945 and + button 33 are arranged as being aligned. Fig. 56 is a schematic bottom view showing a state in which the peripheral device according to the fifth embodiment is attached to the input device. In the direction of the short side of top surface 106 of projection 100, first mouse skate member 931 has the outer end located at the outer side of the outer end of second cushion member 192. In the longitudinal direction of top surface 106 of projection 100, first mouse skate member 931 is located at the outer side of second cushion member 192. Similarly, in the direction of the short side of top surface 106 of projection 100, second mouse skate member 932 has the outer ends located at the outer side of the outer ends of first cushion member 191. In the longitudinal direction of top surface 106 of projection 100, first mouse skate member 931 is located at the outer side of second cushion member 192.

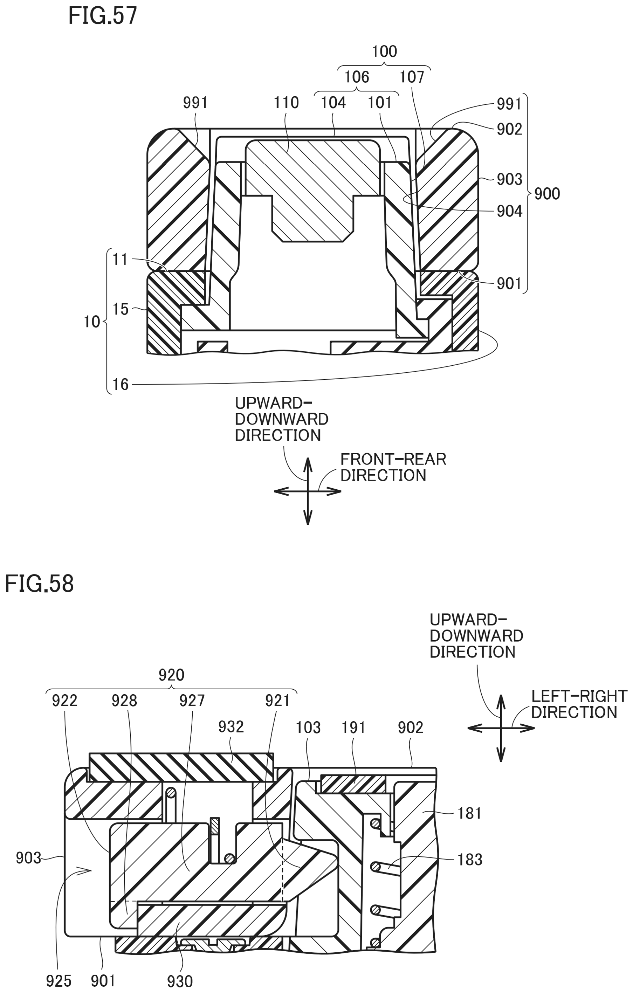

Fig. 57 is a schematic cross-sectional view along the line LVII-LVII in Fig. 54. As shown in Fig. 57, in the upward-downward direction, fourth area 104 at top surface 106 of projection 100 is located above the lower end of each of two first notch portions 991 and below the upper end of each of two first notch portions 991. In the upward-downward direction, first area 101 may be located as high as or below the lower end of each of two first notch portions 991.

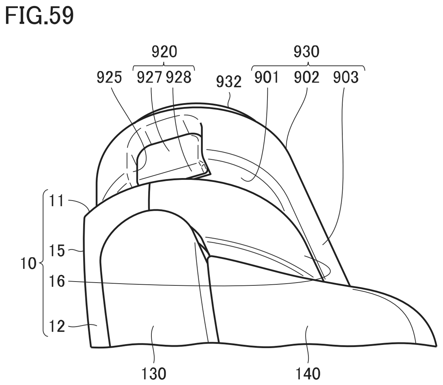

Fig. 58 is a schematic cross-sectional view along the line LVIII-LVIII in Fig. 54. Fig. 59 is a schematic perspective view showing a configuration around the second tab of the peripheral device according to the fifth embodiment. As shown in Figs. 58 and 59, a second tab arrangement portion 925 is open in a boundary area between main body portion upper surface 901 and main body portion outer peripheral surface 903. Second tab 920 is provided with a tab portion 921, a second tab main body portion 927, and a second tab bent portion 928. Second tab main body portion 927 is contiguous to each of tab portion 921 and second tab bent portion 928. Tab portion 921 and second tab main body portion 927 are aligned in the left-right direction. Second tab bent portion 928 and second tab main body portion 927 are aligned in the upward-downward direction. A second tab end portion 922 is comprised of second tab bent portion 928 and second tab main body portion 927. As second tab bent portion 928 extends in the upward-downward direction from an end of second tab main body portion 927 that extends in the left-right direction, second tab end portion 922 is in a bent shape.

While tab portion 921 is engaged with first engagement hole 193, second tab end portion 922 is located inside second tab arrangement portion 925. In the left-right direction, second tab end portion 922 is located at the inner side of main body portion outer peripheral surface 903. In the middle of removal of the first input device, while tab portion 921 is pushed outward and disengaged from first engagement hole 193, in the left-right direction, second tab end portion 922 is located at a position the same as the position of main body portion outer peripheral surface 903 or on the inner side thereof. As shown in Fig. 59, a part of second tab bent portion 928 is exposed to the outside of second tab arrangement portion 925 so as not to be opposed to upper side surface 11 of controller housing 10. Thus, when second tab 920 does not move for some reason, second tab 920 can be moved in a direction toward main body portion outer peripheral surface 903 by inserting a pointed stick or the like in between second tab bent portion 928 and peripheral device main body portion 930.

### <Modification>

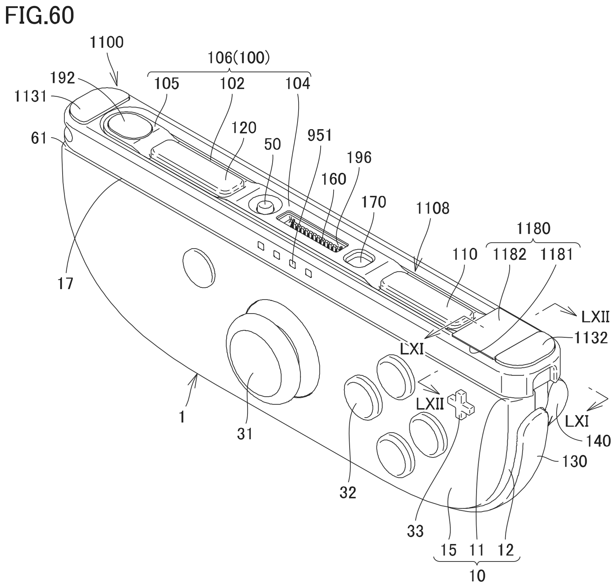

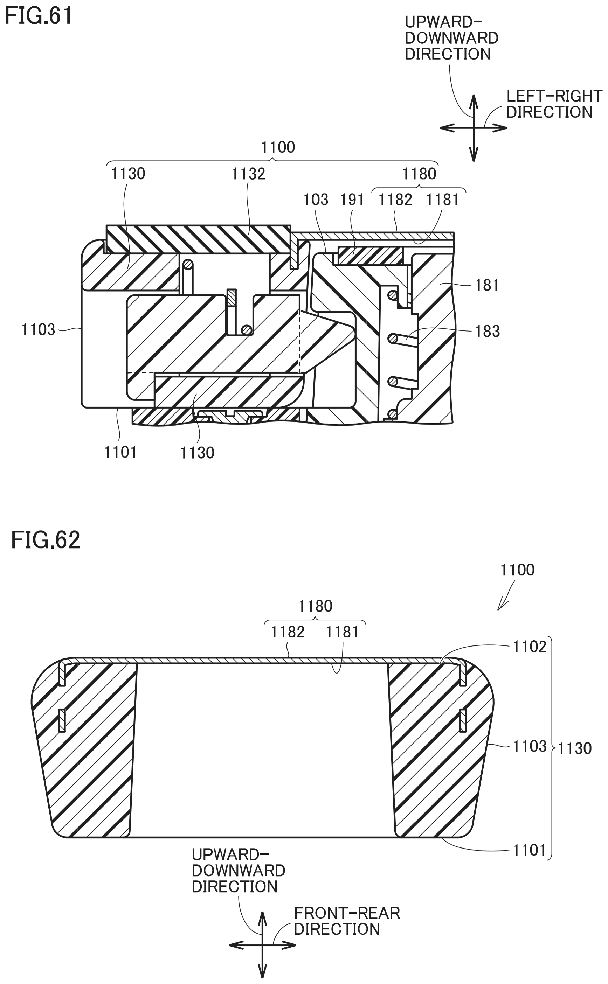

In the example shown in Figs. 42 and 43, peripheral device 500 is provided with recess bottom surface 581 provided with pusher contact portion 583. The recess bottom surface may have such a size as exposing first button 110 and second button 120. By way of example, a peripheral device 1100 shown in Figs. 60 and 61 is provided with a recess bottom surface 1181 having such a size as covering first cushion member 191 and pusher 181 but not covering first button 110 while input device 1 is attached to peripheral device 1100. Recess bottom surface 1181 is formed by a plate member 1180. Recess bottom surface 1181 may come in contact with first cushion member 191 or does not have to come in contact therewith. Recess bottom surface 1181 is provided at the outer side of the outer end of first button 110 in the left-right direction of a peripheral device main body portion 1130. Recess bottom surface 1181 can also be defined as being provided with a hole 1108 through which first button 110, second button 120, and second cushion member 192 are exposed. The user can thus access first button 110 and second button 120 while first input device 1 is attached to peripheral device 1100, and can readily remove first input device 1 from peripheral device 1100 by using pusher 181. In other words, recess bottom surface 1181 is provided with the pusher contact portion. Recess bottom surface 1181 may be provided at the outer side of the outer end of second button 120 in the left-right direction, and may be provided with a portion that covers second cushion member 192. This portion may be formed from plate member 1180 or another plate member.

Plate member 1180 may be formed of a material harder than peripheral device main body portion 1130. For example, peripheral device main body portion 1130 may be formed of resin and plate member 1180 may be formed of metal (iron by way of example). By way of example, as shown in Fig. 62, plate member 1180 may be integrated with peripheral device main body portion 1130 by insert molding. A main body portion bottom surface 1102 may be larger in width in the front-rear direction than a main body portion upper surface 1101. In other words, a main body portion outer peripheral surface 1103 may be inclined such that main body portion bottom surface 1102 increases in width with respect to a straight line perpendicular to main body portion bottom surface 1102. A thickness for providing a part of plate member 1180 inside main body portion bottom surface 1102 by insert molding or the like can thus be secured.

An opposing surface 1182 of plate member 1180 that is opposed to tracking surface F or both of surfaces thereof may be covered with resin. Plate member 1180 may be comprised of a material different from metal. Plate member 1180 may be fixed to peripheral device main body portion 1130 by another means such as an adhesive. Recess bottom surface 1181 may be formed from a part of peripheral device main body portion 1130.

As shown in Figs. 60 and 61, when peripheral device 1100 includes a first mouse skate member 1131 and a second mouse skate member 1132, first mouse skate member 1131 and second mouse skate member 1132 may project toward tracking surface F more than opposing surface 1182. In other words, first mouse skate member 1131 and second mouse skate member 1132 may form the contact portion and opposing surface 1182 does not have to form the contact portion. Plate member 1180 may be smaller in thickness than first mouse skate member 1131 and second mouse skate member 1132.

Peripheral device 1100 may be provided with a strap attachment portion. The strap attachment portion is provided at the outer side of a recess in the longitudinal direction of the recess (the outer side in the left-right direction of peripheral device main body portion 1130) and at a side where an immovable first tab is located. From another point of view, in the left-right direction of peripheral device main body portion 1130, the strap attachment portion is located opposite to a side where the pusher contact portion is located, with respect to the center of peripheral device main body portion 1130.

Though second mouse skate member 1132 is located on main body portion bottom surface 1102 in the modification above, second mouse skate member 1132 may be located on plate member 1180 or more specifically on opposing surface 1182. At this time, second mouse skate member 1132 provided on opposing surface 1182 forms the contact portion. Furthermore, at this time, when plate member 1180 is fastened to main body portion bottom surface 1102 by a screw from a bottom surface side, external access to the screw can be suppressed by second mouse skate member 1132 provided to cover the screw.

Plate member 1180 may extend further outward in the left-right direction of peripheral device main body portion 1130 as compared with the shape shown in Fig. 61 to cover an opening contiguous to the second tab arrangement portion. In other words, plate member 1180 may cover the opening contiguous to the second tab arrangement portion, first cushion member 191, and pusher 181 at the outer side in the left-right direction of first button 110. Plate member 1180 can thus also perform a function to suppress external access to the second tab arrangement portion. Second mouse skate member 1132 may be provided over the entire opposing surface 1182 of plate member 1180 so as to increase an area of the contact portion.

Second mouse skate member 1132 may cover not only opposing surface 1182 of plate member 1180 but also main body portion bottom surface 1102. For example, second mouse skate member 1132 may be fixed to opposing surface 1182 and main body portion bottom surface 1102 by an adhesive. Opposing surface 1182 of plate member 1180 and main body portion bottom surface 1102 may be located at substantially the same position (height) in the upward-downward direction. First mouse skate member 1131 may be different from or the same as second mouse skate member 1132 in shape. When first mouse skate member 1131 is different in shape from second mouse skate member 1132, the user readily knows in which orientation peripheral device 1100 is to be attached to input device 1.

In the present disclosure, though a game controller is exemplified as input device 1 or 2, another input device provided with a mouse operation sensor may be applicable. For example, a general-purpose controller or a mouse may be applicable.

Though the contact portion is comprised of a single mouse skate member or two mouse skate members in the present disclosure, the number of mouse skate members that form the contact portion is not limited as such. The contact portion is not limited to such a manner as being comprised of a mouse skate member, but may be comprised of the main body portion bottom surface by way of example.

Though the peripheral device is substantially in a shape of a parallelepiped in the present disclosure, the shape of the peripheral device is not limited as such. When viewed in the upward-downward direction, the peripheral device may be in a shape other than a quadrangle such as a trapezoid, a circle, an ellipse, or the like.

Though the peripheral device includes the optical guide member in the present disclosure, the peripheral device does not have to include the same. For example, only a hole that allows communication between an inner peripheral surface area and an outer peripheral surface area may be provided, and this hole may function as the optical guide path. The peripheral device does not have to be provided with the optical guide path. In this case, while the peripheral device is attached to the input device, light from the light emission portion does not have to be exposed.

Though the peripheral device includes the strap attachment portion in the present disclosure, the peripheral device does not have to include the same. At this time, a strap does not have to be attached to the peripheral device. An article other than the strap may be attached to the peripheral device.

The peripheral device may include a transparent member. At this time, first opening 170 may be exposed by being covered with the transparent member. In other words, exposure at least of first opening 170 encompasses optical exposure.

The peripheral device may include an electronic component and may include a processor (not shown) by way of example. The processor may read an application program and perform information processing. The peripheral device may include a radio communication unit (not shown). The peripheral device may transmit and receive data to and from the input device through the radio communication unit. The radio communication unit may support such a communication system as Bluetooth^{®} or infrared communication. The peripheral device may transmit and receive data to and from an information processing apparatus other than the input device through the radio communication unit.

In another embodiment, a structure for attachment of the input device does not have to be the projection. By way of example, the input device may include a slider attachment portion. The slider attachment portion is attached by being slid with respect to a rail provided at main body apparatus 3. A top surface of the slider attachment portion, that is, a surface to be slid as being opposed to a bottom surface of the rail, is provided with an opening for introduction of light to the mouse operation sensor. At this time, the peripheral device includes a rail with respect to which the slider attachment portion of such an input device is slid and to which the slider attachment portion is attached. The peripheral device includes at the bottom surface of the rail, a hole through which the opening for introduction of light to the mouse operation sensor is exposed while the input device is attached.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 input device, first input device
2 second input device
3 main body apparatus
7 contact portion
10, 20 controller housing
11, 211 upper side surface
12 right side surface
13 lower side surface
14 left side surface
15 front surface
16 rear surface
17 housing opening
19 projection flange
31 joystick
32 four buttons
33(1) + button
33(2) home button
50, 1751 synchronization button
51, 53 ground connection portion
52 first elastically deformable body
52a first elastic portion
52b second elastic portion
52c first elastic area
52d second elastic area
54 Second elastically deformable body
61 front-surface-side housing
62 rear-surface-side housing
71, 73 first inner surface
72, 74 second inner surface
90 flexible printed circuit
100, 200 projection
101 first area
101a top surface second area
102 second area
103 third area
103a top surface first area
104 fourth area
105 fifth area
106 top surface
107 outer peripheral surface
110 first button
111, 121 first protruding portion
112, 122 second protruding portion
113, 123 flange
114, 124 main body portion
115, 125 operation surface
117, 127 tact switch
118, 128 sidewall
120 second button
130 second upper-surface button (right)
140 first upper-surface button (right)
150 light emission portion
160 first terminal
167 terminal accommodation portion
170 first opening
171 light source
172 light reception sensor
174 mouse operation sensor
181 pusher
182 operation portion
183 biasing portion
184 rotation shaft
185 pusher actuation portion
186 pusher operation member
191 first cushion member
192 second cushion member
193 first engagement hole
193a first engagement hole upper surface
193b first engagement hole lower surface
193c first engagement hole bottom surface
194 second engagement hole
194a second engagement hole upper surface
194b second engagement hole lower surface
194c second engagement hole bottom surface
195 synchronization button opening
196 terminal opening
197 fifth opening
198 sixth opening
301 audio input and output terminal
302 upper terminal
303 lower terminal
304 storage medium slot
305 display
306 main body housing
307 power button
310, 580 recess
310, 320 game-device-side recess
311 base surface
313 main body right side surface
314 main body left side surface
315 main body front surface
316 main body upper side surface
317 main body lower side surface
330 first plug connector
331 main body first terminal
332 first tongue-shaped body
333, 590 support portion
334 shoulder screw
337 through hole
338 cover member
401 first hole
402 second hole
410 game-device-side magnetic element
410 first game-device-side magnetic element
420 second game-device-side magnetic element
500, 600, 700, 800, 900, 1100 peripheral device
501, 601, 701, 901, 1101 main body portion upper surface
502, 602, 702, 902, 1102 main body portion bottom surface
503, 603, 703, 803, 903, 1103 main body portion outer peripheral surface
503a, 803a first outer peripheral surface area
503b, 803b second outer peripheral surface area
503c first side surface
503c, 803c third outer peripheral surface area
503d second side surface
503d, 803d fourth outer peripheral surface area
504, 604, 704, 804, 904 main body portion inner peripheral surface
504a, 804a first inner peripheral surface area
504b, 804b second inner peripheral surface area
504c, 804c third inner peripheral surface area
504d, 804d fourth inner peripheral surface area
505 strap attachment portion
506 strap
507, 508, 607, 707, 1108 hole
509 attachment portion
510, 610, 710, 810, 910 first tab
520, 620, 720, 820, 920 second tab
521, 921 tab portion
522, 922 second tab end portion
523 third opening
524 fourth opening
525, 925 second tab arrangement portion
526 notch
530, 630, 730, 930, 1130 peripheral device main body portion
531, 631, 931, 1131 first mouse skate member
532, 632, 932, 1132 second mouse skate member
533 torsion spring
533a first spring end portion
533b second spring end portion
533c coil spring portion
534 stopper plate
551 first optical guide path
551a first optical guide member arrangement portion
551b first optical guide member
552 second optical guide path
552b second optical guide member
560 third hole
560a first sidewall surface portion
560b second sidewall surface portion
561 second opening
571 first mouse skate member arrangement portion
572 second mouse skate member arrangement portion
581, 1181 recess bottom surface
581a bottom surface first area
581b bottom surface second area
582 recess side surface
583 pusher contact portion
591 first support portion surface
592 second support portion surface
593 wall
595 fifth magnet
596 sixth magnet
691, 991 first notch portion
691a, 991a first notch portion side surface
691b, 991b second notch portion side surface
692, 992 second notch portion
731, 831 annular mouse skate member
772 groove
927 second tab main body portion
928 second tab bent portion
945 depression portion
1000 game device
1180 plate member
1182 opposing surface
2000 system
3120 game-device-side inner peripheral surface
3121 game-device-side bottom surface
A3 arrow
F tracking surface
G distance
R1 first direction
R2 second direction
R3 third direction
R4 fourth direction
R5 fifth direction
R6 sixth direction
S1 first arrow
S2 second arrow
S3 third arrow
T1 first height
T2 second height
T3 third height
T4 fourth height
T5 fifth height
T6 sixth height
T7 seventh height
T8 eighth height
T9 ninth height
T10 tenth height
T11 eleventh height
W1 first length
W2 second length
W3 third length
W4 fourth length

## Claims

1. A peripheral device to which an input device is removably attachable, the input device comprising
an input portion provided at a front surface,
a projection that projects from a side surface and is removably attachable to a game device attachment portion provided at a game device, and
a mouse operation sensor configured to output a signal relating to movement of the input device relative to a tracking surface based on light reflected from the tracking surface through a first opening provided in a top surface of the projection, the peripheral device comprising:
an attachment portion to which the projection is configured to be attached to expose at least a part of the first opening; and
a contact portion, at least a part of the contact portion being configured to come in contact with the tracking surface at an outer side of the top surface in a plane direction of the tracking surface when the contact portion is placed on the tracking surface such that the exposed first opening in the input device attached to the peripheral device is opposed to the tracking surface.

2. The peripheral device according to claim 1, wherein
the attachment portion is provided with a hole with which the projection is to be matched.

3. The peripheral device according to claim 1, wherein
the attachment portion is provided with a recess with which the projection is to be matched, and a recess bottom surface of the recess is provided with a hole opposed to the first opening.

4. The peripheral device according to claim 3, wherein
the projection comprises a magnetic button configured to be attracted by magnetic force, and
the attachment portion comprises a magnet located at a bottom of the recess, to which the magnetic button is configured to be attracted.

5. The peripheral device according to claim 3 or 4, wherein
the input device comprises a pusher that projects from the top surface of the projection in accordance with an operation by a user, and
the recess bottom surface comprises a pusher contact portion with which the pusher is configured to come in contact.

6. The peripheral device according to claim 5, wherein
the recess has such a size as not exposing entirety of the top surface of the projection through the recess even when the pusher projects.

7. The peripheral device according to claim 3, wherein
the top surface comprises a top surface first area highest in height from the side surface and a top surface second area lower than the top surface first area, and
the recess bottom surface comprises a bottom surface first area opposed to the top surface first area and a bottom surface second area opposed to the top surface second area and shallower than the bottom surface first area.

8. The peripheral device according to any one of claims 1 to 7, wherein
the attachment portion is provided with a lower surface opposed to the tracking surface and an upper surface located opposite to the lower surface, and
the lower surface is longer in length than the upper surface.

9. The peripheral device according to any one of claims 1 to 8, comprising:
a support portion comprising the contact portion at one surface; and
a wall that projects from a surface of the support portion opposite to the one surface to cover at least a part of an outer peripheral surface of the projection.

10. The peripheral device according to any one of claims 1 to 9, wherein
an outer peripheral surface of the projection is provided with a first engagement hole located at one longitudinal end surface of the projection and a second engagement hole located at the other longitudinal end surface of the projection,
the first engagement hole is different in shape from the second engagement hole, and
the attachment portion comprises a tab configured to be engaged with at least one of the first engagement hole and the second engagement hole.

11. The peripheral device according to claim 10, wherein
the attachment portion comprises an immovable first tab configured to be engaged with at least the first engagement hole and a movable second tab configured to be engaged with at least the second engagement hole.

12. The peripheral device according to claim 11, wherein
the first tab is configured to be engaged with the first engagement hole but not to be engaged with the second engagement hole,
the second tab is configured to be engaged with the second engagement hole but not to be engaged with the first engagement hole, and
the peripheral device comprises a strap attachment portion at a side opposite to the second tab with respect to the first tab.

13. The peripheral device according to claim 12, comprising a peripheral device main body portion, wherein
the peripheral device main body portion is provided with
an internal space in which the second tab is movable, and
a second opening that communicates with the internal space, and
the second opening is closed by a mouse skate member that forms at least a part of the contact portion.

14. The peripheral device according to claim 12, wherein
the second tab is movable,
the second tab comprises a tab portion configured to be engaged with the second engagement hole and a second tab end portion located opposite to the tab portion, and
the peripheral device comprises a third opening through which the second tab end portion is exposed.

15. The peripheral device according to any one of claims 1 to 14, wherein
the top surface of the projection is provided with at least one button, and
the attachment portion is configured such that the projection is attached to the attachment portion to expose the at least one button.

16. The peripheral device according to claim 15, wherein
the at least one button comprises a first button and a second button aligned in a longitudinal direction of the projection, and
the peripheral device is provided with a notch at a position in a front-rear direction of each of the first button and the second button while the input device is attached to the peripheral device.

17. The peripheral device according to any one of claims 1 to 16, wherein
the contact portion comprises a portion configured to come in contact with the tracking surface at the outer side of the side surface in the plane direction.

18. The peripheral device according to any one of claims 1 to 17, wherein
the contact portion of the peripheral device has an area larger than an area of a portion of contact of the top surface of the projection with the tracking surface while the input device is not attached to the peripheral device.

19. The peripheral device according to any one of claims 1 to 18, wherein
the mouse operation sensor is configured to output a signal that reflects movement relative to the tracking surface when a distance between the mouse operation sensor and the tracking surface is within a range from a first distance to a second distance longer than the first distance, and
the mouse operation sensor is located at the input device such that a first separation distance between the mouse operation sensor and the tracking surface while the input device is placed such that the first opening is opposed to the tracking surface is intermediate between a median value between the first distance and the second distance and the first distance, and
the mouse operation sensor is configured such that a second separation distance between the mouse operation sensor and the tracking surface while the input device is attached to the peripheral device is equal to or shorter than the second distance.

20. The peripheral device according to any one of claims 1 to 19, wherein
the top surface of the projection is provided with an input device mouse skate member, and
while the input device is attached to the peripheral device, an end of the contact portion is located at the outer side of an end of the input device mouse skate member in a longitudinal direction of the top surface of the projection.

21. The peripheral device according to claim 20, wherein
in a direction of a short side of the top surface of the projection, the end of the contact portion is located at the outer side of the end of the input device mouse skate member.

22. The peripheral device according to claim 20 or 21, wherein
while the input device is attached to the peripheral device, the input device mouse skate member does not come in contact with the tracking surface.

23. A system comprising:
the peripheral device according to any one of claims 1 to 22; and
the input device configured to be attached to the peripheral device with the attachment portion.
